# EUROPEAN PATENT APPLICATION

(11) **EP 2 966 607 A1**
(43) Date of publication of application: **13.01.2016**
(21) Application number: 14883539.0
(22) Date of filing: 23.12.2014
(51) Int. Cl.: G06Q 20/10

(54) **RECHARGE METHOD, RECHARGE TERMINAL AND RECHARGE SERVER**

(30) Priority: 01.04.2014 CN 201410128948
(71) Applicant: Huawei Technologies Co. Ltd., Shenzhen, Guangdong 518129 (CN)
(72) Inventor: SI, Yinghao, Shenzhen Guangdong 518129 (CN)
(74) Representative: Isarpatent
(86) International application number: PCT/CN2014/094628
(87) International publication number: WO 2015/149549

(57) **Abstract**

Embodiments of the present invention disclose a recharge method, a recharge terminal, and a recharge server that can provide guidance on a recharge behavior of a user. A recharge method provided by an embodiment of the present invention includes acquiring, by a recharge terminal according to a user identity ID corresponding to the user, historical consumption information of the user ID: when detecting that a user needs to perform recharging; acquiring, by the recharge terminal according to the historical consumption information of the user ID, a recommended recharge amount to be recommended to the user; and recommending, by the recharge terminal, the acquired recommended recharge amount to the user, so that the user determines a recharge amount according to the recommended recharge amount.

## Description

### CROSS-REFERENCE TO RELATED APPLICATIONS

This application claims priority to Chinese Patent Application No. 201410128948.5, filed with the Chinese Patent Office on April 1, 2014 and entitled "RECHARGE METHOD, RECHARGE TERMINAL, AND RECHARGE SERVER", which is incorporated herein by reference in its entirety.

### TECHNICAL FIELD

The present invention relates to the field of computer technologies, and in particular, to a recharge method, a recharge terminal, and a recharge server.

### BACKGROUND

With continuous development of the Internet, Internet applications nowadays provide users with more commodities that can be purchased by the users. Generally, these commodities may be virtual recharge products, for example, call fee recharge cards, game cards and items of online games, and charged on-demand services.

To purchase a commodity during use of an Internet application, a user needs to recharge an account corresponding to the user. A conventional recharge method is mainly that the user selects a recharge amount or the user manually enters a recharge amount on a recharge interface provided by a recharge platform for recharging. In the conventional recharge method, the recharge amount determined by the user can only be passively received, and the recharge interface displays only the amount entered by the user. The recharge platform cannot provide guidance on a recharge behavior of the user.

### SUMMARY

Embodiments of the present invention provide a recharge method, a recharge terminal, and a recharge server, which can provide guidance on a recharge behavior of a user.

To solve the foregoing technical problem, the embodiments of the present invention provide the following technical solutions:

According to a first aspect, an embodiment of the present invention provides a recharge method, including:
when detecting that a user needs to perform recharging, acquiring, by a recharge terminal according to a user identity ID corresponding to the user, historical consumption information of the user ID;
acquiring, by the recharge terminal according to the historical consumption information of the user ID, a recommended recharge amount to be recommended to the user; and
recommending, by the recharge terminal, the acquired recommended recharge amount to the user, so that the user determines a recharge amount according to the recommended recharge amount.

With reference to the first aspect, in a first possible implementation manner of the first aspect, the historical consumption information includes a consumption amount in a historical time range before the user performs recharging; and
the acquiring, by the recharge terminal according to the historical consumption information of the user ID, a recommended recharge amount to be recommended to the user, includes:
calculating, by the recharge terminal, a statistical consumption amount of the user in the historical time range according to the consumption amount of the user in the historical time range, where the statistical consumption amount is the recommended recharge amount to be recommended to the user.

With reference to the first possible implementation manner of the first aspect, in a second possible implementation manner of the first aspect, the calculating, by the recharge terminal, a statistical consumption amount of the user in the historical time range according to the consumption amount of the user in the historical time range, includes:
dividing, by the recharge terminal, the historical time range into multiple time periods, separately counting a total consumption amount of the user in each time period, and performing averaging calculation on the total consumption amounts in all the time periods to obtain an average consumption amount that is used as the statistical consumption amount; or
selecting, by the recharge terminal, a largest total amount from total consumption amounts in time periods to obtain a largest consumption amount that is used as the statistical consumption amount.

With reference to the second possible implementation manner of the first aspect, in a third possible implementation manner of the first aspect, after the acquiring, by the recharge terminal according to the historical consumption information of the user ID, a recommended recharge amount to be recommended to the user, the method further includes:
acquiring, by the recharge terminal, a gradual consumption change adjustment factor according to the total consumption amount in each time period, where the gradual consumption change adjustment factor is an amount increase or decrease trend of the total consumption amounts in all the time periods; and
performing, by the recharge terminal, an amount increase or decrease adjustment on the acquired recommended recharge amount according to the gradual consumption change adjustment factor to obtain an adjusted recommended recharge amount; and
the recommending, by the recharge terminal, the acquired recommended recharge amount to the user, includes:
   recommending, by the recharge terminal, the adjusted recommended recharge amount to the user.

With reference to the first aspect or the first or second possible implementation manner of the first aspect, in a fourth possible implementation manner of the first aspect, after the acquiring, by the recharge terminal according to the historical consumption information of the user ID, a recommended recharge amount to be recommended to the user, the method further includes:
determining, by the recharge terminal, whether a time when the user performs recharging meets a preset time attribute; and
if the time when the user performs recharging meets the preset time attribute, performing, by the recharge terminal, an amount increase or decrease adjustment on the acquired recommended recharge amount according to a time attribute adjustment factor corresponding to the time attribute to obtain an adjusted recommended recharge amount; and
the recommending, by the recharge terminal, the acquired recommended recharge amount to the user, includes:
   recommending, by the recharge terminal, the adjusted recommended recharge amount to the user.

With reference to the fourth possible implementation manner of the first aspect, in a fifth possible implementation manner of the first aspect, the performing, by the recharge terminal, an amount increase or decrease adjustment on the acquired recommended recharge amount according to a time attribute adjustment factor corresponding to the time attribute, includes:
searching, by the recharge terminal, the historical time range for a historical time that meets the time attribute;
acquiring, by the recharge terminal, the time attribute adjustment factor according to a proportional relationship between a consumption amount of the user at the historical time and consumption amounts of the user at times except the historical time in the historical time range; and
multiplying, by the recharge terminal, the acquired recommended recharge amount by the acquired time attribute adjustment factor.

With reference to the first aspect or the first or second possible implementation manner of the first aspect, in a sixth possible implementation manner of the first aspect, the historical consumption information further includes consumption details of the user in the historical time range; after the acquiring, by the recharge terminal according to the historical consumption information of the user ID, a recommended recharge amount to be recommended to the user, the method further includes:
acquiring, by the recharge terminal according to the consumption details, all products consumed by the user in the historical time range;
acquiring, by the recharge terminal, whether there is a product update on the products consumed by the user; and
if there is a product update, performing, by the recharge terminal, an amount increase or decrease adjustment on the acquired recommended recharge amount according to an amount corresponding to an updated product to obtain an adjusted recommended recharge amount; and
the recommending, by the recharge terminal, the acquired recommended recharge amount to the user, includes:
   recommending, by the recharge terminal, the adjusted recommended recharge amount to the user.

With reference to the first aspect or the first or second possible implementation manner of the first aspect, in a seventh possible implementation manner of the first aspect, after the acquiring, by the recharge terminal according to the historical consumption information of the user ID, a recommended recharge amount to be recommended to the user, the method further includes:
performing, by the recharge terminal, an amount increase or decrease adjustment on the acquired recommended recharge amount according to a recharge-free duration factor to obtain an adjusted recommended recharge amount; and
the recommending, by the recharge terminal, the acquired recommended recharge amount to the user, includes:
   recommending, by the recharge terminal, the adjusted recommended recharge amount to the user.

With reference to the seventh possible implementation manner of the first aspect, in an eighth possible implementation manner of the first aspect, before the performing, by the recharge terminal, an amount increase or decrease adjustment on the acquired recommended recharge amount according to a recharge-free duration, the method further includes:
acquiring, by the recharge terminal, a recharge-free duration entered by the user; and
generating, by the recharge terminal, the recharge-free duration factor according to the recharge-free duration.

With reference to the first aspect or the first or second possible implementation manner of the first aspect, in a ninth possible implementation manner of the first aspect, after the acquiring, by the recharge terminal according to the historical consumption information of the user ID, a recommended recharge amount to be recommended to the user, the method further includes:
acquiring, by the recharge terminal from a recharge server, preference push information corresponding to the user ID; and
performing, by the recharge terminal, an amount increase or decrease adjustment on the acquired recommended recharge amount according to the preference push information to obtain an adjusted recommended recharge amount; and
the recommending, by the recharge terminal, the acquired recommended recharge amount to the user, includes:
recommending, by the recharge terminal, the adjusted recommended recharge amount to the user.

With reference to the first aspect or the first, second, third, fourth, fifth, sixth, seventh, eighth, or ninth possible implementation manner of the first aspect, in a tenth possible implementation manner of the first aspect, the acquiring, by a recharge terminal according to a user identity ID corresponding to the user, historical consumption information of the user ID, includes:
sending, by the recharge terminal, consumption query request information to the recharge server, where the consumption query request information includes the user ID corresponding to the user; and
receiving, by the recharge terminal, the historical consumption information that is returned by the recharge server and of the user ID.

According to a second aspect, an embodiment of the present invention further provides a recharge method, including:
when detecting that a user needs to perform recharging, sending, by a recharge terminal, recharge recommendation request information to a recharge server, where the recharge recommendation request information includes a user identity ID of the user;
receiving, by the recharge terminal, a recommended recharge amount that is acquired by the recharge server according to the user ID; and
recommending, by the recharge terminal, the received recommended recharge amount to the user, so that the user determines a recharge amount according to the recommended recharge amount.

With reference to the second aspect, in a first possible implementation manner of the second aspect, after the receiving, by the recharge terminal, a recommended recharge amount that is acquired by the recharge server according to the user ID, the method further includes:
receiving, by the recharge terminal, historical consumption information that is sent by the recharge server and corresponding to the user ID, where the historical consumption information includes a consumption amount in a historical time range before the user performs recharging;
dividing, by the recharge terminal, the historical time range into multiple time periods;
acquiring, by the recharge terminal, a gradual consumption change adjustment factor according to a total consumption amount in each time period, where the gradual consumption change adjustment factor is an amount increase or decrease trend of the total consumption amounts in all the time periods; and
performing, by the recharge terminal, an amount increase or decrease adjustment on the acquired recommended recharge amount according to the gradual consumption change adjustment factor to obtain an adjusted recommended recharge amount; and
the recommending, by the recharge terminal, the received recommended recharge amount to the user, includes:
   recommending, by the recharge terminal, the adjusted recommended recharge amount to the user.

With reference to the second aspect, in a second possible implementation manner of the second aspect, after the receiving, by the recharge terminal, a recommended recharge amount that is acquired by the recharge server according to the user ID, the method further includes:
determining, by the recharge terminal, whether a time when the user performs recharging meets a preset time attribute; and
if the time when the user performs recharging meets the preset time attribute, performing, by the recharge terminal, an amount increase or decrease adjustment on the acquired recommended recharge amount according to a time attribute adjustment factor corresponding to the time attribute to obtain an adjusted recommended recharge amount; and
the recommending, by the recharge terminal, the received recommended recharge amount to the user, includes:
   recommending, by the recharge terminal, the adjusted recommended recharge amount to the user.

With reference to the second possible implementation manner of the second aspect, in a third possible implementation manner of the second aspect, the performing, by the recharge terminal, an amount increase or decrease adjustment on the acquired recommended recharge amount according to a time attribute adjustment factor corresponding to the time attribute, includes:
searching, by the recharge terminal, a historical time range for a historical time that meets the time attribute;
acquiring, by the recharge terminal, the time attribute adjustment factor according to a proportional relationship between a consumption amount of the user at the historical time and consumption amounts of the user at times except the historical time in the historical time range; and
multiplying, by the recharge terminal, the acquired recommended recharge amount by the acquired time attribute adjustment factor.

With reference to the second aspect, in a fourth possible implementation manner of the second aspect, after the receiving, by the recharge terminal, a recommended recharge amount that is acquired by the recharge server according to the user ID, the method further includes:
receiving, by the recharge terminal, historical consumption information that is sent by the recharge server and corresponding to the user ID, where the historical consumption information includes consumption details of the user in a historical time range;
acquiring, by the recharge terminal according to the consumption details, all products consumed by the user in the historical time range;
acquiring, by the recharge terminal, whether there is a product update on the products consumed by the user; and
if there is a product update, performing, by the recharge terminal, an amount increase or decrease adjustment on the acquired recommended recharge amount according to an amount corresponding to an updated product to obtain an adjusted recommended recharge amount; and
the recommending, by the recharge terminal, the received recommended recharge amount to the user, includes:
   recommending, by the recharge terminal, the adjusted recommended recharge amount to the user.

With reference to the second aspect, in a fifth possible implementation manner of the second aspect, after the receiving, by the recharge terminal, a recommended recharge amount that is acquired by the recharge server according to the user ID, the method further includes:
performing, by the recharge terminal, an amount increase or decrease adjustment on the acquired recommended recharge amount according to a recharge-free duration factor to obtain an adjusted recommended recharge amount; and
the recommending, by the recharge terminal, the received recommended recharge amount to the user, includes:
   recommending, by the recharge terminal, the adjusted recommended recharge amount to the user.

With reference to the fifth possible implementation manner of the second aspect, in a sixth possible implementation manner of the second aspect, before the performing, by the recharge terminal, an amount increase or decrease adjustment on the acquired recommended recharge amount according to a recharge-free duration, the method further includes:
acquiring, by the recharge terminal, a recharge-free duration entered by the user; and
generating, by the recharge terminal, the recharge-free duration factor according to the recharge-free duration.

With reference to the second aspect, in a seventh possible implementation manner of the second aspect, after the receiving, by the recharge terminal, a recommended recharge amount that is acquired by the recharge server according to the user ID, the method further includes:
acquiring, by the recharge terminal from the recharge server, preference push information corresponding to the user ID; and
performing, by the recharge terminal, an amount increase or decrease adjustment on the acquired recommended recharge amount according to the preference push information to obtain an adjusted recommended recharge amount; and
the recommending, by the recharge terminal, the received recommended recharge amount to the user, includes:
   recommending, by the recharge terminal, the adjusted recommended recharge amount to the user.

According to a third aspect, an embodiment of the present invention provides a recharge method, including:
receiving, by a recharge server, recharge recommendation request information sent by a recharge terminal, where the recharge recommendation request information includes a user identity ID corresponding to a user who needs to perform recharging and is detected by the recharge terminal;
acquiring, by the recharge server according to historical consumption information of the user ID, a recommended recharge amount to be recommended to the user; and
sending, by the recharge server, the recommended recharge amount to the recharge terminal.

With reference to the third aspect, in a first possible implementation manner of the third aspect, the historical consumption information includes a consumption amount in a historical time range before the user performs recharging; and
the acquiring, by the recharge server according to historical consumption information of the user ID, a recommended recharge amount to be recommended to the user, includes:
calculating, by the recharge server, a statistical consumption amount of the user in the historical time range according to the consumption amount of the user in the historical time range, where the statistical consumption amount is the recommended recharge amount to be recommended to the user.

With reference to the first possible implementation manner of the third aspect, in a second possible implementation manner of the third aspect, the calculating, by the recharge server, a statistical consumption amount of the user in the historical time range according to the consumption amount of the user in the historical time range, includes:
dividing, by the recharge server, the historical time range into multiple time periods, separately counting a total consumption amount of the user in each time period, and performing averaging calculation on the total consumption amounts in all the time periods to obtain an average consumption amount that is used as the statistical consumption amount; or
selecting, by the recharge server, a largest total amount from total consumption amounts in time periods to obtain a largest consumption amount that is used as the statistical consumption amount.

With reference to the second possible implementation manner of the third aspect, in a third possible implementation manner of the third aspect, after the acquiring, by the recharge server according to historical consumption information of the user ID, a recommended recharge amount to be recommended to the user, the method further includes:
acquiring, by the recharge server, a gradual consumption change adjustment factor according to the total consumption amount in each time period, where the gradual consumption change adjustment factor is an amount increase or decrease trend of the total consumption amounts in all the time periods; and
performing, by the recharge server, an amount increase or decrease adjustment on the acquired recommended recharge amount according to the gradual consumption change adjustment factor to obtain an adjusted recommended recharge amount; and
the sending, by the recharge server, the recommended recharge amount to the recharge terminal, includes:
   sending, by the recharge server, the adjusted recommended recharge amount to the recharge terminal.

With reference to the third aspect, in a fourth possible implementation manner of the third aspect, after the acquiring, by the recharge server according to historical consumption information of the user ID, a recommended recharge amount to be recommended to the user, the method further includes:
determining, by the recharge server, whether a time when the user performs recharging meets a preset time attribute; and
if the time when the user performs recharging meets the preset time attribute, performing, by the recharge server, an amount increase or decrease adjustment on the acquired recommended recharge amount according to a time attribute adjustment factor corresponding to the time attribute to obtain an adjusted recommended recharge amount; and
the sending, by the recharge server, the recommended recharge amount to the recharge terminal, includes:
   sending, by the recharge server, the adjusted recommended recharge amount to the recharge terminal.

With reference to the fourth possible implementation manner of the third aspect, in a fifth possible implementation manner of the third aspect, the performing, by the recharge server, an amount increase or decrease adjustment on the acquired recommended recharge amount according to a time attribute adjustment factor corresponding to the time attribute, includes:
searching, by the recharge server, a historical time range for a historical time that meets the time attribute;
acquiring, by the recharge server, the time attribute adjustment factor according to a proportional relationship between a consumption amount of the user at the historical time and consumption amounts of the user at times except the historical time in the historical time range; and
multiplying, by the recharge server, the acquired recommended recharge amount by the acquired time attribute adjustment factor.

With reference to the third aspect, in a sixth possible implementation manner of the third aspect, the historical consumption information further includes consumption details of the user in a historical time range; after the acquiring, by the recharge server according to historical consumption information of the user ID, a recommended recharge amount to be recommended to the user, the method further includes:
acquiring, by the recharge server according to the consumption details, all products consumed by the user in the historical time range;
acquiring, by the recharge server, whether there is a product update on the products consumed by the user; and
if there is a product update, performing, by the recharge server, an amount increase or decrease adjustment on the acquired recommended recharge amount according to an amount corresponding to an updated product to obtain an adjusted recommended recharge amount; and
the sending, by the recharge server, the recommended recharge amount to the recharge terminal, includes:
   sending, by the recharge server, the adjusted recommended recharge amount to the recharge terminal.

With reference to the third aspect, in a seventh possible implementation manner of the third aspect, after the acquiring, by the recharge server according to historical consumption information of the user ID, a recommended recharge amount to be recommended to the user, the method further includes:
performing, by the recharge server, an amount increase or decrease adjustment on the acquired recommended recharge amount according to a recharge-free duration factor to obtain an adjusted recommended recharge amount; and
the sending, by the recharge server, the recommended recharge amount to the recharge terminal, includes:
   sending, by the recharge server, the adjusted recommended recharge amount to the recharge terminal.

With reference to the seventh possible implementation manner of the third aspect, in an eighth possible implementation manner of the third aspect, before the performing, by the recharge server, an amount increase or decrease adjustment on the acquired recommended recharge amount according to a recharge-free duration, the method further includes:
receiving, by the recharge server, a recharge-free duration that is entered by the user and acquired by the recharge terminal; and
generating, by the recharge server, the recharge-free duration factor according to the recharge-free duration.

With reference to the third aspect, in a ninth possible implementation manner of the third aspect, after the acquiring, by the recharge server according to historical consumption information of the user ID, a recommended recharge amount to be recommended to the user, the method further includes:
acquiring, by the recharge server, preference push information corresponding to the user ID; and
performing, by the recharge server, an amount increase or decrease adjustment on the acquired recommended recharge amount according to the preference push information to obtain an adjusted recommended recharge amount; and
the sending, by the recharge server, the recommended recharge amount to the recharge terminal, includes:
   sending, by the recharge server, the adjusted recommended recharge amount to the recharge terminal.

According to a fourth aspect, an embodiment of the present invention provides a recharge terminal, including:
a historical consumption acquiring module, configured to: when it is detected that a user needs to perform recharging, acquire, by the recharge terminal according to a user identity ID corresponding to the user, historical consumption information of the user ID;
a recommended amount acquiring module, configured to acquire, according to the historical consumption information of the user ID, a recommended recharge amount to be recommended to the user; and
a recommended amount sending module, configured to recommend the acquired recommended recharge amount to the user, so that the user determines a recharge amount according to the recommended recharge amount.

With reference to the fourth aspect, in a first possible implementation manner of the fourth aspect, the historical consumption information includes a consumption amount in a historical time range before the user performs recharging; and
the recommended amount acquiring module includes a statistical amount acquiring submodule, configured to calculate a statistical consumption amount of the user in the historical time range according to the consumption amount of the user in the historical time range, where the statistical consumption amount is the recommended recharge amount to be recommended to the user.

With reference to the first possible implementation manner of the fourth aspect, in a second possible implementation manner of the fourth aspect, the statistical amount acquiring submodule is specifically configured to: divide the historical time range into multiple time periods, separately count a total consumption amount of the user in each time period, and perform averaging calculation on the total consumption amounts in all the time periods to obtain an average consumption amount that is used as the statistical consumption amount; or select a largest total amount from total consumption amounts in time periods to obtain a largest consumption amount that is used as the statistical consumption amount.

With reference to the second possible implementation manner of the fourth aspect, in a third possible implementation manner of the fourth aspect, the recharge terminal further includes a gradual consumption change adjustment factor acquiring module and a first recommended amount adjusting module, where:
the gradual consumption change adjustment factor acquiring module is configured to acquire a gradual consumption change adjustment factor according to the total consumption amount in each time period after the recommended amount acquiring module acquires, according to the historical consumption information of the user ID, the recommended recharge amount to be recommended to the user, where the gradual consumption change adjustment factor is an amount increase or decrease trend of the total consumption amounts in all the time periods;
the first recommended amount adjusting module is configured to perform an amount increase or decrease adjustment on the acquired recommended recharge amount according to the gradual consumption change adjustment factor to obtain an adjusted recommended recharge amount; and
the recommended amount sending module is specifically configured to recommend the adjusted recommended recharge amount to the user.

With reference to the fourth aspect or the first or second possible implementation manner of the fourth aspect, in a fourth possible implementation manner of the fourth aspect, the recharge terminal further includes a time attribute determining module and a second recommended amount adjusting module, where:
the time attribute determining module is configured to: after the recommended amount acquiring module acquires, according to the historical consumption information of the user ID, the recommended recharge amount to be recommended to the user, determine whether a time when the user performs recharging meets a preset time attribute;
the second recommended amount adjusting module is configured to: when the time when the user performs recharging meets the preset time attribute, perform an amount increase or decrease adjustment on the acquired recommended recharge amount according to a time attribute adjustment factor corresponding to the time attribute to obtain an adjusted recommended recharge amount; and
the recommended amount sending module is specifically configured to recommend the adjusted recommended recharge amount to the user.

With reference to the fourth possible implementation manner of the fourth aspect, in a fifth possible implementation manner of the fourth aspect, the second recommended amount adjusting module includes:
a historical time searching submodule, configured to search the historical time range for a historical time that meets the time attribute;
a time attribute adjustment factor acquiring submodule, configured to acquire the time attribute adjustment factor according to a proportional relationship between a consumption amount of the user at the historical time and consumption amounts of the user at times except the historical time in the historical time range; and
a time attribute adjusting submodule, configured to multiply the acquired recommended recharge amount by the acquired time attribute adjustment factor.

With reference to the fourth aspect or the first or second possible implementation manner of the fourth aspect, in a sixth possible implementation manner of the fourth aspect, the historical consumption information further includes consumption details of the user in the historical time range; and
the recharge terminal further includes a consumed product acquiring module, a product update determining module, and a third recommended amount adjusting module, where:
the consumed product acquiring module is configured to: after the recommended amount acquiring module acquires, according to the historical consumption information of the user ID, the recommended recharge amount to be recommended to the user, acquire, according to the consumption details all products consumed by the user in the historical time range;
the product update determining module is configured to acquire whether there is a product update on the products consumed by the user;
the third recommended amount adjusting module is configured to: when there is a product update, perform an amount increase or decrease adjustment on the acquired recommended recharge amount according to an amount corresponding to an updated product to obtain an adjusted recommended recharge amount; and
the recommended amount sending module is specifically configured to recommend the adjusted recommended recharge amount to the user.

With reference to the fourth aspect or the first or second possible implementation manner of the fourth aspect, in a seventh possible implementation manner of the fourth aspect, the recharge terminal further includes a fourth recommended amount adjusting module, where:
the fourth recommended amount adjusting module is configured to: after the recommended amount acquiring module acquires, according to the historical consumption information of the user ID, the recommended recharge amount to be recommended to the user, perform an amount increase or decrease adjustment on the acquired recommended recharge amount according to a recharge-free duration factor to obtain an adjusted recommended recharge amount; and
the recommended amount sending module is specifically configured to recommend the adjusted recommended recharge amount to the user.

With reference to the seventh possible implementation manner of the fourth aspect, in an eighth possible implementation manner of the fourth aspect, the recharge terminal further includes a recharge-free duration acquiring module and a recharge-free duration factor generating module, where:
the recharge-free duration acquiring module is configured to: before the fourth recommended amount adjusting module performs the amount increase or decrease adjustment on the acquired recommended recharge amount according to the recharge-free duration, acquire a recharge-free duration entered by the user; and
the recharge-free duration factor generating module is configured to generate the recharge-free duration factor according to the recharge-free duration.

With reference to the fourth aspect or the first or second possible implementation manner of the fourth aspect, in a ninth possible implementation manner of the fourth aspect, the recharge terminal further includes a preference acquiring module and a fifth recommended amount adjusting module, where:
the preference acquiring module is configured to acquire, from a recharge server, preference push information corresponding to the user ID after the recommended amount acquiring module acquires, according to the historical consumption information of the user ID, the recommended recharge amount to be recommended to the user;
the fifth recommended amount adjusting module is configured to perform an amount increase or decrease adjustment on the acquired recommended recharge amount according to the preference push information to obtain an adjusted recommended recharge amount; and
the recommended amount sending module is specifically configured to recommend the adjusted recommended recharge amount to the user.

With reference to the fourth aspect or the first, second, third, fourth, fifth, sixth, seventh, eighth, or ninth possible implementation manner of the fourth aspect, in a tenth possible implementation manner of the fourth aspect, the historical consumption acquiring module includes:
a consumption querying submodule, configured to send consumption query request information to the recharge server, where the consumption query request information includes the user ID corresponding to the user; and
a historical consumption receiving submodule, configured to receive the historical consumption information that is returned by the recharge server and of the user ID.

According to a fifth aspect, an embodiment of the present invention further provides a recharge terminal, including:
a recharge recommendation requesting module, configured to send recharge recommendation request information to a recharge server when it is detected that a user needs to perform recharging, where the recharge recommendation request information includes a user identity ID of the user;
a recommended amount receiving module, configured to receive a recommended recharge amount that is acquired by the recharge server according to the user ID; and
a recommended amount sending module, configured to recommend the received recommended recharge amount to the user, so that the user determines a recharge amount according to the recommended recharge amount.

With reference to the fifth aspect, in a first possible implementation manner of the fifth aspect, the recharge terminal further includes a historical consumption receiving module, a time period dividing module, a gradual consumption change adjustment factor acquiring module, and a first recommended amount adjusting module, where:
the historical consumption receiving module is configured to: after the recommended amount receiving module receives the recommended recharge amount that is acquired by the recharge server according to the user ID, receive historical consumption information that is sent by the recharge server and corresponding to the user ID, where the historical consumption information includes a consumption amount in a historical time range before the user performs recharging;
the time period dividing module is configured to divide the historical time range into multiple time periods;
the gradual consumption change adjustment factor acquiring module is configured to acquire a gradual consumption change adjustment factor according to a total consumption amount in each time period, where the gradual consumption change adjustment factor is an amount increase or decrease trend of the total consumption amounts in all the time periods;
the first recommended amount adjusting module is configured to perform an amount increase or decrease adjustment on the acquired recommended recharge amount according to the gradual consumption change adjustment factor to obtain an adjusted recommended recharge amount; and
the recommended amount sending module is specifically configured to recommend the adjusted recommended recharge amount to the user.

With reference to the fifth aspect, in a second possible implementation manner of the fifth aspect, the recharge terminal further includes a time attribute determining module and a second recommended amount adjusting module, where:
the time attribute determining module is configured to: after the recommended amount receiving module receives the recommended recharge amount that is acquired by the recharge server according to the user ID, determine whether a time when the user performs recharging meets a preset time attribute;
the second recommended amount adjusting module is configured to: when the time when the user performs recharging meets the preset time attribute, perform an amount increase or decrease adjustment on the acquired recommended recharge amount according to a time attribute adjustment factor corresponding to the time attribute to obtain an adjusted recommended recharge amount; and
the recommended amount sending module is specifically configured to recommend the adjusted recommended recharge amount to the user.

With reference to the second possible implementation manner of the fifth aspect, in a third possible implementation manner of the fifth aspect, the second recommended amount adjusting module includes:
a historical time searching submodule, configured to search a historical time range for a historical time that meets the time attribute;
a time attribute adjustment factor acquiring submodule, configured to acquire the time attribute adjustment factor according to a proportional relationship between a consumption amount of the user at the historical time and consumption amounts of the user at times except the historical time in the historical time range; and
a time attribute adjusting submodule, configured to multiply the acquired recommended recharge amount by the acquired time attribute adjustment factor.

With reference to the fifth aspect, in a fourth possible implementation manner of the fifth aspect, the recharge terminal further includes a historical consumption receiving module, a consumed product acquiring module, a product update determining module, and a third recommended amount adjusting module, where:
the historical consumption receiving module is configured to: after the recommended amount receiving module receives the recommended recharge amount that is acquired by the recharge server according to the user ID, receive historical consumption information that is sent by the recharge server and corresponding to the user ID, where the historical consumption information includes consumption details of the user in a historical time range;
the consumed product acquiring module is configured to acquire, according to the consumption details, all products consumed by the user in the historical time range;
the product update determining module is configured to acquire whether there is a product update on the products consumed by the user;
the third recommended amount adjusting module is configured to: when there is a product update, perform an amount increase or decrease adjustment on the acquired recommended recharge amount according to an amount corresponding to an updated product to obtain an adjusted recommended recharge amount; and
the recommended amount sending module is specifically configured to recommend the adjusted recommended recharge amount to the user.

With reference to the fifth aspect, in a fifth possible implementation manner of the fifth aspect, the recharge terminal further includes a fourth recommended amount adjusting module, where:
the fourth recommended amount adjusting module is configured to: after the recommended amount receiving module receives the recommended recharge amount that is acquired by the recharge server according to the user ID, perform an amount increase or decrease adjustment on the acquired recommended recharge amount according to a recharge-free duration factor to obtain an adjusted recommended recharge amount; and
the recommended amount sending module is specifically configured to recommend the adjusted recommended recharge amount to the user.

With reference to the fifth possible implementation manner of the fifth aspect, in a sixth possible implementation manner of the fifth aspect, the recharge terminal further includes a recharge-free duration acquiring module and a recharge-free duration factor generating module, where:
the recharge-free duration acquiring module is configured to: before the fourth recommended amount adjusting module performs the amount increase or decrease adjustment on the acquired recommended recharge amount according to the recharge-free duration, acquire a recharge-free duration entered by the user; and
the recharge-free duration factor generating module is configured to generate the recharge-free duration factor according to the recharge-free duration.

With reference to the fifth aspect, in a seventh possible implementation manner of the fifth aspect, the recharge terminal further includes a preference acquiring module and a fifth recommended amount adjusting module, where:
the preference acquiring module is configured to acquire, from the recharge server, preference push information corresponding to the user ID after the recommended amount receiving module receives the recommended recharge amount that is acquired by the recharge server according to the user ID;
the fifth recommended amount adjusting module is configured to perform an amount increase or decrease adjustment on the acquired recommended recharge amount according to the preference push information to obtain an adjusted recommended recharge amount; and
the recommended amount sending module is specifically configured to recommend the adjusted recommended recharge amount to the user.

According to a sixth aspect, an embodiment of the present invention provides a recharge server, including:
a recharge recommendation receiving module, configured to receive recharge recommendation request information sent by a recharge terminal, where the recharge recommendation request information includes a user identity ID corresponding to a user who needs to perform recharging and is detected by the recharge terminal;
a recommended amount acquiring module, configured to acquire, according to historical consumption information of the user ID, a recommended recharge amount to be recommended to the user; and
a recommended amount sending module, configured to send the recommended recharge amount to the recharge terminal.

With reference to the sixth aspect, in a first possible implementation manner of the sixth aspect, the historical consumption information includes a consumption amount in a historical time range before the user performs recharging; and
the recommended amount acquiring module includes a statistical amount acquiring submodule, configured to calculate a statistical consumption amount of the user in the historical time range according to the consumption amount of the user in the historical time range, where the statistical consumption amount is the recommended recharge amount to be recommended to the user.

With reference to the first possible implementation manner of the sixth aspect, in a second possible implementation manner of the sixth aspect, the statistical amount acquiring submodule is specifically configured to: divide the historical time range into multiple time periods, separately count a total consumption amount of the user in each time period, and perform averaging calculation on the total consumption amounts in all the time periods to obtain an average consumption amount that is used as the statistical consumption amount; or select a largest total amount from total consumption amounts in time periods to obtain a largest consumption amount that is used as the statistical consumption amount.

With reference to the second possible implementation manner of the sixth aspect, in a third possible implementation manner of the sixth aspect, the recharge server further includes a gradual consumption change adjustment factor acquiring module and a first recommended amount adjusting module, where:
the gradual consumption change adjustment factor acquiring module is configured to acquire a gradual consumption change adjustment factor according to the total consumption amount in each time period after the recommended amount acquiring module acquires, according to the historical consumption information of the user ID, the recommended recharge amount to be recommended to the user, where the gradual consumption change adjustment factor is an amount increase or decrease trend of the total consumption amounts in all the time periods;
the first recommended amount adjusting module is configured to perform an amount increase or decrease adjustment on the acquired recommended recharge amount according to the gradual consumption change adjustment factor to obtain an adjusted recommended recharge amount; and
the recommended amount sending module is specifically configured to send the adjusted recommended recharge amount to the recharge terminal.

With reference to the sixth aspect, in a fourth possible implementation manner of the sixth aspect, the recharge server further includes a time attribute determining module and a second recommended amount adjusting module, where:
the time attribute determining module is configured to: after the recommended amount acquiring module acquires, according to the historical consumption information of the user ID, the recommended recharge amount to be recommended to the user, determine whether a time when the user performs recharging meets a preset time attribute;
the second recommended amount adjusting module is configured to: when the time when the user performs recharging meets the preset time attribute, perform an amount increase or decrease adjustment on the acquired recommended recharge amount according to a time attribute adjustment factor corresponding to the time attribute to obtain an adjusted recommended recharge amount; and
the recommended amount sending module is specifically configured to send the adjusted recommended recharge amount to the recharge terminal.

With reference to the fourth possible implementation manner of the sixth aspect, in a fifth possible implementation manner of the sixth aspect, the second recommended amount adjusting module includes:
a historical time searching submodule, configured to search a historical time range for a historical time that meets the time attribute;
a time attribute adjustment factor acquiring submodule, configured to acquire the time attribute adjustment factor according to a proportional relationship between a consumption amount of the user at the historical time and consumption amounts of the user at times except the historical time in the historical time range; and
a time attribute adjusting submodule, configured to multiply the acquired recommended recharge amount by the acquired time attribute adjustment factor.

With reference to the sixth aspect, in a sixth possible implementation manner of the sixth aspect, the historical consumption information further includes consumption details of the user in a historical time range; and
the recharge server further includes a consumed product acquiring module, a product update determining module, and a third recommended amount adjusting module, where:
the consumed product acquiring module is configured to acquire, by the recommended amount acquiring module according to the consumption details, all products consumed by the user in the historical time range;
the product update determining module is configured to acquire whether there is a product update on the products consumed by the user;
the third recommended amount adjusting module is configured to: when there is a product update, perform an amount increase or decrease adjustment on the acquired recommended recharge amount according to an amount corresponding to an updated product to obtain an adjusted recommended recharge amount; and
the recommended amount sending module is specifically configured to send the adjusted recommended recharge amount to the recharge terminal.

With reference to the sixth aspect, in a seventh possible implementation manner of the sixth aspect, the recharge server further includes a fourth recommended amount adjusting module, where:
the fourth recommended amount adjusting module is configured to: after the recommended amount acquiring module acquires, according to the historical consumption information of the user ID, the recommended recharge amount to be recommended to the user, perform an amount increase or decrease adjustment on the acquired recommended recharge amount according to a recharge-free duration factor to obtain an adjusted recommended recharge amount; and
the recommended amount sending module is specifically configured to send the adjusted recommended recharge amount to the recharge terminal.

With reference to the seventh possible implementation manner of the sixth aspect, in an eighth possible implementation manner of the sixth aspect, the recharge server further includes a recharge-free duration acquiring module and a recharge-free duration factor generating module, where:
the recharge-free duration acquiring module is configured to: before the amount increase or decrease adjustment is performed on the acquired recommended recharge amount according to the recharge-free duration, receive a recharge-free duration that is entered by the user and acquired by the recharge terminal; and
the recharge-free duration factor generating module is configured to generate the recharge-free duration factor according to the recharge-free duration.

With reference to the sixth aspect, in a ninth possible implementation manner of the sixth aspect, the recharge server further includes a preference acquiring module and a fifth recommended amount adjusting module, where:
the preference acquiring module is configured to acquire, by the recommended amount acquiring module, preference push information corresponding to the user ID;
the fifth recommended amount adjusting module is configured to perform an amount increase or decrease adjustment on the acquired recommended recharge amount according to the preference push information to obtain an adjusted recommended recharge amount; and
the recommended amount sending module is specifically configured to send the adjusted recommended recharge amount to the recharge terminal.

As may be seen from the foregoing technical solutions, the embodiments of the present invention have the following advantages:

In some embodiments of the present invention, when detecting that a user needs to perform recharging, a recharge terminal acquires, according to a user ID corresponding to the user, historical consumption information of the user ID; and then the recharge terminal acquires, according to the historical consumption information of the user ID, a recommended recharge amount to be recommended to the user, and recommends the acquired recommended recharge amount to the user, so that the user may determine a current recharge amount according to the received recommended recharge amount. In the embodiments of the present invention, the recharge terminal may recommend an amount that should be recharged to the user by using the recommended recharge amount, thereby implementing intelligent recharging.

In other embodiments of the present invention, when detecting that a user needs to perform recharging, a recharge terminal sends recharge recommendation request information to a recharge server; the recharge server acquires, according to the received recharge recommendation request information, a user ID for which recharging is required, and acquires, according to the user ID, historical consumption information of the user ID; the recharge server acquires, according to the historical consumption information of the user ID, a recommended recharge amount to be recommended to the user; the recharge server sends the acquired recommended recharge amount to the recharge terminal; and the recharge terminal recommends the received recommended recharge amount to the user. Therefore, the user may determine a current recharge amount according to the received recommended recharge amount. In the embodiments of the present invention, the recharge terminal may recommend an amount that should be recharged to the user by using the recommended recharge amount, thereby implementing intelligent recharging.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person skilled in the art may still derive other drawings from these accompanying drawings.
FIG. 1 is a schematic block flowchart of a recharge method according to an embodiment of the present invention;
FIG. 2-a is a schematic diagram of a recharge interface when a recharge method provided by an embodiment of the present invention is applied to a recharge platform;

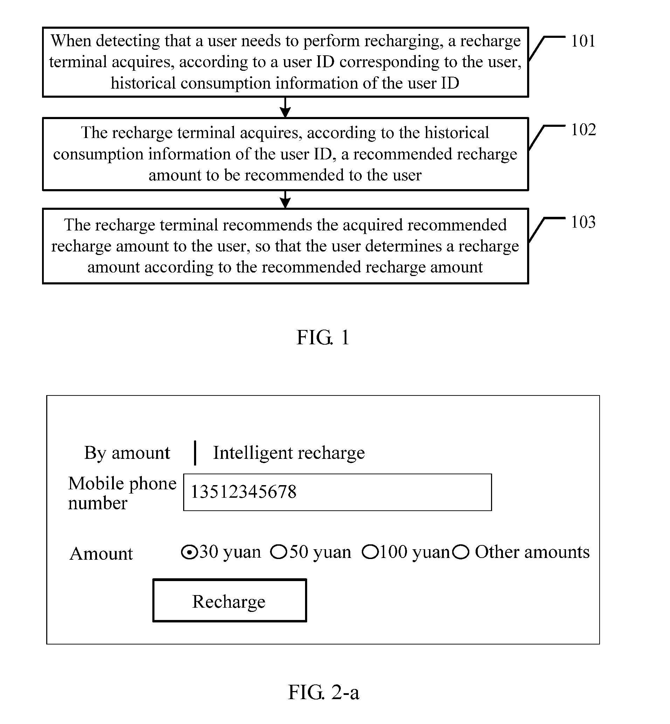

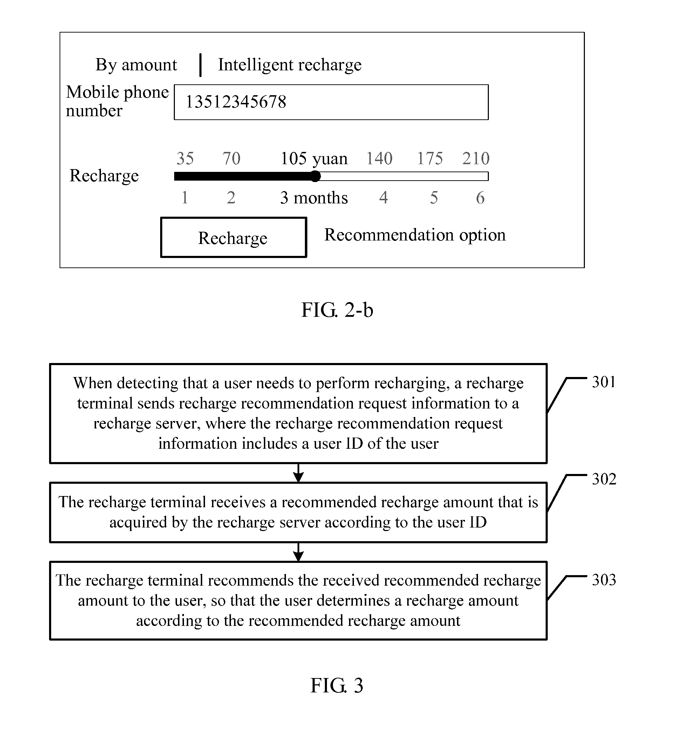

FIG. 2-b is a schematic diagram of a recharge interface when another recharge method provided by an embodiment of the present invention is applied to a recharge platform;
FIG. 3 is a schematic flowchart of another recharge method according to an embodiment of the present invention.

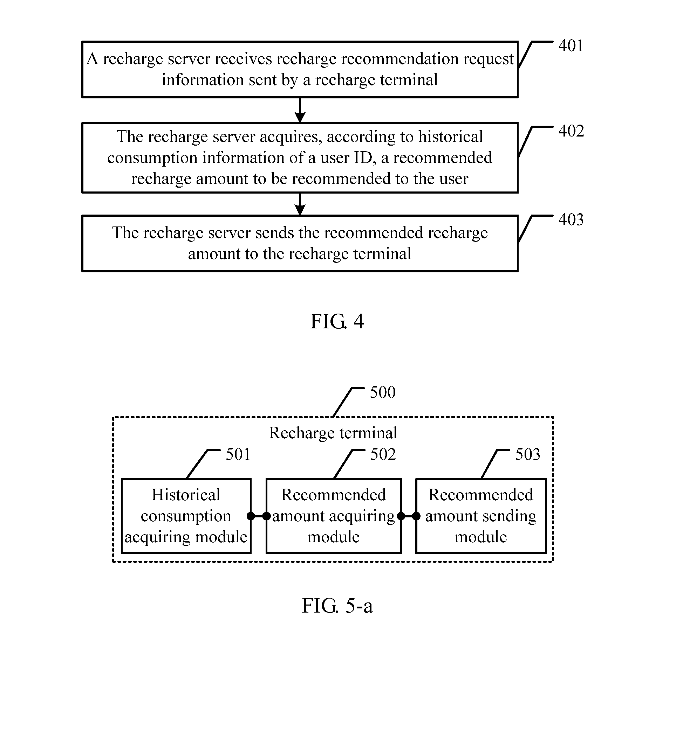

FIG. 4 is a schematic flowchart of another recharge method according to an embodiment of the present invention.

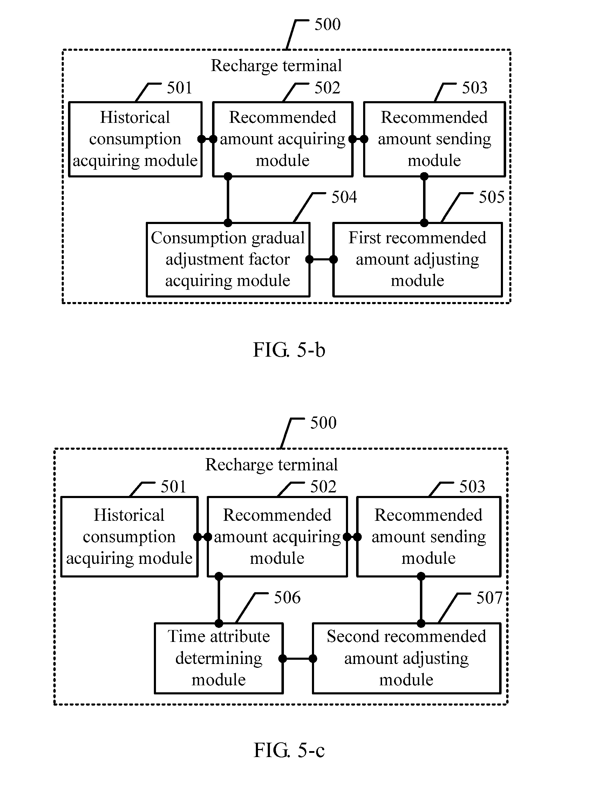

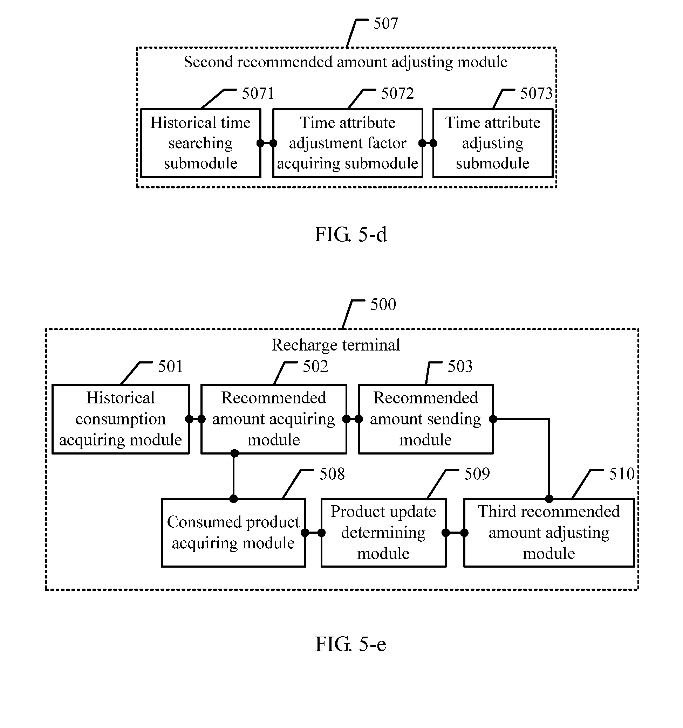

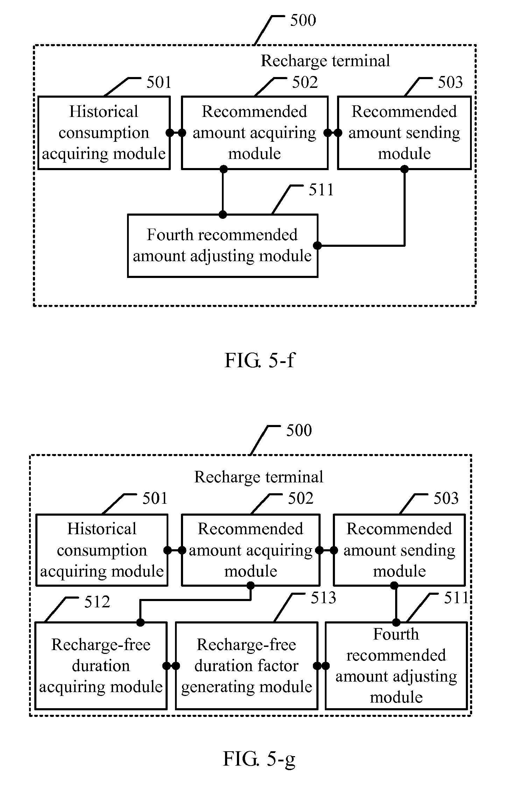

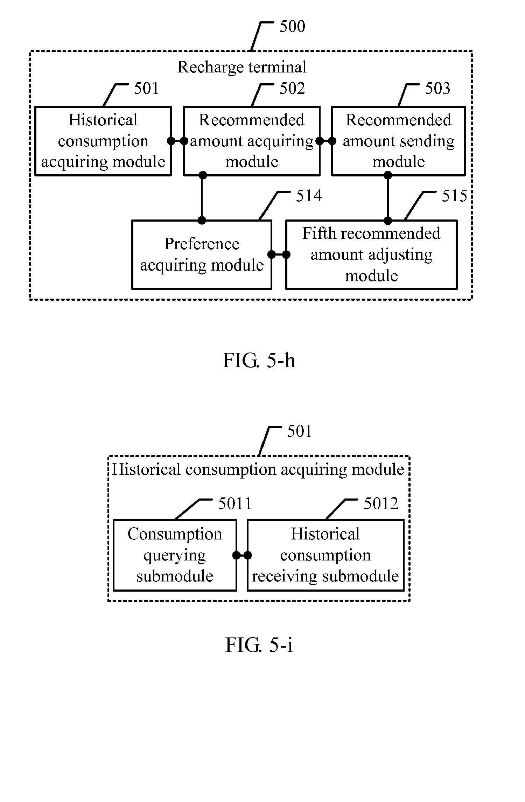

FIG. 5-a is a schematic diagram of a composition structure of a recharge terminal according to an embodiment of the present invention;
FIG. 5-b is a schematic diagram of a composition structure of another recharge terminal according to an embodiment of the present invention;
FIG. 5-c is a schematic diagram of a composition structure of another recharge terminal according to an embodiment of the present invention;
FIG. 5-d is a schematic diagram of a composition structure of a second recommended amount adjusting module according to an embodiment of the present invention;
FIG. 5-e is a schematic diagram of a composition structure of another recharge terminal according to an embodiment of the present invention;
FIG. 5-f is a schematic diagram of a composition structure of another recharge terminal according to an embodiment of the present invention;
FIG. 5-g is a schematic diagram of a composition structure of another recharge terminal according to an embodiment of the present invention;
FIG. 5-h is a schematic diagram of a composition structure of another recharge terminal according to an embodiment of the present invention;
FIG. 5-i is a schematic diagram of a composition structure of a historical consumption acquiring module according to an embodiment of the present invention;

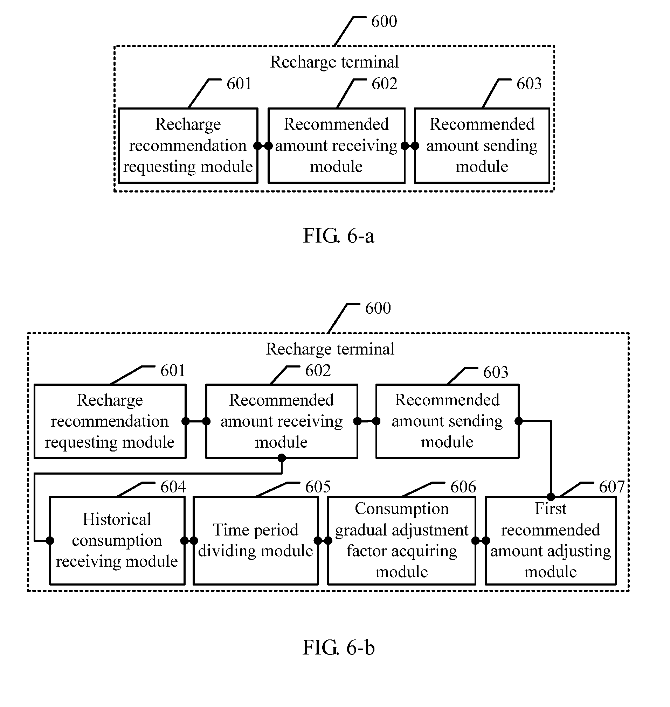

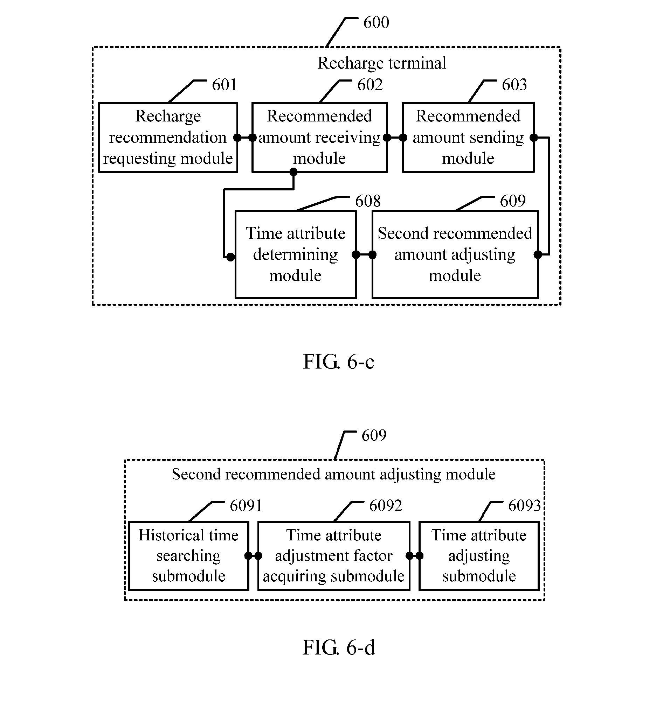

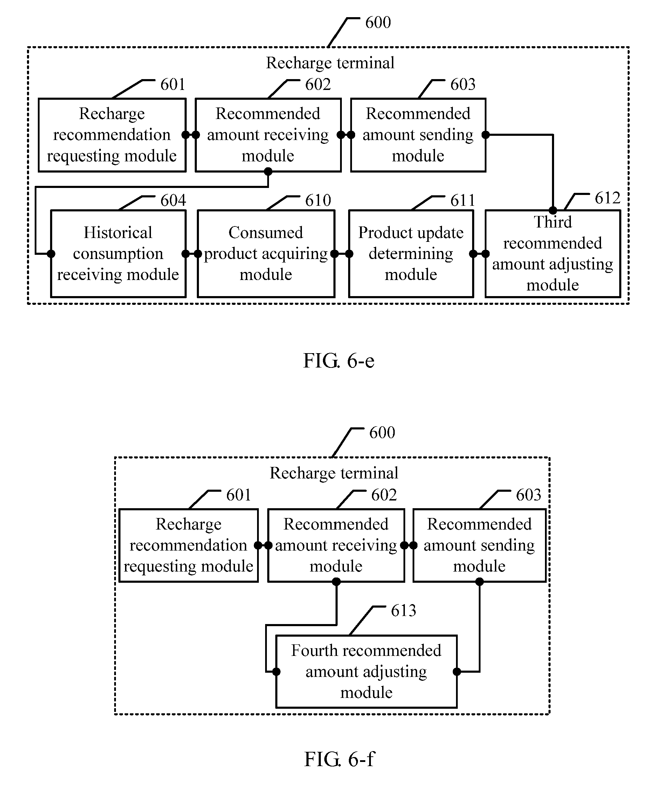

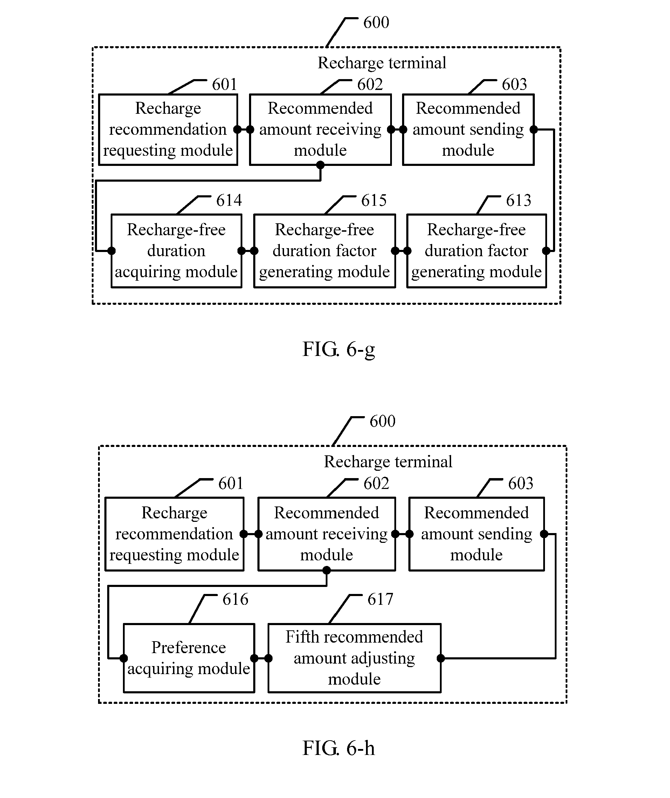

FIG. 6-a is a schematic diagram of a composition structure of a recharge terminal according to an embodiment of the present invention;
FIG. 6-b is a schematic diagram of a composition structure of another recharge terminal according to an embodiment of the present invention;
FIG. 6-c is a schematic diagram of a composition structure of another recharge terminal according to an embodiment of the present invention;
FIG. 6-d is a schematic diagram of a composition structure of another second recommended amount adjusting module according to an embodiment of the present invention;
FIG. 6-e is a schematic diagram of a composition structure of another recharge terminal according to an embodiment of the present invention;
FIG. 6-f is a schematic diagram of a composition structure of another recharge terminal according to an embodiment of the present invention;
FIG. 6-g is a schematic diagram of a composition structure of another recharge terminal according to an embodiment of the present invention;
FIG. 6-h is a schematic diagram of a composition structure of another recharge terminal according to an embodiment of the present invention;

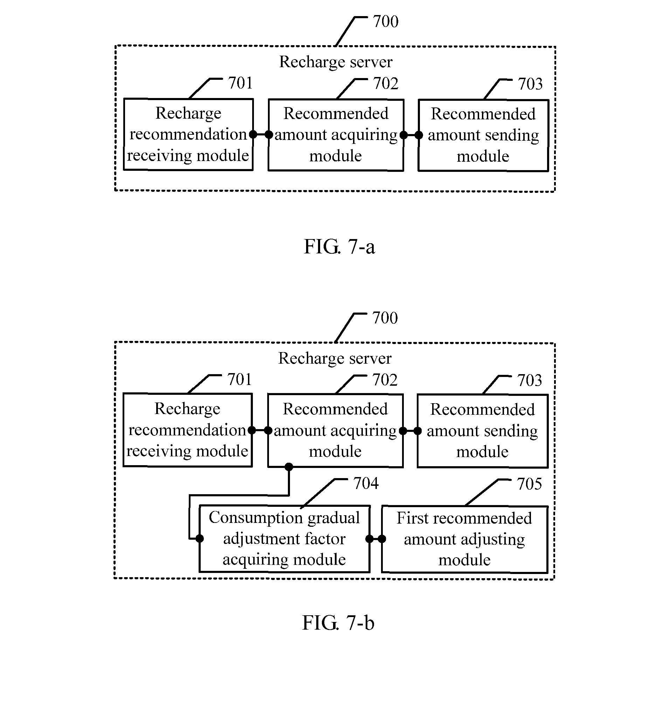

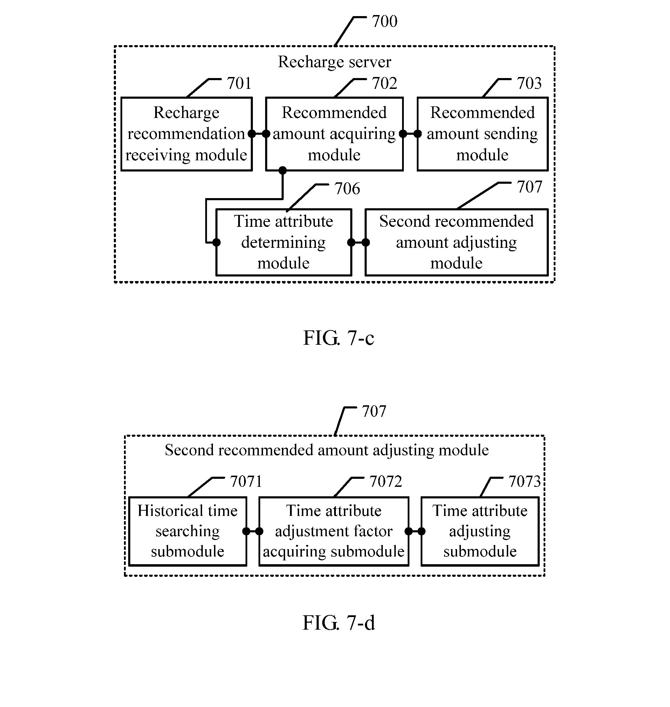

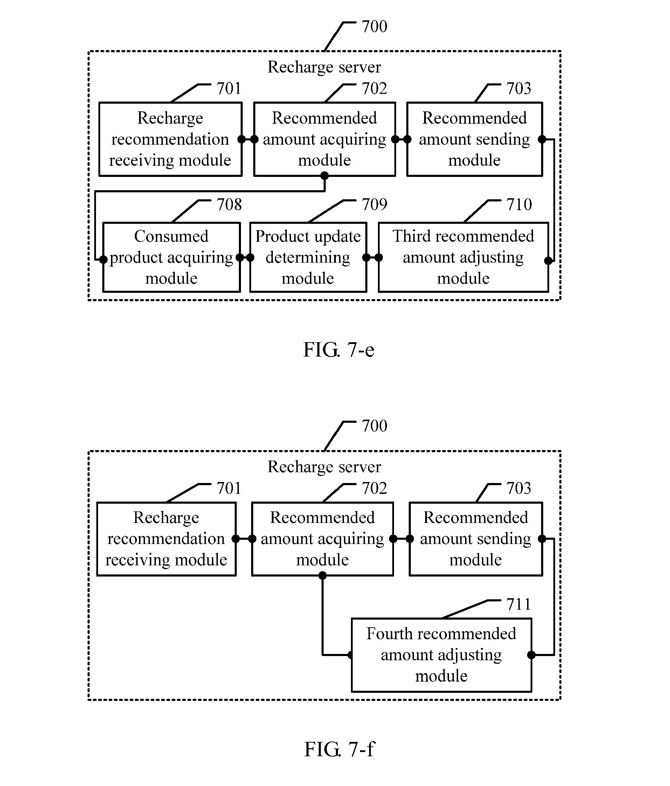

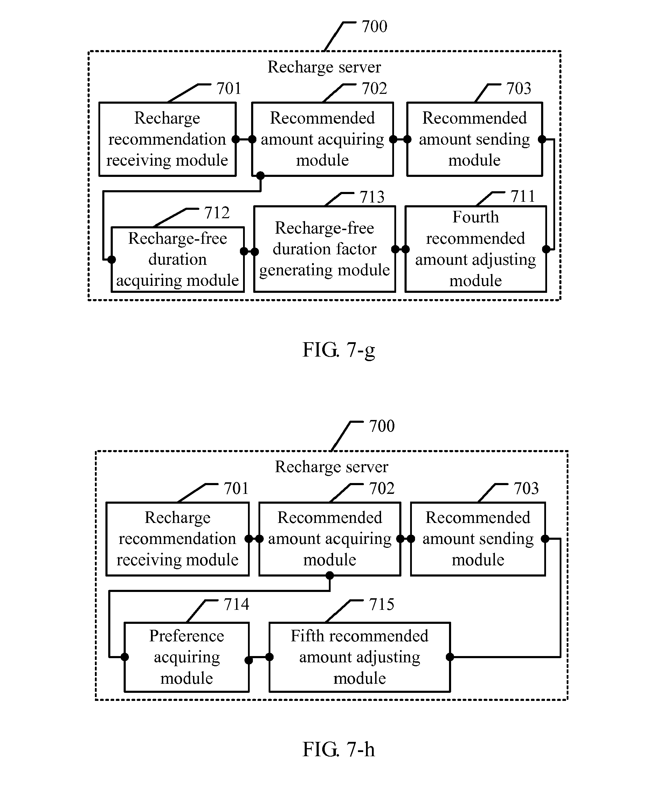

FIG. 7-a is a schematic diagram of a composition structure of a recharge server according to an embodiment of the present invention;
FIG. 7-b is a schematic diagram of a composition structure of another recharge server according to an embodiment of the present invention;
FIG. 7-c is a schematic diagram of a composition structure of another recharge server according to an embodiment of the present invention;
FIG. 7-d is a schematic diagram of a composition structure of another second recommended amount adjusting module according to an embodiment of the present invention;
FIG. 7-e is a schematic diagram of a composition structure of another recharge server according to an embodiment of the present invention;
FIG. 7-f is a schematic diagram of a composition structure of another recharge server according to an embodiment of the present invention;
FIG. 7-g is a schematic diagram of a composition structure of another recharge server according to an embodiment of the present invention;
FIG. 7-h is a schematic diagram of a composition structure of another recharge server according to an embodiment of the present invention;

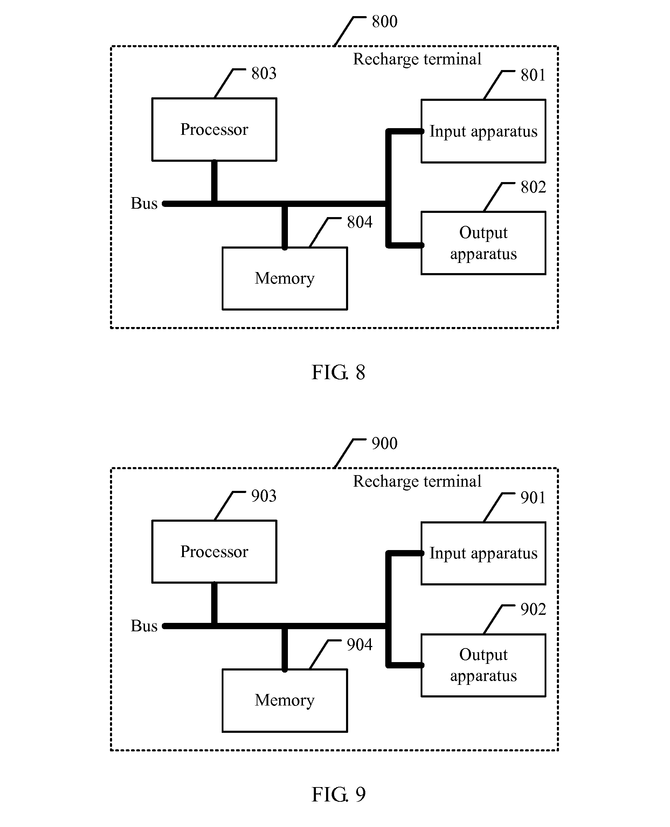

FIG. 8 is a schematic diagram of a composition structure of another recharge terminal according to an embodiment of the present invention;
FIG. 9 is a schematic diagram of a composition structure of another recharge terminal according to an embodiment of the present invention; and

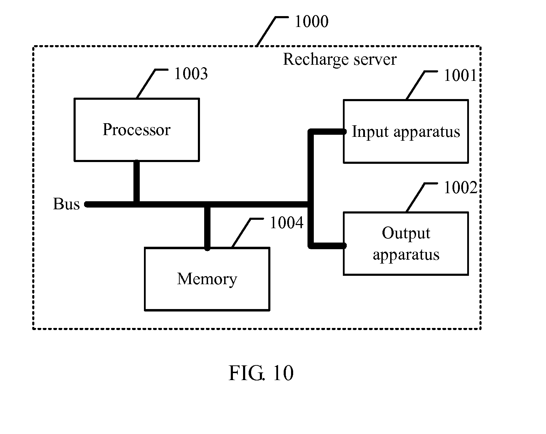

FIG. 10 is a schematic diagram of a composition structure of another recharge server according to an embodiment of the present invention.

### DESCRIPTION OF EMBODIMENTS

Embodiments of the present invention provide a recharge method, a recharge terminal, and a recharge server, which are used to provide guidance on a recharge behavior of a user.

To make the invention objectives, features, and advantages of the present invention clearer and more comprehensible, the following clearly and completely describes the technical solutions in the embodiments of the present invention with reference to the accompanying drawings in the embodiments of the present invention. Apparently, the embodiments described in the following are merely some but not all of the embodiments of the present invention. All other embodiments obtained by a person skilled in the art based on the embodiments of the present invention shall fall within the protection scope of the present invention.

The terms "first", "second", and the like in the specification, claims, and the foregoing drawings of the present invention are intended to distinguish similar objects but do not necessarily indicate specific order or sequence. It should be understood that the terms used in this manner may be interchanged in appropriate circumstances, and it is only a distinguishing manner used for describing objects that have a same attribute in descriptions of the embodiments of the present invention. In addition, the terms "include", "have", and any other variants are intended to cover a non-exclusive inclusion, so that a process, method, system, product, or device that includes a list of units is not necessarily limited to those units, but may include other units that are not expressly listed or inherent to such a process, method, product, or device.

Detailed descriptions are provided separately hereinafter.

The advent of a big data era encourages a prominent growth in a market of data analysis and mining. In the coming few years, a big data market and analysis services thereof will develop at a speed higher than 50% per year. Mining and using potential value of big data will become a core objective of industry development. Core value of big data mining is prediction: predicting future consumption behaviors according to analysis of existing data, and providing decision support for consumers and enterprises. In the embodiments of the present invention, data mining may be applied to recharging. In the embodiments of the present invention, historical consumption information of a user is acquired first, then analysis may be made according to one or more types of information such as historical consumption, use of consumption amounts, and recharge records of the user, and an appropriate prediction is provided to recommend a recharge amount to the user, so as to facilitate recharging of the user, stimulate consumption of the user, and increase profits for a recharge platform. In the embodiments of the present invention, the user may purchase a product after recharging an account, for example, performing call fee recharging for a mobile phone, and the user may repeat the purchase multiple times. For example, in a period of time, the user performs recharging for a mobile phone number of the user multiple times, and the recharge platform records historical consumption information of the user, and uses the historical consumption information to analyze a recharge behavior of the user.

An embodiment of a recharge method according to the present invention may be applied to a recharge terminal. The method may include the following steps: When detecting that a user needs to perform recharging, a recharge terminal acquires, according to a user identity (Identity, ID) corresponding to the user, historical consumption information of the user ID; the recharge terminal acquires, according to the historical consumption information of the user ID, a recommended recharge amount to be recommended to the user; and the recharge terminal sends the acquired recommended recharge amount to the user, so that the user determines a recharge amount according to the recommended recharge amount.

Referring to FIG. 1, a recharge method provided by an embodiment of the present invention may specifically include the following steps:

101. When detecting that a user needs to perform recharging, a recharge terminal acquires, according to a user ID corresponding to the user, historical consumption information of the user ID.

In the embodiment of the present invention, by operating the recharge terminal, the user generally uses the user ID to log in to a recharge platform. After each user logs in to the recharge platform, historical consumption information of each user ID is recorded on a recharge server, and then the recorded historical consumption information may be used to analyze a recharge behavior of the user, where the historical consumption information may include a consumption amount of the user in a historical time range before the user performs recharging. For example, after a user successfully logs in to the recharge platform, the recharge terminal may detect that the user needs to perform recharging, and the recharge terminal acquires, according to a user ID corresponding to the user, historical consumption information recorded in the user ID. The historical consumption information may specifically refer to a recharge record recorded on the recharge server after the user performs recharging on the recharge platform. In the embodiment of the present invention, the recharge terminal generally acquires historical consumption information that is in a historical time range before the user performs recharging and is recorded on the recharge server. In the embodiment of the present invention, the historical consumption information recorded on the recharge server may include multiple records generated when the user performs recharging, for example, a time when the user performs recharging each time, a recharge amount, a transaction sequence number, a third-party payment tool used by the user, and consumption details generated for specific use of consumption amounts by the user. In the embodiment of the present invention, content included in the historical consumption information may refer to one or more types of the foregoing content. For example, after the user logs in to the recharge platform, the recharge server may record a successful login time of the user, and the recharge server uses the successful login time of the user as a time when the user performs recharging. Certainly, in the embodiment of the present invention, the time when the user performs recharging does not need to be a time point expressed in minute or second. Instead, the time when the user performs recharging is used as a selection point for selecting a historical time range. For example, if a time when a user performed recharging is October 5, 2013, a historical time range from October 5, 2012 to October 4, 2013 may be selected, that is, the historical time range that may be selected is 1 year. Certainly, a length of the selected historical time range needs to be determined according to a specific application scenario, and an example is provided herein for description only.

In addition, the historical consumption information in the embodiment of the present invention may further include information content related to different recharge platforms and separately recorded on the recharge server when the user performs recharging on these recharge platforms. For example, when the recharge platform is specifically a recharge platform for water, electricity, and gas management, the historical consumption information may further include consumption amounts corresponding to water (or electricity or gas) usage of the user at different tiers. For example, water usage is classified into three tiers, and a water price is different at each tier; in this case, when there is high water usage, water usage of the user crosses two tiers, and therefore, the historical consumption information may include a consumption amount generated by the user at tier 1, a consumption amount generated by the user at tier 2, a consumption amount generated by the user at tier 3, and the like.

It should be noted that, in some embodiments of the present invention, step 101 in which a recharge terminal acquires, according to a user ID corresponding to the user, historical consumption information of the user ID, may specifically include the following steps:

A1. The recharge terminal sends consumption query request information to a recharge server, where the consumption query request information includes the user ID corresponding to the user.

A2. The recharge terminal receives the historical consumption information that is returned by the recharge server and of the user ID.

The recharge terminal performs detection on users. When detecting that a user needs to perform recharging, the recharge terminal acquires a user ID of the user. The recharge terminal sends consumption query request information to the recharge server according to the user ID, and receives historical consumption information of the user ID by using the recharge server. For the recharge terminal, a communication connection needs to be established between the recharge terminal and the recharge server. The recharge server is interconnected with the recharge platform. Historical consumption information of each user ID may be saved on the recharge server. Based on a consumption query request of the recharge terminal, the recharge server may feed back historical consumption information that is requested by the recharge terminal and of the user ID, to the recharge terminal. Certainly, in other embodiments of the present invention, the recharge terminal may acquire the historical consumption information of the user ID in other manners. For example, the recharge terminal itself may record a recharge behavior of the user, and save consumption information recorded each time to the recharge terminal. In addition, the recharge terminal may further display a prompt interface to the user, prompting the user to enter a consumption amount of the user in a recent historical time range. The recharge terminal may generate historical consumption information by saving information entered by the user on the prompt interface.

102. The recharge terminal acquires, according to the historical consumption information of the user ID, a recommended recharge amount to be recommended to the user.

In the embodiment of the present invention, after the recharge terminal acquires, according to the user ID, the historical consumption information of the user ID, the recharge terminal may analyze the historical consumption information generated by the user on the recharge platform, and preliminarily predict a possible consumption behavior of the user after the selected historical time range. The recharge terminal acquires, according to the historical consumption information of the user ID, the recommended recharge amount to be recommended to the user.

It should be noted that, in the embodiment of the present invention, the recommended recharge amount acquired by the recharge terminal is only an amount recommended to the user when the user performs recharging, and an actual recharge amount of the user is still decided by the user. In the embodiment of the present invention, the recommended recharge amount acquired by the recharge terminal is only a suggestion for the user, which may, as opposed to the prior art in which a recharge amount determined by a user is received passively, provide guidance on a recharge behavior of the user. On a user application layer, the recharge terminal determines, according to the historical consumption information, a recommended recharge amount to be recommended to the user, which may guide the user to rational consumption, provide new recharge experience for the user, and bring more delights to the recharge behavior of the user.

It should be noted that, in the embodiment of the present invention, multiple implementation manners are available for the recharge terminal to acquire the recommended recharge amount according to the historical consumption information. By mining historical consumption data according to the historical consumption information generated by the user on the recharge platform, the recharge terminal may acquire multiple recommended recharge amounts that should be recommended to the user. That is, with respect to multiple types of information content of the historical consumption information and by using different data matching algorithms, the recharge terminal may acquire the recommended recharge amount in multiple implementation manners. The embodiment of the present invention intends to put forward a recommendation of a recommended recharge amount to the user according to the historical consumption information that is generated by the user on the recharge platform and recorded on the recharge server. Which type of information content of the historical consumption information and which data mining method should be used may be decided according to a specific application scenario. Based on a technical inspiration provided by the embodiment of the present invention, a person skilled in the art may further combine technical features recorded in the embodiment of the present invention with specific application scenarios to set other implementation manners, which, however, are still one or multiple specific implementations of the acquiring, by the recharge terminal according to the historical consumption information, a recommended recharge amount to be recommended to the user in the embodiment of the present invention. The following describes the embodiment of the present invention in detail by using an example.

In some embodiments of the present invention, the historical consumption information includes a consumption amount in a historical time range before the user performs recharging. Step 102 in which the recharge terminal acquires, according to the historical consumption information of the user ID, a recommended recharge amount to be recommended to the user, may specifically include the following steps:

B1. The recharge terminal calculates a statistical consumption amount of the user in the historical time range according to the consumption amount of the user in the historical time range, where the statistical consumption amount is the recommended recharge amount to be recommended to the user.

After the recharge terminal acquires the historical consumption information, the recharge terminal may collect statistics on consumption amounts that are of the user in a historical time range and are recorded in the historical consumption information, to obtain a statistical value of the consumption amounts, namely, a statistical consumption amount, and the statistical consumption amount is used as the recommended recharge amount to be recommended to the user. In other words, the statistical consumption amount is used as a statistical value of consumption generated by the user in the historical time range and collected by the recharge terminal, and may reflect consumption behavior preferences of the user. Using the statistical consumption amount obtained by collecting statistics as the recommended recharge amount to be recommended to the user may provide guidance on rational consumption of the user, provide new recharge experience for the user, and bring more delights to the recharge behavior of the user. The statistical consumption amount is a statistical value obtained by the recharge terminal by collecting statistics on historical consumption according to the historical consumption information. There are multiple manners of implementing the statistical consumption amount. The statistical consumption amount can be obtained as long as statistics are collected based on the information content of the historical consumption information, and there may be multiple manners of collecting statistics, for example, performing averaging or performing weighted averaging on the consumption amounts of the user in the historical time range, or using a largest value, a smallest value, or an intermediate value of all the consumption amounts, which may all be used as statistical consumption amounts.

In some embodiments of the present invention, step B1 in which the recharge terminal calculates a statistical consumption amount of the user in the historical time range according to the consumption amount of the user in the historical time range may specifically include the following step:

B11. the recharge terminal divides the historical time range into multiple time periods, separately counts a total consumption amount of the user in each time period, and performs averaging calculation on the total consumption amounts in all the time periods to obtain an average consumption amount that is used as the statistical consumption amount; or

B12. the recharge terminal selects a largest total amount from total consumption amounts in time periods to obtain a largest consumption amount that is used as the statistical consumption amount.

The recharge terminal may select a time range before the user performs current recharging as the historical time range, and the recharge terminal divides the historical time range into multiple time periods, for example, dividing the historical time range into multiple time periods in a unit of month, separately counts a total consumption amount in each month, and performs averaging calculation on the total consumption amounts in the months to obtain an average consumption amount, or selects a largest total amount from the total consumption amounts in the months to obtain a largest consumption amount, or certainly, may select a smallest total amount from the total consumption amounts in the months to obtain a smallest consumption amount. The recharge terminal may use the largest consumption amount or smallest consumption amount as the statistical consumption amount. Generally, to ensure that the recommended recharge amount to be recommended to the user is enough for the user, preferably, the largest consumption amount may be used as the statistical consumption amount.

For example, the recharge terminal may divide a preset historical time range into multiple months according to the month, and separately count a total consumption amount of the user in each month in the historical time range. For example, the selected historical time range may be from July 1, 2013 to October 1, 2013, and in this case, the recharge terminal may separately count total consumption amounts of the user in July, August, and September, which are 120 yuan, 148 yuan, and 189 yuan respectively, and then perform averaging on the total consumption amounts in the three months. In this way, an average consumption amount of the user in the historical time range, namely, 152 yuan may be obtained by calculation. The recharge terminal may use the average consumption amount as the recommended recharge amount to be recommended to the user. In the embodiment described herein, a month is used as a time unit for separately counting the total consumption amount of the user in each month because the month is a data management period commonly used on a current recharge platform. Certainly, according to the foregoing embodiment provided by the present invention, in the embodiment of the present invention, a duration of a half month, two months, or the like may also be used as a calculation period. Obviously, all these technical means of implementation may be selected flexibly by a person skilled in the art according to a specific application scenario. An example is provided herein for description only, and the present invention is not limited thereto.

In addition, the average consumption amount acquired in the embodiment of the present invention is only an amount recommended to the user when the user performs recharging, and an actual recharge amount of the user is still decided by the user. In the embodiment of the present invention, the acquired recommended recharge amount is only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

For another example, the recharge terminal may divide a preset historical time range into multiple months according to the month, and separately count a total consumption amount of the user in each month in the historical time range. For example, the selected historical time range may be from July 1, 2013 to October 1, 2013, and in this case, the recharge terminal may separately count total consumption amounts of the user in July, August, and September, then find a largest monthly consumption amount from the total consumption amounts in the three months, and use the largest consumption amount as the recommended recharge amount to be recommended to the user. In the embodiment described herein, a month is used as a time unit for separately counting the total consumption amount of the user in each month because the month is a data management period commonly used on a current recharge platform. Certainly, according to the foregoing embodiment of the present invention, in the embodiment of the present invention, the recharge platform may also use a duration of a half month, two months, or the like as a calculation period. Obviously, all these technical means of implementation may be selected flexibly by a person skilled in the art according to a specific application scenario. An example is provided herein for description only, and the present invention is not limited thereto.

In addition, the largest consumption amount acquired in the embodiment of the present invention is only an amount recommended to the user when the user performs recharging, and certainly, a smallest consumption amount may also be calculated and suggested to the user. However, generally, to ensure that an account balance of the user can meet a requirement of the user, the acquired largest consumption amount is preferably suggested to the user, but an actual recharge amount of the user is still decided by the user. In the embodiment of the present invention, the acquired recommended recharge amount is only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, step B11 and step B12 are both specific implementation manners of calculating the recommended recharge amount. In an actual application, the recommended recharge amount may be calculated only according to the implementation manner recorded in step B11, or the recommended recharge amount may be calculated only according to the implementation manner recorded in step B12. Certainly, based on the implementation manners provided by the embodiment of the present invention, there may be other methods for calculating the statistical consumption amount. For example, the recommended recharge amount may be calculated with reference to step B11 and step B12 jointly. Specifically, after calculating a sum of the largest consumption amount and the average consumption amount, the recharge terminal may calculate an average value of the largest consumption amount and the average consumption amount, and then use the acquired average value as the statistical consumption amount, where the statistical consumption amount is the recommended recharge amount to be recommended to the user.

103. The recharge terminal recommends the acquired recommended recharge amount to the user, so that the user determines a recharge amount according to the recommended recharge amount.

In the embodiment of the present invention, after the recharge terminal acquires, according to the historical consumption information of the user ID, the recommended recharge amount to be recommended to the user, when the user performs recharging, the recharge terminal sends the recommended recharge amount to the user. Therefore, the user may determine a current recharge amount by referring to the recommended recharge amount. The recommended recharge amount is only an amount recommended to the user when the user performs recharging, and an actual recharge amount of the user is still decided by the user. In the embodiment of the present invention, the acquired recommended recharge amount is only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, after the recharge terminal acquires the recommended recharge amount to be recommended to the user, the recharge terminal may further adjust the recommended recharge amount, so that an adjusted recommended recharge amount can better meet a requirement of the user and improve accuracy of the recommendation to the user. Multiple implementation manners may be used for the recharge terminal to adjust the recommended recharge amount. The following uses an example for description.

In some embodiments of the present invention, as may be known according to the descriptions of step B11 and step B12, the recharge terminal divides the historical time range into multiple time periods, and uses the average consumption amount or largest consumption amount obtained by collecting statistics as the statistical consumption amount, where the statistical consumption amount is the recommended recharge amount acquired by the recharge terminal and to be recommended to the user. Based on the foregoing implementation manner of dividing the historical time range into multiple time periods, in the recharge method provided by the present invention based on a recharge terminal side, after the recharge terminal acquires the recommended recharge amount to be recommended to the user, the method may further include the following steps:

C1. The recharge terminal acquires a gradual consumption change adjustment factor according to the total consumption amount in each time period, where the gradual consumption change adjustment factor is an amount increase or decrease trend of the total consumption amounts in all the time periods.

C2. The recharge terminal performs an amount increase or decrease adjustment on the acquired recommended recharge amount according to the gradual consumption change adjustment factor to obtain an adjusted recommended recharge amount.

Based on the foregoing implementation manner of step C1 and step C2, in the recharge method provided by the embodiment of the present invention, step 103 in which the recharge terminal recommends the acquired recommended recharge amount to the user may include:
recommending, by the recharge terminal, the adjusted recommended recharge amount to the user.

The recharge terminal analyzes the amount increase or decrease trend of the total consumption amounts in all the time periods to generate the gradual consumption change adjustment factor, where the gradual consumption change adjustment factor is used to indicate an increase or decrease trend of the consumption amounts of the user in the historical time range. In an actual application, the gradual consumption change adjustment factor may be specifically reflected by a numeric value. For example, the selected historical time range may be from July 1, 2013 to October 1, 2013, and in this case, the recharge terminal may separately count total consumption amounts of the user in July, August, and September, which are 120 yuan, 148 yuan, and 189 yuan respectively, and then perform averaging on the total consumption amounts in the three months. In this way, an average consumption amount of the user in the historical time range, namely, 152 yuan, may be obtained by calculation. The recharge terminal may use the average consumption amount as the recommended recharge amount to be recommended to the user. The recharge terminal finds, by analyzing an increase or decrease trend of the total consumption amounts in July, August, and September, that the total consumption amounts of the user in the three months show an increase trend. Then, the recharge terminal generates a gradual consumption change adjustment factor according to the amount increase or decrease trend obtained by analysis. For example, a value of the gradual consumption change adjustment factor may be 1.1 or 1.3, and in this case, the recharge terminal may obtain the adjusted recommended recharge amount by multiplying the calculated recommended recharge amount (152 yuan) by the generated gradual consumption change adjustment factor, for example, obtaining 197 yuan by 152 yuan * 1.3. In the embodiment of the present invention, by determining a consumption behavior trend of the user, an adjustment on the acquired recommended recharge amount may be implemented; the adjustment on the recommended recharge amount according to the gradual consumption change adjustment factor may implement an accurate recommended amount to the user.

It should be noted that multiple manners are available for the recharge terminal to adjust the acquired recommended recharge amount. The adjustment on the recommended recharge amount based on the gradual consumption change adjustment factor is described in the foregoing embodiment. The following describes other manners of adjusting the recommended recharge amount. In the recharge method provided by the present invention based on the recharge terminal side, after the recharge terminal acquires the recommended recharge amount to be recommended to the user, the method may further include the following steps:

D1. The recharge terminal determines whether a time when the user performs recharging meets a preset time attribute.

D2. If the time when the user performs recharging meets the preset time attribute, the recharge terminal performs an amount increase or decrease adjustment on the acquired recommended recharge amount according to a time attribute adjustment factor corresponding to the time attribute to obtain an adjusted recommended recharge amount.

Based on the foregoing implementation manner of step D1 and step D2, in the recharge method provided by the embodiment of the present invention, step 103 in which the recharge terminal recommends the acquired recommended recharge amount to the user may include:
recommending, by the recharge terminal, the adjusted recommended recharge amount to the user.

In step D1, the recharge terminal determines whether the time when the user performs recharging meets the preset time attribute. In the embodiment of the present invention, the time when the user performs recharging, which is detected by the recharge terminal, does not need to be a time expressed in minute or second. Instead, the time when the user performs recharging is used as a selection point for selecting a historical time range. By detecting the time when the user performs recharging, a time environment in which the user may perform recharging may be acquired. In step D2, when the time when the user performs recharging meets the preset time attribute, the recharge terminal acquires the time attribute adjustment factor corresponding to the time attribute, and then the recharge terminal performs the amount increase or decrease adjustment on the acquired recommended recharge amount according to the time attribute adjustment factor to obtain the adjusted recommended recharge amount. The preset time attribute may be a specific time or time range. For example, a winter vacation, a summer vacation, the Spring Festival, and the May Day may all be set as a specific time attribute. If the time when the user performs recharging meets the specific time attribute, the recharge terminal may use the time attribute adjustment factor corresponding to the time attribute to adjust the recommended recharge amount, so as to obtain the adjusted recommended recharge amount.

Specifically, step D2 in which the recharge terminal performs an amount increase or decrease adjustment on the acquired recommended recharge amount according to a time attribute adjustment factor corresponding to the time attribute may specifically include:

D21. The recharge terminal searches the historical time range for a historical time that meets the time attribute.

D22. The recharge terminal acquires the time attribute adjustment factor according to a proportional relationship between a consumption amount of the user at the historical time and consumption amounts of the user at times except the historical time in the historical time range.

D23. The recharge terminal multiplies the acquired recommended recharge amount by the acquired time attribute adjustment factor.

The recharge terminal may acquire the time attribute adjustment factor in the manner recorded in step D21 and step D22 and use the time attribute adjustment factor to perform the amount increase or decrease adjustment on the acquired recommended recharge amount by performing step D23. The recharge terminal finds the historical time that meets the time attribute from the historical time range, that is, the historical time in the historical time range and the time when the user performs recharging have the same time attribute. In step D22, the recharge terminal acquires the time attribute adjustment factor according to the consumption amount of the user at the historical time and the consumption amounts of the user at the times except the historical time in the historical time range. In the manner of predicting, based on the historical consumption information generated by the user, a consumption behavior of the user when the user performs recharging, the time attribute adjustment factor is an adjustment parameter for predicting user recharging. In step D23, the time attribute adjustment factor may be used to adjust the recommended recharge amount. The recommended recharge amount acquired by predicting, based on the historical consumption information generated by the user, the consumption behavior of the user when the user performs recharging, may exactly comply with a future consumption behavior of the user. The recommended recharge amount recommended to the user can play a role of guiding the user, and meet the requirement of the user.

For example, the preset time attribute may be a holiday time attribute. When the time when the user performed recharging is October 1, 2013, the recharge terminal may determine that the time when the user performed recharging meets the holiday time attribute. Assuming that the historical time range is from August 1, 2012 to September 1, 2013, a first historical time that meets the holiday time attribute is selected from the historical time range, for example, the selected first historical time is October 2012. Then a consumption amount in October 2012 and consumption amounts at other times in the historical time range are acquired separately. If it is found that the consumption amount of the user in October 2012 is far greater than the consumption amounts at the other times in the historical time range, it indicates that the user conducts more consumption behaviors on the holiday, and a value of the time attribute adjustment factor may be larger. Then after the recommended recharge amount to be recommended to the user is acquired in this case, the recommended recharge amount is multiplied by the time attribute adjustment factor to obtain an adjusted recommended recharge amount. By adjusting the recommended recharge amount according to the corresponding time attribute adjustment factor that meets the holiday time attribute, a recharge amount that better complies with the consumption behaviors of the user on the holiday may be recommended to the user.

In addition, in step D2 in the embodiment of the present invention, the performing an adjustment on the acquired recommended recharge amount according to a time attribute adjustment factor is only one implementation manner of adjusting the recommended recharge amount. In addition, in the embodiment of the present invention, after the adjusted recommended recharge amount is recommended to the user, an actual recharge amount is still determined by the user. The acquired recommended recharge amount and the adjustment on the recommended recharge amount in the embodiment of the present invention are only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, and time attribute adjustment factor may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor, and finally the adjusted recommended recharge amount is sent to the user.

In other embodiments of the present invention, the historical consumption information may further include consumption details of the user in the historical time range. In this case, after step 102 in which the recharge terminal acquires, according to the historical consumption information of the user ID, a recommended recharge amount to be recommended to the user, the method may further include the following steps:

E1. The recharge terminal acquires, according to the consumption details, all products consumed by the user in the historical time range.

E2. The recharge terminal acquires whether there is a product update on the products consumed by the user.

E3. If there is a product update, the recharge terminal performs an amount increase or decrease adjustment on the acquired recommended recharge amount according to an amount corresponding to an updated product to obtain an adjusted recommended recharge amount.

Based on the foregoing implementation manner of steps E1, E2, and E3, in the recharge method provided by the embodiment of the present invention, step 103 in which the recharge terminal recommends the acquired recommended recharge amount to the user may include:
recommending, by the recharge terminal, the adjusted recommended recharge amount to the user.

In addition to the consumption amount of the user in the historical time range before the user performs recharging, the historical consumption information may also include the consumption details of the user in the historical time range. The consumption details refer to information such as specific products on which the consumption amount generated by the user in the historical time range is used, and a consumption time and a consumption amount of each product. In step E1, the recharge terminal may acquire, according to the consumption details, all the products consumed by the user in the historical time range. The product in the embodiment of the present invention may refer to a commodity, or may refer to a service, for example, a virtual commodity (a game card and an item of an online game), where the service may refer to a mobile broadband (Mobile Broad Band, MBB) service, and the like. The product consumed by the user may refer to a call, an SMS message, a data service, and the like after recharging is performed for a mobile phone. In step E2, the recharge terminal acquires whether there is a product update on a type of product consumed by the user. For example, the recharge server dynamically tracks the products consumed by the user to acquire whether there is an update on a product of the same type. When detecting that there is an update on a product of the same type, the recharge server may send update information to the recharge terminal. Therefore, the recharge terminal may acquire whether there is a product update on the products consumed by the user. In step E3, when there is a product update, the recharge terminal may perform, according to a consumption amount of the user on an updated product in the historical time range, an amount increase or decrease adjustment on the recommended recharge amount to be recommended to the user. That is, when there is an update on the product consumed by the user, the recommended recharge amount to be recommended to the user may be adjusted according to a price of the updated product, so that an adjusted recommended recharge amount can ensure that the user recharges an amount in advance that is enough for the user to continue to purchase the updated product. Generally, products purchased by the user may be considered as products that interest the user. When the products are updated, the recommended recharge amount may be adjusted. It is recommended that the user should perform recharging according to an adjusted recommended recharge amount, to ensure that the account balance of the user is enough to purchase an updated commodity.

For example, the recharge platform is a recharge platform for an on-demand video service, and the recharge terminal acquires, according to the consumption details of the user in the historical time range, that the user orders a video service 1, a video service 2, and a video service 3 in the historical time range. The recharge server may detect whether there is an update on a product of a same type as the video service 1, video service 2, and video service 3. For example, if there is an update on the video service 1, the recharge server pushes update information to the recharge terminal when there is the update on the video service 1. The recharge terminal may adjust, according to an on-demand play price of the video service 1, the recommended recharge amount to be recommended to the user, for example, add the price of the video service 1 and the recommended recharge amount acquired in step 102 to obtain an adjusted recommended recharge amount.

In addition, in the embodiment of the present invention, that the recharge terminal performs an amount increase or decrease adjustment on the acquired recommended recharge amount according to an amount corresponding to an updated product in step E3 is only one implementation manner of adjusting the recommended recharge amount. In addition, in the embodiment of the present invention, after the adjusted recommended recharge amount is recommended to the user, an actual recharge amount is still determined by the user. The acquired recommended recharge amount and the adjustment on the recommended recharge amount in the embodiment of the present invention are only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, time attribute adjustment factor, and consumption amount of the user on the updated product in the historical time range may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor. After the time attribute adjustment factor is used to adjust the recommended recharge amount, the consumption amount of the user on the updated product in the historical time range is used to adjust again the recommended recharge amount that is adjusted by using the time attribute adjustment factor. By using a combination of multiple adjustment manners, a determined recommended recharge amount to be recommended to the user can implement a more accurate recommendation of a recharge amount to the user.

In other embodiments of the present invention, after step 102 in which the recharge terminal acquires, according to the historical consumption information of the user ID, a recommended recharge amount to be recommended to the user, the method may further include the following step:

F1. The recharge terminal performs an amount increase or decrease adjustment on the acquired recommended recharge amount according to a recharge-free duration factor to obtain an adjusted recommended recharge amount.

Based on the foregoing implementation manner of step F1, in the recharge method provided by the embodiment of the present invention, step 103 in which the recharge terminal recommends the acquired recommended recharge amount to the user may include:
recommending, by the recharge terminal, the adjusted recommended recharge amount to the user.

The recharge-free duration factor is used to indicate a duration of sustaining a free-of-recharge condition for the user. The recharge terminal performs the amount increase or decrease adjustment on the recommended recharge amount according to the recharge-free duration factor, for example, multiplies the recommended recharge amount acquired by the recharge terminal in step 102 by the recharge-free duration factor to obtain an adjusted recommended recharge amount.

In other embodiments of the present invention, before step F1 in which the recharge terminal performs an amount increase or decrease adjustment on the acquired recommended recharge amount according to a recharge-free duration, the method may further include the following steps:

F0a. The recharge terminal acquires a recharge-free duration entered by the user.

F0b. The recharge terminal generates the recharge-free duration factor according to the recharge-free duration.

In the embodiment of the present invention, the recharge terminal may further display a recommendation option on a recharge interface to the user, where a recharge-free duration parameter is set. A default recharge-free duration parameter may be preset, or a value of the recharge-free duration parameter may be entered by the user. The recharge-free duration parameter refers to a duration in which the recharge amount after the user performs recharging may sustain the free-of-recharge condition for the user. For example, the default recharge-free duration parameter may be set to 3 months, and in this case, by performing step F0b, the recharge terminal may generate a recharge-free duration factor of 3 according to the recharge-free duration. The recommended recharge amount acquired in step 102 is adjusted according to the recharge-free duration factor, which may guarantee that the recharge amount of the user can last three months and that the user does not need to perform recharging again within the three months. The recommended recharge amount acquired by predicting, based on the historical consumption information generated by the user, the consumption behavior of the user when the user performs recharging, may exactly comply with a future consumption behavior of the user. The recommended recharge amount recommended to the user can play a role of guiding the user, and meet the requirement of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, time attribute adjustment factor, and consumption amount of the user on the updated product in the historical time range may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor. After the time attribute adjustment factor is used to adjust the recommended recharge amount, the consumption amount of the user on the updated product in the historical time range is used to adjust again the recommended recharge amount that is adjusted by using the time attribute adjustment factor. Then the recharge-free duration factor may be further used to adjust again the adjusted recommended recharge amount. By using a combination of multiple adjustment manners, a determined recommended recharge amount to be recommended to the user can implement a more accurate recommendation of a recharge amount to the user.

An example is provided as follows. The recharge method provided by the embodiment of the present invention is applied to the recharge platform. On a recharge interface displayed to the user, the recharge terminal may set two different recharge methods, namely, "By amount" and "Intelligent recharge". In the recharge-by-amount method, multiple amounts may be provided for the user to make a selection. In the intelligent recharge method, a recommended recharge amount to be recommended to the user may be acquired according to historical consumption information. When the user performs recharging, the recharge terminal sends the recommended recharge amount to the user, to guide the user to rational consumption and bring more delights to a recharge behavior of the user. For example, the recharge platform is a recharge platform for a mobile phone number. As shown in FIG. 2-a, which is a schematic diagram of a recharge interface when a recharge method provided by an embodiment of the present invention is applied to a recharge platform, after the user logs in to the recharge platform, the recharge terminal acquires a mobile phone number "13512345678" manually entered by the user. Certainly, a mobile phone number that is set in account information of the user may also be automatically filled according to the user ID, or a mobile phone number for which the user performs recharging previously may be automatically filled in the current recharge to avoid a repeated entry for the user. If the user chooses to recharge by amount, several amounts, namely, 30 yuan, 50 yuan, and 100 yuan, are provided for the user to make a selection, and "Other amounts" is set for the user to enter an amount. After the user chooses to recharge 30 yuan, the user may click a "Recharge" button on the recharge interface to perform recharging. As shown in FIG. 2-b, which is a schematic diagram of a recharge interface when another recharge method provided by an embodiment of the present invention is applied to a recharge platform, after the user logs in to the recharge platform, the user may manually enter a mobile phone number "13512345678" of the user. Certainly, a mobile phone number that is set in account information of the user may also be automatically filled according to the user ID, or a mobile phone number for which the user performs recharging previously may be automatically filled in the current recharge to avoid a repeated entry for the user. If the user selects intelligent recharge, a preset recharge-free duration (using 3 months as an example) is acquired, and a calculated recommended recharge amount to be recommended to the user is 105 yuan. On the recharge interface displayed to the user, the amount that should be recharged is displayed to the user, where the amount is suggested to the user when the recharge-free duration is 3 months. The user may click a "Recharge" button on the recharge interface to perform recharging. In addition, a "Recommendation option" button may be further set on the recharge interface, and the user selects a recharge-free duration. In this case, when the recharge-free duration selected by the user is 1 month, the calculated recharge amount to be recommended to the user is 35 yuan. When the recharge-free duration selected by the user is 2 months, the calculated recharge amount to be recommended to the user is 70 yuan. When the recharge-free duration selected by the user is 4 months, the calculated recharge amount to be recommended to the user is 140 yuan. When the recharge-free duration selected by the user is 5 months, the calculated recharge amount to be recommended to the user is 175 yuan. When the recharge-free duration selected by the user is 6 months, the calculated recharge amount to be recommended to the user is 210 yuan.

In other embodiments of the present invention, after step 102 in which the recharge terminal acquires, according to the historical consumption information of the user ID, a recommended recharge amount to be recommended to the user, the method may further include the following steps:

G1. The recharge terminal acquires, from a recharge server, preference push information corresponding to the user ID.

G2. The recharge terminal performs an amount increase or decrease adjustment on the acquired recommended recharge amount according to the preference push information to obtain an adjusted recommended recharge amount.

Based on the foregoing implementation manner of steps G1 and G2, in the recharge method provided by the embodiment of the present invention, step 103 in which the recharge terminal recommends the acquired recommended recharge amount to the user may include:
recommending, by the recharge terminal, the adjusted recommended recharge amount to the user.

In step G1, the recharge terminal first acquires, from a recharge server side, subscribed preference push information of the user ID corresponding to the user, where the preference push information may be determined by a subscription relationship between a third-party application and the user. That is, when the third-party application has recharge preference information, the third-party application sends the recharge preference information to the recharge server, and the recharge server pushes the recharge preference information to the recharge terminal and then further to the user, so that the user can learn latest preference information. In the embodiment of the present invention, the recharge server may perform detection on the user ID. When receiving the recharge preference information pushed by the third-party application, the recharge server sends the preference push information to the recharge terminal. The recharge terminal may perform, according to the recharge preference information, an amount increase or decrease adjustment on the recommended recharge amount acquired in step 102, and therefore obtain an adjusted recommended recharge amount. For example, the recharge terminal acquires a recommended recharge amount of 85 yuan by performing step 102. If the preference push information indicates "recharge 100 yuan and get a bonus of 10 yuan", the recharge terminal may adjust the recommended recharge amount from 85 yuan to 100 yuan according to the preference push information, and display preference push information content to the user by using the recharge interface, and the user determines an actual recharge amount. The recommended recharge amount to be recommended to the user is adjusted according to the recharge preference information, which enables the user to perform recharging according to a preference subscribed with the third-party application, and may exactly comply with a future consumption behavior of the user. The recommended recharge amount recommended to the user enables the user to enjoy a preference provided by the third-party application in time, and conform to the interest of the user.

In addition, in the embodiment of the present invention, that the recharge terminal performs an amount increase or decrease adjustment on the acquired recommended recharge amount according to the preference push information in step G2 is only one implementation manner of adjusting the recommended recharge amount. In addition, in the embodiment of the present invention, after the adjusted recommended recharge amount is recommended to the user, an actual recharge amount is still determined by the user. The acquired recommended recharge amount and the adjustment on the recommended recharge amount in the embodiment of the present invention are only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, time attribute adjustment factor, and consumption amount of the user on the updated product in the historical time range may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor. After the time attribute adjustment factor is used to adjust the recommended recharge amount, the consumption amount of the user on the updated product in the historical time range is used to adjust again the recommended recharge amount that is adjusted by using the time attribute adjustment factor. Then the recharge-free duration factor may be further used to adjust again the adjusted recommended recharge amount. Then the preference push information may be further used to adjust again the adjusted recommended recharge amount. By using a combination of multiple adjustment manners, a determined recommended recharge amount to be recommended to the user can implement a more accurate recommendation of a recharge amount to the user.

It should be noted that, in the foregoing embodiment of the present invention, after step 102 in which the recharge terminal acquires, according to the historical consumption information of the user ID, a recommended recharge amount to be recommended to the user, the recharge terminal may adjust the acquired recommended recharge amount in multiple implementation manners. The multiple implementation manners of the adjustment are described in detail. In an actual application, the adjustment may be implemented, with reference to a specific application scenario, by selecting one implementation manner from the multiple implementation manners or combining several implementation manners of the multiple implementation manners, for example, the adjustment manner recorded in steps C1 and C2, the adjustment manner recorded in steps D1 and D2, the adjustment manner recorded in steps E1, E2, and E3, the adjustment manner recorded in step F1, and the adjustment manner recorded in steps G1 and G2 in the embodiment of the present invention. Each adjustment manner may be corresponding to one matching option, and in this case, there may be five matching options: the gradual consumption change adjustment factor, the time attribute adjustment factor, the consumption amount of the user on the updated product in the historical time range, the recharge-free duration factor, and the preference push information. A recommended recharge amount may be determined according to one matching option or multiple matching options of the five matching options jointly. Therefore, a corresponding recommended recharge amount may be calculated according to different matching option combinations to meet multiple requirements of the user. Suggesting an amount that should be recharged to the user may, as opposed to the prior art in which a recharge amount determined by a user is received passively, provide guidance on a recharge behavior of the user, guide the user to rational consumption, provide new recharge experience for the user, and bring more delights to the recharge behavior of the user.

As may be known from the description of the present invention in the foregoing embodiment, when detecting that a user needs to perform recharging, a recharge terminal acquires, according to a user ID corresponding to the user, historical consumption information of the user ID; and then the recharge terminal acquires, according to the historical consumption information of the user ID, a recommended recharge amount to be recommended to the user, and recommends the acquired recommended recharge amount to the user, so that the user may determine a current recharge amount according to the received recommended recharge amount. In the embodiment of the present invention, the recharge terminal may recommend an amount that should be recharged to the user by using the recommended recharge amount, thereby implementing intelligent recharging.

A recharge method implemented based on a recharge terminal according to the present invention is described in the foregoing embodiment. The following introduces another recharge method implemented based on interaction between a recharge terminal and a recharge server according to an embodiment of the present invention. First, the recharge method provided by the embodiment of the present invention is described from a recharge terminal side. The method includes the following steps: When detecting that a user needs to perform recharging, the recharge terminal sends recharge recommendation request information to the recharge server, where the recharge recommendation request information includes a user ID of the user; the recharge terminal receives a recommended recharge amount that is acquired by the recharge server according to the user ID; and the recharge terminal recommends the received recommended recharge amount to the user, so that the user determines a recharge amount according to the recommended recharge amount.

Referring to FIG. 3, a recharge method provided by an embodiment of the present invention may specifically include the following steps:

301. When detecting that a user needs to perform recharging, a recharge terminal sends recharge recommendation request information to a recharge server, where the recharge recommendation request information includes a user ID of the user.

In the embodiment of the present invention, by operating the recharge terminal, the user generally uses the user ID to log in to a recharge platform. After each user logs in to the recharge platform, the recharge terminal may detect that a user needs to perform recharging. A communication connection is established between the recharge terminal and the recharge server. The recharge terminal sends recharge recommendation request information to the recharge server to request the recharge server to deliver a recommended recharge amount, where the recharge recommendation request information sent by the recharge terminal carries a user ID of the user. In the embodiment of the present invention, when detecting that the user needs to perform recharging, the recharge terminal initiates a recharge recommendation request to the recharge server to trigger the recharge server to deliver the recommended recharge amount, which will not increase excessive burdens on the recharge terminal. The method may be applied to a small-sized recharge terminal that has a limited data processing capability.

302. The recharge terminal receives a recommended recharge amount that is acquired by the recharge server according to the user ID.

In the embodiment of the present invention, the recharge terminal sends the recommended recharge request information to the recharge server, and the recharge server may acquire, from the recommended recharge request information, the ID of the user who needs to perform recharging. The recharge server may acquire, according to the user ID, historical consumption information corresponding to the user ID. The recharge server may acquire, according to the historical consumption information, the recommended recharge amount to be recommended to the user, and sends the acquired recommended recharge amount to the recharge terminal. Therefore, the recharge terminal may receive, from the recharge server, the recommended recharge amount that should be recommended to the user. The recharge server acquires, according to the historical consumption information of the user ID, the recommended recharge amount to be recommended to the user, where the historical consumption information may include a consumption amount in a historical time range before the user performs recharging. In the embodiment of the present invention, the recharge server generally acquires historical consumption information that is in a historical time range before the user performs recharging and is recorded on the recharge server. In the embodiment of the present invention, the historical consumption information recorded on the recharge server may include multiple records generated when the user performs recharging, for example, a time when the user performs recharging each time, a recharge amount, a transaction sequence number, a third-party payment tool used by the user, and consumption details generated for specific use of consumption amounts by the user. In the embodiment of the present invention, content included in the historical consumption information may refer to one or more types of the foregoing content. For example, after the user logs in to the recharge platform, the recharge server may record a successful login time of the user, and the recharge server uses the successful login time of the user as a time when the user performs recharging. Certainly, in the embodiment of the present invention, the time when the user performs recharging does not need to be a time point expressed in minute or second. Instead, the time when the user performs recharging is used as a selection point for selecting a historical time range. For example, if a time when a user performed recharging is October 5, 2013, a historical time range from October 5, 2012 to October 4, 2013 may be selected, that is, the historical time range that may be selected is 1 year. Certainly, a length of the selected historical time range needs to be determined according to a specific application scenario, and an example is provided herein for description only. For details about the implementation manner in which the recharge server acquires, by using the historical consumption information of the user ID, the recommended recharge amount to be recommended to the user, reference may be made to the description of the subsequent embodiment.

In addition, the historical consumption information in the embodiment of the present invention may further include information content related to different recharge platforms and separately recorded on the recharge server when the user performs recharging on these recharge platforms. For example, when the recharge platform is specifically a recharge platform for water, electricity, and gas management, the historical consumption information may further include consumption amounts corresponding to water (or electricity or gas) usage of the user at different tiers. For example, water usage is classified into three tiers, and a water price is different at each tier; in this case, when there is high water usage, water usage of the user crosses two tiers, and therefore, the historical consumption information may include a consumption amount generated by the user at tier 1, a consumption amount generated by the user at tier 2, a consumption amount generated by the user at tier 3, and the like.

303. The recharge terminal recommends the received recommended recharge amount to the user, so that the user determines a recharge amount according to the recommended recharge amount.

In the embodiment of the present invention, after the recharge terminal receives the recommended recharge amount from the recharge server, the recharge terminal sends the recommended recharge amount to the user. Therefore, when performing recharging, the user may determine, according to the recommended recharge amount recommended by the recharge terminal, an amount that the user needs to recharge. For example, the recharge terminal may display, by using a recharge interface, the recommended recharge amount recommended by the recharge terminal to the user, and the user uses the recommended recharge amount as a reference for the current recharge.

It should be noted that, after the recharge terminal receives, from the recharge server, the recommended recharge amount to be recommended to the user, the recharge terminal may further adjust the recommended recharge amount, so that an adjusted recommended recharge amount can better meet a requirement of the user and improve accuracy of the recommendation to the user. Multiple implementation manners may be used for the recharge terminal to adjust the recommended recharge amount. The following uses an example for description.

In some embodiments of the present invention, after step 302 in which the recharge terminal receives a recommended recharge amount that is acquired by the recharge server according to the user ID, the method may further include the following steps:

H1. The recharge terminal receives historical consumption information that is sent by the recharge server and corresponding to the user ID, where the historical consumption information includes a consumption amount in a historical time range before the user performs recharging.

H2. The recharge terminal divides the historical time range into multiple time periods.

H3. The recharge terminal acquires a gradual consumption change adjustment factor according to a total consumption amount in each time period, where the gradual consumption change adjustment factor is an amount increase or decrease trend of the total consumption amounts in all the time periods.

H4. The recharge terminal performs an amount increase or decrease adjustment on the acquired recommended recharge amount according to the gradual consumption change adjustment factor to obtain an adjusted recommended recharge amount.

Based on the foregoing implementation manner of steps H1 to H4, in the recharge method provided by the embodiment of the present invention, step 303 in which the recharge terminal recommends the received recommended recharge amount to the user includes:
recommending, by the recharge terminal, the adjusted recommended recharge amount to the user.

The recharge terminal analyzes the amount increase or decrease trend of the total consumption amounts in all the time periods to generate the gradual consumption change adjustment factor, where the gradual consumption change adjustment factor is used to indicate an increase or decrease trend of the consumption amounts of the user in the historical time range. In an actual application, the gradual consumption change adjustment factor may be specifically reflected by a numeric value.

It should be noted that multiple manners are available for the recharge terminal to adjust the received recommended recharge amount. The adjustment on the recommended recharge amount based on the gradual consumption change adjustment factor is described in the foregoing embodiment. The following describes other manners of adjusting the recommended recharge amount. In the recharge method provided by the present invention based on the recharge terminal side, after step 302 in which the recharge terminal receives a recommended recharge amount that is acquired by the recharge server according to the user ID, the method may further include the following steps:

I1. The recharge terminal determines whether a time when the user performs recharging meets a preset time attribute.

12. If the time when the user performs recharging meets the preset time attribute, the recharge terminal performs an amount increase or decrease adjustment on the acquired recommended recharge amount according to a time attribute adjustment factor corresponding to the time attribute to obtain an adjusted recommended recharge amount.

Based on the foregoing implementation manner of steps I1 to 12, in the recharge method provided by the embodiment of the present invention, step 303 in which the recharge terminal recommends the received recommended recharge amount to the user includes:
recommending, by the recharge terminal, the adjusted recommended recharge amount to the user.

In step I, the recharge terminal determines whether the time when the user performs recharging meets the preset time attribute. In the embodiment of the present invention, the time when the user performs recharging, which is detected by the recharge terminal, does not need to be a time expressed in minute or second. Instead, the time when the user performs recharging is used as a selection point for selecting a historical time range. By detecting the time when the user performs recharging, a time environment in which the user may perform recharging may be acquired. In step 12, when the time when the user performs recharging meets the preset time attribute, the recharge terminal acquires the time attribute adjustment factor corresponding to the time attribute, and then the recharge terminal performs the amount increase or decrease adjustment on the acquired recommended recharge amount according to the time attribute adjustment factor to obtain the adjusted recommended recharge amount.

Specifically, step 12 in which the recharge terminal performs an amount increase or decrease adjustment on the acquired recommended recharge amount according to a time attribute adjustment factor corresponding to the time attribute may specifically include:

121. The recharge terminal searches a historical time range for a historical time that meets the time attribute.

122. The recharge terminal acquires the time attribute adjustment factor according to a proportional relationship between a consumption amount of the user at the historical time and consumption amounts of the user at times except the historical time in the historical time range.

123. The recharge terminal multiplies the acquired recommended recharge amount by the acquired time attribute adjustment factor.

The recharge terminal may acquire the time attribute adjustment factor in the manner recorded in step 121 and step 122 and use the time attribute adjustment factor to perform the amount increase or decrease adjustment on the acquired recommended recharge amount by performing step 123. The recharge terminal finds the historical time that meets the time attribute from the historical time range, that is, the historical time in the historical time range and the time when the user performs recharging have the same time attribute. In step 122, the recharge terminal acquires the time attribute adjustment factor according to the consumption amount of the user at the historical time and the consumption amounts of the user at the times except the historical time in the historical time range. In the manner of predicting, based on the historical consumption information generated by the user, a consumption behavior of the user when the user performs recharging, the time attribute adjustment factor is an adjustment parameter for predicting user recharging. In step 123, the time attribute adjustment factor may be used to adjust the recommended recharge amount. The recommended recharge amount acquired by predicting, based on the historical consumption information generated by the user, the consumption behavior of the user when the user performs recharging, may exactly comply with a future consumption behavior of the user. The recommended recharge amount recommended to the user can play a role of guiding the user, and meet the requirement of the user.

In other embodiments of the present invention, after step 302 in which the recharge terminal receives a recommended recharge amount that is acquired by the recharge server according to the user ID, the method may further include the following steps:

J1. The recharge terminal receives historical consumption information that is sent by the recharge server and corresponding to the user ID, where the historical consumption information includes consumption details of the user in a historical time range.

J2. The recharge terminal acquires, according to the consumption details, all products consumed by the user in the historical time range.

J3. The recharge terminal acquires whether there is a product update on the products consumed by the user.

J4. If there is a product update, the recharge terminal performs an amount increase or decrease adjustment on the acquired recommended recharge amount according to an amount corresponding to an updated product to obtain an adjusted recommended recharge amount.

Based on the foregoing implementation manner of steps J1 to J4, in the recharge method provided by the embodiment of the present invention, step 302 in which the recharge terminal recommends the received recommended recharge amount to the user includes:
recommending, by the recharge terminal, the adjusted recommended recharge amount to the user.

In step J2, the recharge terminal may acquire, according to the consumption details, all the products consumed by the user in the historical time range. The product in the embodiment of the present invention may refer to a commodity, or may refer to a service, for example, a virtual commodity (a game card and an item of an online game), where the service may refer to a mobile broadband service and the like. The product consumed by the user may refer to a call, an SMS message, a data service, and the like after recharging is performed for a mobile phone. In step J3, the recharge terminal acquires whether there is a product update on a type of product consumed by the user. For example, the recharge server dynamically tracks the products consumed by the user to acquire whether there is an update on a product of the same type. When detecting that there is an update on a product of the same type, the recharge server may send update information to the recharge terminal. Therefore, the recharge terminal may acquire whether there is a product update on the products consumed by the user. In step J3, when there is a product update, the recharge terminal may perform, according to a consumption amount of the user on an updated product in the historical time range, an amount increase or decrease adjustment on the recommended recharge amount to be recommended to the user. That is, when there is an update on the product consumed by the user, the recommended recharge amount to be recommended to the user may be adjusted according to a price of the updated product, so that an adjusted recommended recharge amount can ensure that the user recharges an amount in advance that is enough for the user to continue to purchase the updated product. Generally, products purchased by the user may be considered as products that interest the user. When the products are updated, the recommended recharge amount may be adjusted. It is recommended that the user should perform recharging according to an adjusted recommended recharge amount, to ensure that the account balance of the user is enough to purchase an updated commodity.

In other embodiments of the present invention, after step 302 in which the recharge terminal receives a recommended recharge amount that is acquired by the recharge server according to the user ID, the method may further include the following step:

K1. The recharge terminal performs an amount increase or decrease adjustment on the acquired recommended recharge amount according to a recharge-free duration factor to obtain an adjusted recommended recharge amount.

Based on the foregoing implementation manner of step K1, in the recharge method provided by the embodiment of the present invention, step 302 in which the recharge terminal recommends the received recommended recharge amount to the user includes:
recommending, by the recharge terminal, the adjusted recommended recharge amount to the user.

The recharge-free duration factor is used to indicate a duration of sustaining a free-of-recharge condition for the user. The recharge terminal performs the amount increase or decrease adjustment on the recommended recharge amount according to the recharge-free duration factor, for example, multiplies the recommended recharge amount received by the recharge terminal in step 302 by the recharge-free duration factor to obtain an adjusted recommended recharge amount.

In other embodiments of the present invention, before step K1 in which the recharge terminal performs an amount increase or decrease adjustment on the acquired recommended recharge amount according to a recharge-free duration, the method may further include the following steps:

K0a. The recharge terminal acquires a recharge-free duration entered by the user.

K0b. The recharge terminal generates the recharge-free duration factor according to the recharge-free duration.

In the embodiment of the present invention, the recharge terminal may further display a recommendation option on a recharge interface to the user, where a recharge-free duration parameter is set. A default recharge-free duration parameter may be preset, or a value of the recharge-free duration parameter may be entered by the user. The recharge-free duration parameter refers to a duration in which the recharge amount after the user performs recharging may sustain the free-of-recharge condition for the user. For example, the default recharge-free duration parameter may be set to 3 months, and in this case, by performing step K0b, the recharge terminal may generate a recharge-free duration factor of 3 according to the recharge-free duration. The recommended recharge amount received in step 302 is adjusted according to the recharge-free duration factor, which may guarantee that the recharge amount of the user can last three months and that the user does not need to perform recharging again within the three months. The recommended recharge amount acquired by predicting, based on the historical consumption information generated by the user, the consumption behavior of the user when the user performs recharging, may exactly comply with a future consumption behavior of the user. The recommended recharge amount to be recommended to the user can play a role of guiding the user, and meet the requirement of the user.

In other embodiments of the present invention, after step 302 in which the recharge terminal receives a recommended recharge amount that is acquired by the recharge server according to the user ID, the method may further include the following steps:

L1. The recharge terminal acquires, from the recharge server, preference push information corresponding to the user ID.

L2. The recharge terminal performs an amount increase or decrease adjustment on the acquired recommended recharge amount according to the preference push information to obtain an adjusted recommended recharge amount.

Based on the foregoing implementation manner of steps L1 and L2, in the recharge method provided by the embodiment of the present invention, step 302 in which the recharge terminal recommends the received recommended recharge amount to the user includes:
recommending, by the recharge terminal, the adjusted recommended recharge amount to the user.

In step L1, the recharge terminal first acquires, from a recharge server side, subscribed preference push information of the user ID corresponding to the user, where the preference push information may be determined by a subscription relationship between a third-party application and the user. That is, when the third-party application has recharge preference information, the third-party application sends the recharge preference information to the recharge server, and the recharge server pushes the recharge preference information to the recharge terminal and then further to the user, so that the user can learn latest preference information. In the embodiment of the present invention, the recharge server may perform detection on the user ID. When receiving the recharge preference information pushed by the third-party application, the recharge server sends the preference push information to the recharge terminal. The recharge terminal may perform, according to the recharge preference information, an amount increase or decrease adjustment on the recommended recharge amount acquired in step 302, and therefore obtain an adjusted recommended recharge amount.

It should be noted that, in the foregoing embodiment of the present invention, after step 302 in which the recharge terminal receives the recommended recharge amount to be recommended to the user, the recharge terminal may adjust the acquired recommended recharge amount in multiple implementation manners. The multiple implementation manners of the adjustment are described in detail. In an actual application, the adjustment may be implemented, with reference to a specific application scenario, by selecting one implementation manner from the multiple implementation manners or combining several implementation manners of the multiple implementation manners, for example, the adjustment manner recorded in steps H1 to H4, the adjustment manner recorded in steps I1 and 12, the adjustment manner recorded in steps J1 to J4, the adjustment manner recorded in step K1, and the adjustment manner recorded in steps L1 and L2 in the embodiment of the present invention. Each adjustment manner may be corresponding to one matching option, and in this case, there may be five matching options: the gradual consumption change adjustment factor, the time attribute adjustment factor, the consumption amount of the user on the updated product in the historical time range, the recharge-free duration factor, and the preference push information. A recommended recharge amount may be determined according to one matching option or multiple matching options of the five matching options jointly. Therefore, a corresponding recommended recharge amount may be calculated according to different matching option combinations to meet multiple requirements of the user. Suggesting an amount that should be recharged to the user may, as opposed to the prior art in which a recharge amount determined by a user is received passively, provide guidance on a recharge behavior of the user, guide the user to rational consumption, provide new recharge experience for the user, and bring more delights to the recharge behavior of the user.

As may be known from the description of the present invention in the foregoing embodiment, when detecting that a user needs to perform recharging, a recharge terminal sends recharge recommendation request information to a recharge server; the recharge server acquires, according to the received recharge recommendation request information, a user ID for which recharging is required, and acquires, according to the user ID, historical consumption information of the user ID; the recharge server acquires, according to the historical consumption information of the user ID, a recommended recharge amount to be recommended to the user; the recharge server sends the acquired recommended recharge amount to the recharge terminal; and the recharge terminal recommends the received recommended recharge amount to the user. Therefore, the user may determine a current recharge amount according to the received recommended recharge amount. In the embodiment of the present invention, the recharge terminal may recommend an amount that should be recharged to the user by using the recommended recharge amount, thereby implementing intelligent recharging.

A recharge method implemented based on interaction between a recharge terminal and a recharge server according to the present invention is described in the foregoing embodiment. The following introduces a recharge method implemented from a recharge server side, in another recharge method implemented based on interaction between a recharge terminal and a recharge server according to an embodiment of the present invention. The method may mainly include the following steps: A recharge server receives recharge recommendation request information sent by a recharge terminal, where the recharge recommendation request information includes a user identity ID corresponding to a user who needs to perform recharging and is detected by the recharge terminal; the recharge server acquires, according to historical consumption information of the user ID, a recommended recharge amount to be recommended to the user; and the recharge server sends the recommended recharge amount to the recharge terminal.

Referring to FIG. 4, a recharge method provided by an embodiment of the present invention may specifically include the following steps:

401. A recharge server receives recharge recommendation request information sent by a recharge terminal.

The recharge recommendation request information includes a user identity ID corresponding to a user who needs to perform recharging and is detected by the recharge terminal.

In the embodiment of the present invention, by operating the recharge terminal, the user generally uses the user ID to log in to a recharge platform. After each user logs in to the recharge platform, the recharge terminal may detect that a user needs to perform recharging. A communication connection is established between the recharge terminal and the recharge server. The recharge terminal sends recharge recommendation request information to the recharge server to request the recharge server to deliver a recommended recharge amount. The recharge server acquires, by using the recharge recommendation request information sent by the recharge terminal, a user ID corresponding to the user who needs to perform recharging. In the embodiment of the present invention, the recharge terminal initiates a recommendation request to the recharge server. The recharge server performs, when triggered by the recharge terminal, a step of acquiring the recommended recharge amount. For details, reference may be made to the description in the following step 402. In the embodiment of the present invention, excessive burdens will not be increased on the recharge terminal. The method may be applied to a small-sized recharge terminal that has a limited data processing capability, whereas processing of large volumes of data is implemented by a recharge server that has a stronger data processing capability.

402. The recharge server acquires, according to historical consumption information of the user ID, a recommended recharge amount to be recommended to the user.

In the embodiment of the present invention, the recharge server may acquire, from the recharge recommendation request information, the user ID that requires recharging; the recharge server acquires, according to the user ID, the historical consumption information corresponding to the user ID; and the recharge server may acquire, according to the historical consumption information, the recommended recharge amount to be recommended to the user, and send the acquired recommended recharge amount to the recharge terminal, where the historical consumption information may include a consumption amount in a historical time range before the user performs recharging. In the embodiment of the present invention, the recharge server generally acquires historical consumption information that is in a historical time range before the user performs recharging and is recorded on the recharge server. In the embodiment of the present invention, the historical consumption information recorded on the recharge server may include multiple records generated when the user performs recharging, for example, a time when the user performs recharging each time, a recharge amount, a transaction sequence number, a third-party payment tool used by the user, and consumption details generated for specific use of consumption amounts by the user. In the embodiment of the present invention, content included in the historical consumption information may refer to one or more types of the foregoing content. For example, after the user logs in to the recharge platform, the recharge server may record a successful login time of the user, and the recharge server uses the successful login time of the user as a time when the user performs recharging. Certainly, in the embodiment of the present invention, the time when the user performs recharging does not need to be a time point expressed in minute or second. Instead, the time when the user performs recharging is used as a selection point for selecting a historical time range. For example, if a time when a user performs recharging is October 5, 2013, a historical time range from October 5, 2012 to October 4, 2013 may be selected, that is, the historical time range that may be selected is 1 year. Certainly, a length of the selected historical time range needs to be determined according to a specific application scenario, and an example is provided herein for description only. For details about the implementation manner in which the recharge server acquires, by using the historical consumption information of the user ID, the recommended recharge amount to be recommended to the user, reference may be made to the description of the subsequent embodiment.

In addition, the historical consumption information in the embodiment of the present invention may further include information content related to different recharge platforms and separately recorded on the recharge server when the user performs recharging on these recharge platforms. For example, when the recharge platform is specifically a recharge platform for water, electricity, and gas management, the historical consumption information may further include consumption amounts corresponding to water (or electricity or gas) usage of the user at different tiers. For example, water usage is classified into three tiers, and a water price is different at each tier; in this case, when there is high water usage, water usage of the user crosses two tiers, and therefore, the historical consumption information may include a consumption amount generated by the user at tier 1, a consumption amount generated by the user at tier 2, a consumption amount generated by the user at tier 3, and the like.

Multiple implementation manners are available for the recharge server to acquire, by using the historical consumption information of the user ID, the recommended recharge amount to be recommended to the user, and are described in detail in the following.

In some embodiments of the present invention, the historical consumption information includes a consumption amount in a historical time range before the user performs recharging. Step 402 in which the recharge server acquires, according to historical consumption information of the user ID, a recommended recharge amount to be recommended to the user, may specifically include the following step:

M1. The recharge server calculates a statistical consumption amount of the user in the historical time range according to the consumption amount of the user in the historical time range, where the statistical consumption amount is the recommended recharge amount to be recommended to the user.

After the recharge server acquires, according to the user ID, the historical consumption information corresponding to the user ID, the recharge server may collect statistics on consumption amounts that are of the user in a historical time range and are recorded in the historical consumption information, to obtain a statistical value of the consumption amounts, namely, a statistical consumption amount, and the statistical consumption amount is used as the recommended recharge amount to be recommended to the user. In other words, the statistical consumption amount is used as a statistical value of consumption generated by the user in the historical time range and collected by the recharge server, and may reflect consumption behavior preferences of the user. Using the statistical consumption amount obtained by collecting statistics as the recommended recharge amount to be recommended to the user may provide guidance on rational consumption of the user, provide new recharge experience for the user, and bring more delights to the recharge behavior of the user. The statistical consumption amount is a statistical value obtained by the recharge server by collecting statistics on historical consumption according to the historical consumption information. There are multiple manners of implementing the statistical consumption amount. The statistical consumption amount can be obtained as long as statistics are collected based on the information content of the historical consumption information, and there may be multiple manners of collecting statistics, for example, performing averaging or performing weighted averaging on the consumption amounts of the user in the historical time range, or using a largest value, a smallest value, or an intermediate value of all the consumption amounts, which may all be used as statistical consumption amounts.

In some embodiments of the present invention, step M1 in which the recharge server calculates a statistical consumption amount of the user in the historical time range according to the consumption amount of the user in the historical time range may specifically include the following step:

M11. the recharge server divides the historical time range into multiple time periods, separately counts a total consumption amount of the user in each time period, and performs averaging calculation on the total consumption amounts in all the time periods to obtain an average consumption amount that is used as the statistical consumption amount; or

M12. the recharge server selects a largest total amount from total consumption amounts in time periods to obtain a largest consumption amount that is used as the statistical consumption amount.

The recharge server may select a time range before the user performs current recharging as the historical time range, and the recharge server divides the historical time range into multiple time periods, for example, dividing the historical time range into multiple time periods in a unit of month, separately counts a total consumption amount in each month, and performs averaging calculation on the total consumption amounts in the months to obtain an average consumption amount, or selects a largest total amount from the total consumption amounts in the months to obtain a largest consumption amount, or certainly, may select a smallest total amount from the total consumption amounts in the months to obtain a smallest consumption amount. The recharge server may use the largest consumption amount or smallest consumption amount as the statistical consumption amount. Generally, to ensure that the recommended recharge amount to be recommended to the user is enough for the user, preferably, the largest consumption amount may be used as the statistical consumption amount.

For example, the recharge terminal may divide a preset historical time range into multiple months according to the month, and separately count a total consumption amount of the user in each month in the historical time range. For example, the selected historical time range may be from July 1, 2013 to October 1, 2013, and in this case, the recharge terminal may separately count total consumption amounts of the user in July, August, and September, which are 120 yuan, 148 yuan, and 189 yuan respectively, and then perform averaging on the total consumption amounts in the three months. In this way, an average consumption amount of the user in the historical time range, namely, 152 yuan may be obtained by calculation. The recharge terminal may use the average consumption amount as the recommended recharge amount to be recommended to the user. In the embodiment described herein, a month is used as a time unit for separately counting the total consumption amount of the user in each month because the month is a data management period commonly used on a current recharge platform. Certainly, according to the foregoing embodiment provided by the present invention, in the embodiment of the present invention, a duration of a half month, two months, or the like may also be used as a calculation period. Obviously, all these technical means of implementation may be selected flexibly by a person skilled in the art according to a specific application scenario. An example is provided herein for description only, and the present invention is not limited thereto.

In addition, the average consumption amount acquired in the embodiment of the present invention is only an amount recommended to the user when the user performs recharging, and an actual recharge amount of the user is still decided by the user. In the embodiment of the present invention, the acquired recommended recharge amount is only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

For another example, the recharge server may divide a preset historical time range into multiple months according to the month, and separately count a total consumption amount of the user in each month in the historical time range. For example, the selected historical time range may be from July 1, 2013 to October 1, 2013, and in this case, the recharge server may separately count total consumption amounts of the user in July, August, and September, then find a largest monthly consumption amount from the total consumption amounts in the three months, and use the largest consumption amount as the recommended recharge amount to be recommended to the user. In the embodiment described herein, a month is used as a time unit for separately counting the total consumption amount of the user in each month because the month is a data management period commonly used on the current recharge platform. Certainly, according to the foregoing embodiment of the present invention, in the embodiment of the present invention, the recharge platform may also use a duration of a half month, two months, or the like as a calculation period. Obviously, all these technical means of implementation may be selected flexibly by a person skilled in the art according to a specific application scenario. An example is provided herein for description only, and the present invention is not limited thereto.

In addition, the largest consumption amount acquired in the embodiment of the present invention is only an amount recommended to the user when the user performs recharging, and certainly, a smallest consumption amount may also be calculated and suggested to the user. However, generally, to ensure that an account balance of the user can meet a requirement of the user, the acquired largest consumption amount is preferably suggested to the user, but an actual recharge amount of the user is still decided by the user. In the embodiment of the present invention, the acquired recommended recharge amount is only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, step M11 and step M12 are both specific implementation manners of calculating the recommended recharge amount. In an actual application, the recommended recharge amount may be calculated only according to the implementation manner recorded in step M11, or the recommended recharge amount may be calculated only according to the implementation manner recorded in step M12. Certainly, based on the implementation manners provided by the embodiment of the present invention, there may be other methods for calculating the statistical consumption amount. For example, the recommended recharge amount may be calculated with reference to step M11 and step M12 jointly. Specifically, after calculating a sum of the largest consumption amount and the average consumption amount, the recharge server may calculate an average value of the largest consumption amount and the average consumption amount, and then use the acquired average value as the statistical consumption amount, where the statistical consumption amount is the recommended recharge amount to be recommended to the user.

403. The recharge server sends the recommended recharge amount to the recharge terminal.

In the embodiment of the present invention, after the recharge server acquires, according to the historical consumption information of the user ID, the recommended recharge amount to be recommended to the user, when the user performs recharging, the recharge server sends the recommended recharge amount to the recharge terminal, and the recharge terminal recommends the recommended recharge amount to the user. Therefore, the user may determine a current recharge amount by referring to the recommended recharge amount. The recommended recharge amount is only an amount recommended to the user when the user performs recharging, and an actual recharge amount of the user is still decided by the user. In the embodiment of the present invention, the acquired recommended recharge amount is only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, after the recharge server acquires the recommended recharge amount to be recommended to the user, the recharge server may further adjust the recommended recharge amount, so that an adjusted recommended recharge amount can better meet a requirement of the user and improve accuracy of the recommendation to the user. Multiple implementation manners may be used for the recharge server to adjust the recommended recharge amount. The following uses an example for description.

In some embodiments of the present invention, as may be known according to the descriptions of step M11 and step M12, the recharge server divides the historical time range into multiple time periods, and uses the average consumption amount or largest consumption amount obtained by collecting statistics as the statistical consumption amount, where the statistical consumption amount is the recommended recharge amount acquired by the recharge server and to be recommended to the user. Based on the foregoing implementation manner of dividing the historical time range into multiple time periods, in the recharge method provided by the present invention based on a recharge server side, after the recharge server acquires the recommended recharge amount to be recommended to the user, the method may further include the following steps:

N1. The recharge server acquires a gradual consumption change adjustment factor according to a total consumption amount in each time period, where the gradual consumption change adjustment factor is an amount increase or decrease trend of the total consumption amounts in all the time periods.

N2. The recharge server performs an amount increase or decrease adjustment on the acquired recommended recharge amount according to the gradual consumption change adjustment factor to obtain an adjusted recommended recharge amount.

Based on the foregoing implementation manner of step N1 and step N2, in the recharge method provided by the embodiment of the present invention, step 403 in which the recharge server sends the acquired recommended recharge amount to the recharge terminal may include:
sending, by the recharge server, the adjusted recommended recharge amount to the recharge terminal.

The recharge server analyzes the amount increase or decrease trend of the total consumption amounts in all the time periods to generate the gradual consumption change adjustment factor, where the gradual consumption change adjustment factor is used to indicate an increase or decrease trend of the consumption amounts of the user in the historical time range. In an actual application, the gradual consumption change adjustment factor may be specifically reflected by a numeric value. For example, the selected historical time range may be from July 1, 2013 to October 1, 2013, and in this case, the recharge terminal may separately count total consumption amounts of the user in July, August, and September, which are 120 yuan, 148 yuan, and 189 yuan respectively, and then perform averaging on the total consumption amounts in the three months. In this way, an average consumption amount of the user in the historical time range, namely, 152 yuan, may be obtained by calculation. The recharge terminal may use the average consumption amount as the recommended recharge amount to be recommended to the user. The recharge terminal finds, by analyzing an increase or decrease trend of the total consumption amounts in July, August, and September, that the total consumption amounts of the user in the three months show an increase trend. Then, the recharge terminal generates a gradual consumption change adjustment factor according to the amount increase or decrease trend obtained by analysis. For example, a value of the gradual consumption change adjustment factor may be 1.1 or 1.3, and in this case, the recharge terminal may obtain the adjusted recommended recharge amount by multiplying the calculated recommended recharge amount (152 yuan) by the generated gradual consumption change adjustment factor, for example, obtaining 197 yuan by 152 yuan * 1.3. In the embodiment of the present invention, by determining a consumption behavior trend of the user, an adjustment on the acquired recommended recharge amount may be implemented; the adjustment on the recommended recharge amount according to the gradual consumption change adjustment factor may implement an accurate recommended amount to the user.

It should be noted that multiple manners are available for the recharge server to adjust the acquired recommended recharge amount. The adjustment on the recommended recharge amount based on the gradual consumption change adjustment factor is described in the foregoing embodiment. The following describes other manners of adjusting the recommended recharge amount. In the recharge method provided by the present invention based on the recharge server side, after the recharge server acquires the recommended recharge amount to be recommended to the user, the method may further include the following steps:

O1. The recharge server determines whether a time when the user performs recharging meets a preset time attribute.

02. If the time when the user performs recharging meets the preset time attribute, the recharge server performs an amount increase or decrease adjustment on the acquired recommended recharge amount according to a time attribute adjustment factor corresponding to the time attribute to obtain an adjusted recommended recharge amount.

Based on the foregoing implementation manner of steps O1 and 02, in the recharge method provided by the embodiment of the present invention, step 403 in which the recharge server sends the acquired recommended recharge amount to the recharge terminal may include:
sending, by the recharge server, the adjusted recommended recharge amount to the recharge terminal.

In step O1, the recharge server determines whether the time when the user performs recharging meets the preset time attribute. In the embodiment of the present invention, the time when the user performs recharging, which is detected by the recharge terminal, does not need to be a time expressed in minute or second. Instead, the time when the user performs recharging is used as a selection point for selecting a historical time range. By detecting the time when the user performs recharging, a time environment in which the user may perform recharging may be acquired. In step 02, when the time when the user performs recharging meets the preset time attribute, the recharge server acquires the time attribute adjustment factor corresponding to the time attribute, and then the recharge server performs the amount increase or decrease adjustment on the acquired recommended recharge amount according to the time attribute adjustment factor to obtain the adjusted recommended recharge amount. The preset time attribute may be a specific time or time range. For example, a winter vacation, a summer vacation, the Spring Festival, and the May Day may all be set as a specific time attribute. If the time when the user performs recharging meets the specific time attribute, the recharge server may use the time attribute adjustment factor corresponding to the time attribute to adjust the recommended recharge amount, so as to obtain the adjusted recommended recharge amount.

Specifically, step 02 in which the recharge server performs an amount increase or decrease adjustment on the acquired recommended recharge amount according to a time attribute adjustment factor corresponding to the time attribute may specifically include:

021. The recharge server searches a historical time range for a historical time that meets the time attribute.

022. The recharge server acquires the time attribute adjustment factor according to a proportional relationship between a consumption amount of the user at the historical time and consumption amounts of the user at times except the historical time in the historical time range.

023. The recharge server multiplies the acquired recommended recharge amount by the acquired time attribute adjustment factor.

The recharge server may acquire the time attribute adjustment factor in the manner recorded in step 021 and step 022 and use the time attribute adjustment factor to perform the amount increase or decrease adjustment on the acquired recommended recharge amount by performing step 023. The recharge server finds the historical time that meets the time attribute from the historical time range, that is, the historical time in the historical time range and the time when the user performs recharging have the same time attribute. In step 022, the recharge server acquires the time attribute adjustment factor according to the consumption amount of the user at the historical time and the consumption amounts of the user at the times except the historical time in the historical time range. In the manner of predicting, based on the historical consumption information generated by the user, a consumption behavior of the user when the user performs recharging, the time attribute adjustment factor is an adjustment parameter for predicting user recharging. In step 023, the time attribute adjustment factor may be used to adjust the recommended recharge amount. The recommended recharge amount acquired by predicting, based on the historical consumption information generated by the user, the consumption behavior of the user when the user performs recharging, may exactly comply with a future consumption behavior of the user. The recommended recharge amount recommended to the user can play a role of guiding the user, and meet the requirement of the user.

In addition, in step 02 in the embodiment of the present invention, the performing an adjustment on the acquired recommended recharge amount according to a time attribute adjustment factor is only one implementation manner of adjusting the recommended recharge amount. In addition, in the embodiment of the present invention, after the adjusted recommended recharge amount is recommended to the user, an actual recharge amount is still determined by the user. The acquired recommended recharge amount and the adjustment on the recommended recharge amount in the embodiment of the present invention are only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, and time attribute adjustment factor may be used to jointly determine the recommended recharge amount that should be recommended to the user. For example, after the largest consumption amount and average consumption amount are calculated respectively, an average value of the largest consumption amount and average consumption amount is calculated and used as a recommended recharge amount, and the acquired recommended recharge amount is adjusted dynamically according to the time attribute adjustment factor, and finally the adjusted recommended recharge amount is sent to the user.

In other embodiments of the present invention, the historical consumption information may further include consumption details of the user in the historical time range. In this case, after step 402 in which the recharge server acquires, according to historical consumption information of the user ID, a recommended recharge amount to be recommended to the user, the method may further include the following steps:

P1. The recharge server acquires, according to the consumption details, all products consumed by the user in the historical time range.

P2. The recharge server acquires whether there is a product update on the products consumed by the user.

P3. If there is a product update, the recharge server performs an amount increase or decrease adjustment on the acquired recommended recharge amount according to an amount corresponding to an updated product to obtain an adjusted recommended recharge amount.

Based on the foregoing implementation manner of steps P1, P2, and P3, in the recharge method provided by the embodiment of the present invention, step 403 in which the recharge server sends the acquired recommended recharge amount to the recharge terminal may include:
sending, by the recharge server, the adjusted recommended recharge amount to the recharge terminal.

In addition to the consumption amount of the user in the historical time range before the user performs recharging, the historical consumption information may also include the consumption details of the user in the historical time range. The consumption details refer to information such as specific products on which the consumption amount generated by the user in the historical time range is used, and a consumption time and a consumption amount of each product.

In addition, in the embodiment of the present invention, that the recharge server performs an amount increase or decrease adjustment on the acquired recommended recharge amount according to an amount corresponding to an updated product in step P3 is only one implementation manner of adjusting the recommended recharge amount. In addition, in the embodiment of the present invention, after the adjusted recommended recharge amount is recommended to the user, an actual recharge amount is still determined by the user. The acquired recommended recharge amount and the adjustment on the recommended recharge amount in the embodiment of the present invention are only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, time attribute adjustment factor, and consumption amount of the user on the updated product in the historical time range may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor. After the time attribute adjustment factor is used to adjust the recommended recharge amount, the consumption amount of the user on the updated product in the historical time range is used to adjust again the recommended recharge amount that is adjusted by using the time attribute adjustment factor. By using a combination of multiple adjustment manners, a determined recommended recharge amount to be recommended to the user can implement a more accurate recommendation of a recharge amount to the user.

In other embodiments of the present invention, after step 402 in which the recharge server acquires, according to historical consumption information of the user ID, a recommended recharge amount to be recommended to the user, the method may further include the following step:

Q1. The recharge server performs an amount increase or decrease adjustment on the acquired recommended recharge amount according to a recharge-free duration factor to obtain an adjusted recommended recharge amount.

Based on the foregoing implementation manner of step Q1, in the recharge method provided by the embodiment of the present invention, step 403 in which the recharge server sends the acquired recommended recharge amount to the recharge terminal may include:
sending, by the recharge server, the adjusted recommended recharge amount to the recharge terminal.

The recharge-free duration factor is used to indicate a duration of sustaining a free-of-recharge condition for the user. The recharge server performs the amount increase or decrease adjustment on the recommended recharge amount according to the recharge-free duration factor, for example, multiplies the recommended recharge amount acquired by the recharge server in step 402 by the recharge-free duration factor to obtain an adjusted recommended recharge amount.

In other embodiments of the present invention, before step Q1 in which the recharge server performs an amount increase or decrease adjustment on the acquired recommended recharge amount according to a recharge-free duration, the method may further include the following steps:

Q0a. The recharge server receives a recharge-free duration that is entered by the user and acquired by the recharge terminal.

Q0b. The recharge server generates the recharge-free duration factor according to the recharge-free duration.

In the embodiment of the present invention, the recharge terminal may further display a recommendation option on a recharge interface to the user, where a recharge-free duration parameter is set. A default recharge-free duration parameter may be preset, or a value of the recharge-free duration parameter may be entered by the user. The recharge-free duration parameter refers to a duration in which the recharge amount after the user performs recharging may sustain the free-of-recharge condition for the user. For example, the default recharge-free duration parameter may be set to 3 months, and in this case, by performing step Q0b, the recharge server may generate a recharge-free duration factor of 3 according to the recharge-free duration. The recommended recharge amount acquired in step 402 is adjusted according to the recharge-free duration factor, which may guarantee that the recharge amount of the user can last three months and that the user does not need to perform recharging again within the three months. The recommended recharge amount acquired by predicting, based on the historical consumption information generated by the user, the consumption behavior of the user when the user performs recharging, may exactly comply with a future consumption behavior of the user. The recommended recharge amount to be recommended to the user can play a role of guiding the user, and meet the requirement of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, time attribute adjustment factor, and consumption amount of the user on the updated product in the historical time range may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor. After the time attribute adjustment factor is used to adjust the recommended recharge amount, the consumption amount of the user on the updated product in the historical time range is used to adjust again the recommended recharge amount that is adjusted by using the time attribute adjustment factor. Then the recharge-free duration factor may be further used to adjust again the adjusted recommended recharge amount. By using a combination of multiple adjustment manners, a determined recommended recharge amount to be recommended to the user can implement a more accurate recommendation of a recharge amount to the user.

In other embodiments of the present invention, after step 402 in which the recharge server acquires, according to historical consumption information of the user ID, a recommended recharge amount to be recommended to the user, the method may further include the following steps:

R1. The recharge server acquires preference push information corresponding to the user ID.

R2. The recharge server performs an amount increase or decrease adjustment on the acquired recommended recharge amount according to the preference push information to obtain an adjusted recommended recharge amount.

Based on the foregoing implementation manner of steps R1 and R2, in the recharge method provided by the embodiment of the present invention, step 403 in which the recharge server sends the acquired recommended recharge amount to the recharge terminal may include:
sending, by the recharge server, the adjusted recommended recharge amount to the recharge terminal.

In step R1, the recharge server acquires subscribed preference push information of the user ID corresponding to the user, where the preference push information may be determined by a subscription relationship between a third-party application and the user. That is, when the third-party application has recharge preference information, the third-party application sends the recharge preference information to the recharge server, and the recharge server pushes the recharge preference information to the recharge terminal and then further to the user, so that the user can learn latest preference information. In the embodiment of the present invention, the recharge server may perform detection on the user ID. When receiving the recharge preference information pushed by the third-party application, the recharge server may perform, according to the recharge preference information, an amount increase or decrease adjustment on the recommended recharge amount acquired in step 402, and therefore obtain an adjusted recommended recharge amount.

In addition, in the embodiment of the present invention, that the recharge server performs an amount increase or decrease adjustment on the acquired recommended recharge amount according to the preference push information in step R2 is only one implementation manner of adjusting the recommended recharge amount. In addition, in the embodiment of the present invention, after the adjusted recommended recharge amount is recommended to the user, an actual recharge amount is still determined by the user. The acquired recommended recharge amount and the adjustment on the recommended recharge amount in the embodiment of the present invention are only a suggestion for the user, which may, as opposed to the prior art in which a recharge amount determined by a user is received passively, provide guidance on a recharge behavior of the user, guide the user to rational consumption, provide new recharge experience for the user, and bring more delights to the recharge behavior of the user.

It should be noted that, in some embodiments of the present invention, the manner of acquiring the recommended recharge amount and the manner of adjusting the recommended recharge amount may be combined for implementation. In an actual application, the average consumption amount, largest consumption amount, time attribute adjustment factor, and consumption amount of the user on the updated product in the historical time range may be used to jointly determine the recommended recharge amount that should be recommended to the user. For example, after the largest consumption amount and average consumption amount are calculated separately, an average value of the largest consumption amount and average consumption amount is calculated and used as a recommended recharge amount, and the acquired recommended recharge amount is adjusted dynamically according to the time attribute adjustment factor. After the time attribute adjustment factor is used to adjust the recommended recharge amount, the consumption amount of the user on the updated product in the historical time range is used to adjust again the recommended recharge amount that is adjusted by using the time attribute adjustment factor. Then the recharge-free duration factor may be further used to adjust again the adjusted recommended recharge amount. Then the preference push information may be further used to adjust again the adjusted recommended recharge amount. By using a combination of multiple adjustment manners, a determined recommended recharge amount to be recommended to the user can implement a more accurate recommendation of a recharge amount to the user.

It should be noted that, in the foregoing embodiment of the present invention, after step 402 in which the recharge server acquires, according to historical consumption information of the user ID, a recommended recharge amount to be recommended to the user, the recharge server may adjust the acquired recommended recharge amount in multiple implementation manners. The multiple implementation manners of the adjustment are described in detail. In an actual application, the adjustment may be implemented, with reference to a specific application scenario, by selecting one implementation manner from the multiple implementation manners or combining several implementation manners of the multiple implementation manners, for example, the adjustment manner recorded in steps M1 and M2, the adjustment manner recorded in steps N1 and N2, the adjustment manner recorded in steps O1, 02, and 03, the adjustment manner recorded in step P1, and the adjustment manner recorded in steps Q1 and Q2 in the embodiment of the present invention. Each adjustment manner may be corresponding to one matching option, and in this case, there may be five matching options: the gradual consumption change adjustment factor, the time attribute adjustment factor, the consumption amount of the user on the updated product in the historical time range, the recharge-free duration factor, and the preference push information. A recommended recharge amount may be determined according to one matching option or multiple matching options of the five matching options jointly. Therefore, a corresponding recommended recharge amount may be calculated according to different matching option combinations to meet multiple requirements of the user. Suggesting an amount that should be recharged to the user may, as opposed to the prior art in which a recharge amount determined by a user is received passively, provide guidance on a recharge behavior of the user, guide the user to rational consumption, provide new recharge experience for the user, and bring more delights to the recharge behavior of the user.

As may be known from the description of the present invention in the foregoing embodiment, when detecting that a user needs to perform recharging, a recharge terminal sends recharge recommendation request information to a recharge server; the recharge server acquires, according to the received recharge recommendation request information, a user ID for which recharging is required, and acquires, according to the user ID, historical consumption information of the user ID; the recharge server acquires, according to the historical consumption information of the user ID, a recommended recharge amount to be recommended to the user; the recharge server sends the acquired recommended recharge amount to the recharge terminal; and the recharge terminal recommends the received recommended recharge amount to the user. Therefore, the user may determine a current recharge amount according to the received recommended recharge amount. In the embodiment of the present invention, the recharge terminal may recommend an amount that should be recharged to the user by using the recommended recharge amount, thereby implementing intelligent recharging.

It should be noted that, for brief description, the foregoing method embodiments are represented as a series of actions. However, a person skilled in the art should appreciate that the present invention is not limited to the described sequence of the actions, because according to the present invention, some steps may be performed in another sequence or simultaneously. In addition, a person skilled in the art should also understand that all the embodiments described in this specification belong to exemplary embodiments, and the involved actions and modules are not necessarily mandatory to the present invention.

For better implementation of the foregoing solutions of the embodiments of the present invention, the following further provides related apparatuses configured to implement the foregoing solutions.

Referring to FIG. 5-a, a recharge terminal 500 provided by an embodiment of the present invention may include a historical consumption acquiring module 501, a recommended amount acquiring module 502, and a recommended amount sending module 503, where:
the historical consumption acquiring module 501 is configured to: when it is detected that a user needs to perform recharging, acquire, by the recharge terminal according to a user identity ID corresponding to the user, historical consumption information of the user ID;
the recommended amount acquiring module 502 is configured to acquire, according to the historical consumption information of the user ID, a recommended recharge amount to be recommended to the user; and
the recommended amount sending module 503 is configured to recommend the acquired recommended recharge amount to the user, so that the user determines a recharge amount according to the recommended recharge amount.

In some embodiments of the present invention, the historical consumption information includes a consumption amount in a historical time range before the user performs recharging; and the recommended amount acquiring module 502 includes a statistical amount acquiring submodule, configured to calculate a statistical consumption amount of the user in the historical time range according to the consumption amount of the user in the historical time range, where the statistical consumption amount is the recommended recharge amount to be recommended to the user.

Specifically, the statistical amount acquiring submodule is specifically configured to: divide the historical time range into multiple time periods, separately count a total consumption amount of the user in each time period, and perform averaging calculation on the total consumption amounts in all the time periods to obtain an average consumption amount that is used as the statistical consumption amount; or select a largest total amount from total consumption amounts in time periods to obtain a largest consumption amount that is used as the statistical consumption amount.

Referring to FIG. 5-b, in other embodiments of the present invention, the recharge terminal 500 further includes a gradual consumption change adjustment factor acquiring module 504 and a first recommended amount adjusting module 505, where:
the gradual consumption change adjustment factor acquiring module 504 is configured to acquire a gradual consumption change adjustment factor according to the total consumption amount in each time period after the recommended amount acquiring module acquires, according to the historical consumption information of the user ID, the recommended recharge amount to be recommended to the user, where the gradual consumption change adjustment factor is an amount increase or decrease trend of the total consumption amounts in all the time periods;
the first recommended amount adjusting module 505 is configured to perform an amount increase or decrease adjustment on the acquired recommended recharge amount according to the gradual consumption change adjustment factor to obtain an adjusted recommended recharge amount; and
the recommended amount sending module 503 is specifically configured to recommend the adjusted recommended recharge amount to the user.

Referring to FIG. 5-c, in other embodiments of the present invention, compared with the recharge terminal shown in FIG. 5-a, the recharge terminal 500 further includes a time attribute determining module 506 and a second recommended amount adjusting module 507, where:
the time attribute determining module 506 is configured to: after the recommended amount acquiring module acquires, according to the historical consumption information of the user ID, the recommended recharge amount to be recommended to the user, determine whether a time when the user performs recharging meets a preset time attribute;
the second recommended amount adjusting module 507 is configured to: when the time when the user performs recharging meets the preset time attribute, perform an amount increase or decrease adjustment on the acquired recommended recharge amount according to a time attribute adjustment factor corresponding to the time attribute to obtain an adjusted recommended recharge amount; and
the recommended amount sending module 503 is specifically configured to recommend the adjusted recommended recharge amount to the user.

Specifically, referring to FIG. 5-d, the second recommended amount adjusting module 507 provided by the embodiment of the present invention includes:
a historical time searching submodule 5071, configured to search the historical time range for a historical time that meets the time attribute;
a time attribute adjustment factor acquiring submodule 5072, configured to acquire the time attribute adjustment factor according to a proportional relationship between a consumption amount of the user at the historical time and consumption amounts of the user at times except the historical time in the historical time range; and
a time attribute adjusting submodule 5073, configured to multiply the acquired recommended recharge amount by the acquired time attribute adjustment factor.

In other embodiments of the present invention, the historical consumption information further includes consumption details of the user in the historical time range; and referring to FIG. 5-e, compared with the recharge terminal shown in FIG. 5-a, the recharge terminal 500 further includes a consumed product acquiring module 508, a product update determining module 509, and a third recommended amount adjusting module 510, where:
the consumed product acquiring module 508 is configured to: after the recommended amount acquiring module 502 acquires, according to the historical consumption information of the user ID, the recommended recharge amount to be recommended to the user, acquire, according to the consumption details, all products consumed by the user in the historical time range;
the product update determining module 509 is configured to acquire whether there is a product update on the products consumed by the user;
the third recommended amount adjusting module 510 is configured to: when there is a product update, perform an amount increase or decrease adjustment on the acquired recommended recharge amount according to an amount corresponding to an updated product to obtain an adjusted recommended recharge amount; and
the recommended amount sending module 503 is specifically configured to recommend the adjusted recommended recharge amount to the user.

Referring to FIG. 5-f, compared with the recharge terminal shown in FIG. 5-a, the recharge terminal 500 further includes a fourth recommended amount adjusting module 511, where:
the fourth recommended amount adjusting module 511 is configured to: after the recommended amount acquiring module acquires, according to the historical consumption information of the user ID, the recommended recharge amount to be recommended to the user, perform an amount increase or decrease adjustment on the acquired recommended recharge amount according to a recharge-free duration factor to obtain an adjusted recommended recharge amount; and
the recommended amount sending module 503 is specifically configured to recommend the adjusted recommended recharge amount to the user.

Referring to FIG. 5-g, compared with the recharge terminal shown in FIG. 5-f, the recharge terminal 500 further includes a recharge-free duration acquiring module 512 and a recharge-free duration factor generating module 513, where:
the recharge-free duration acquiring module 512 is configured to: before the fourth recommended amount adjusting module 511 performs the amount increase or decrease adjustment on the acquired recommended recharge amount according to the recharge-free duration, acquire a recharge-free duration entered by the user; and
the recharge-free duration factor generating module 513 is configured to generate the recharge-free duration factor according to the recharge-free duration.

Referring to FIG. 5-h, compared with the recharge terminal shown in FIG. 5-a, the recharge terminal 500 further includes a preference acquiring module 514 and a fifth recommended amount adjusting module 515, where:
the preference acquiring module 514 is configured to acquire, from a recharge server, preference push information corresponding to the user ID after the recommended amount acquiring module acquires, according to the historical consumption information of the user ID, the recommended recharge amount to be recommended to the user;
the fifth recommended amount adjusting module 515 is configured to perform an amount increase or decrease adjustment on the acquired recommended recharge amount according to the preference push information to obtain an adjusted recommended recharge amount; and
the recommended amount sending module 503 is specifically configured to recommend the adjusted recommended recharge amount to the user.

Referring to FIG. 5-i, the historical consumption acquiring module 501 includes:
a consumption querying submodule 5011, configured to send consumption query request information to the recharge server, where the consumption query request information includes the user ID corresponding to the user; and
a historical consumption receiving submodule 5012, configured to receive the historical consumption information that is returned by the recharge server and of the user ID.

As may be known from the description of the present invention in the foregoing embodiment, when it is detected that a user needs to perform recharging, a historical consumption acquiring module acquires, according to a user ID corresponding to the user, historical consumption information of the user ID; then a recommended amount acquiring module acquires, according to the historical consumption information of the user ID, a recommended recharge amount to be recommended to the user; and a recommended amount sending module recommends the acquired recommended recharge amount to the user, so that the user may determine a current recharge amount according to the received recommended recharge amount. In the embodiment of the present invention, the recharge terminal may recommend an amount that should be recharged to the user by using the recommended recharge amount, thereby implementing intelligent recharging.

Referring to FIG. 6-a, another recharge terminal 600 provided by an embodiment of the present invention may include a recharge recommendation requesting module 601, a recommended amount receiving module 602, and a recommended amount sending module 603, where:
the recharge recommendation requesting module 601 is configured to send recharge recommendation request information to a recharge server when it is detected that a user needs to perform recharging, where the recharge recommendation request information includes a user identity ID of the user;
the recommended amount receiving module 602 is configured to receive a recommended recharge amount that is acquired by the recharge server according to the user ID; and
the recommended amount sending module 603 is configured to recommend the received recommended recharge amount to the user, so that the user determines a recharge amount according to the recommended recharge amount.

Referring to FIG. 6-b, in other embodiments of the present invention, compared with the recharge terminal shown in FIG. 6-a, the recharge terminal 600 further includes a historical consumption receiving module 604, a time period dividing module 605, a gradual consumption change adjustment factor acquiring module 606, and a first recommended amount adjusting module 607, where:
the historical consumption receiving module 604 is configured to: after the recommended amount receiving module 602 receives the recommended recharge amount that is acquired by the recharge server according to the user ID, receive historical consumption information that is sent by the recharge server and corresponding to the user ID, where the historical consumption information includes a consumption amount in a historical time range before the user performs recharging;
the time period dividing module 605 is configured to divide the historical time range into multiple time periods;
the gradual consumption change adjustment factor acquiring module 606 is configured to acquire a gradual consumption change adjustment factor according to a total consumption amount in each time period, where the gradual consumption change adjustment factor is an amount increase or decrease trend of the total consumption amounts in all the time periods;
the first recommended amount adjusting module 607 is configured to perform an amount increase or decrease adjustment on the acquired recommended recharge amount according to the gradual consumption change adjustment factor to obtain an adjusted recommended recharge amount; and
the recommended amount sending module 603 is specifically configured to recommend the adjusted recommended recharge amount to the user.

Referring to FIG. 6-c, in other embodiments of the present invention, compared with the recharge terminal shown in FIG. 6-a, the recharge terminal 600 further includes a time attribute determining module 608 and a second recommended amount adjusting module 609, where:
the time attribute determining module 608 is configured to: after the recommended amount receiving module receives the recommended recharge amount that is acquired by the recharge server according to the user ID, determine whether a time when the user performs recharging meets a preset time attribute;
the second recommended amount adjusting module 609 is configured to: when the time when the user performs recharging meets the preset time attribute, perform an amount increase or decrease adjustment on the acquired recommended recharge amount according to a time attribute adjustment factor corresponding to the time attribute to obtain an adjusted recommended recharge amount; and
the recommended amount sending module 603 is specifically configured to recommend the adjusted recommended recharge amount to the user.

Specifically, referring to FIG. 6-d, the second recommended amount adjusting module 609 includes:
a historical time searching submodule 6091, configured to search a historical time range for a historical time that meets the time attribute;
a time attribute adjustment factor acquiring submodule 6092, configured to acquire the time attribute adjustment factor according to a proportional relationship between a consumption amount of the user at the historical time and consumption amounts of the user at times except the historical time in the historical time range; and
a time attribute adjusting submodule 6093, configured to multiply the acquired recommended recharge amount by the acquired time attribute adjustment factor.

Referring to FIG. 6-e, in other embodiments of the present invention, compared with the recharge terminal shown in FIG. 6-a, the recharge terminal 600 further includes a historical consumption receiving module 604, a consumed product acquiring module 610, a product update determining module 611, and a third recommended amount adjusting module 612, where:
the historical consumption receiving module 604 is configured to: after the recommended amount receiving module receives the recommended recharge amount that is acquired by the recharge server according to the user ID, receive historical consumption information that is sent by the recharge server and corresponding to the user ID, where the historical consumption information includes consumption details of the user in a historical time range;
the consumed product acquiring module 610 is configured to acquire, according to the consumption details, all products consumed by the user in the historical time range;
the product update determining module 611 is configured to acquire whether there is a product update on the products consumed by the user;
the third recommended amount adjusting module 612 is configured to: when there is a product update, perform an amount increase or decrease adjustment on the acquired recommended recharge amount according to an amount corresponding to an updated product to obtain an adjusted recommended recharge amount; and
the recommended amount sending module 603 is specifically configured to recommend the adjusted recommended recharge amount to the user.

Referring to FIG. 6-f, in other embodiments of the present invention, compared with the recharge terminal shown in FIG. 6-a, the recharge terminal 600 further includes a fourth recommended amount adjusting module 613, where:
the fourth recommended amount adjusting module 613 is configured to: after the recommended amount receiving module receives the recommended recharge amount that is acquired by the recharge server according to the user ID, perform an amount increase or decrease adjustment on the acquired recommended recharge amount according to a recharge-free duration factor to obtain an adjusted recommended recharge amount; and
the recommended amount sending module 603 is specifically configured to recommend the adjusted recommended recharge amount to the user.

Referring to FIG. 6-g, in other embodiments of the present invention, compared with the recharge terminal shown in FIG. 6-f, the recharge terminal 600 further includes a recharge-free duration acquiring module 614 and a recharge-free duration factor generating module 615, where:
the recharge-free duration acquiring module 614 is configured to: before the fourth recommended amount adjusting module performs the amount increase or decrease adjustment on the acquired recommended recharge amount according to the recharge-free duration, acquire a recharge-free duration entered by the user; and
the recharge-free duration factor generating module 615 is configured to generate the recharge-free duration factor according to the recharge-free duration.

Referring to FIG. 6-h, in other embodiments of the present invention, compared with the recharge terminal shown in FIG. 6-a, the recharge terminal 600 further includes a preference acquiring module 616 and a fifth recommended amount adjusting module 617, where:
the preference acquiring module 616 is configured to acquire, from the recharge server, preference push information corresponding to the user ID after the recommended amount receiving module receives the recommended recharge amount that is acquired by the recharge server according to the user ID;
the fifth recommended amount adjusting module 617 is configured to perform an amount increase or decrease adjustment on the acquired recommended recharge amount according to the preference push information to obtain an adjusted recommended recharge amount; and
the recommended amount sending module 603 is specifically configured to recommend the adjusted recommended recharge amount to the user.

As may be known from the description of the present invention in the foregoing embodiment, a recharge recommendation requesting module sends recharge recommendation request information to a recharge server when it is detected that a user needs to perform recharging; the recharge server acquires, according to the received recharge recommendation request information, a user ID for which recharging is required, and acquires, according to the user ID, historical consumption information of the user ID; the recharge server acquires, according to the historical consumption information of the user ID, a recommended recharge amount to be recommended to the user; the recharge server sends the acquired recharge recommendation amount to a recommended amount receiving module; and a recommended amount sending module recommends the received recommended recharge amount to the user, so that the user may determine a current recharge amount according to the received recommended recharge amount. In the embodiment of the present invention, the recharge terminal may recommend an amount that should be recharged to the user by using the recommended recharge amount, thereby implementing intelligent recharging.

Referring to FIG. 7-a, another recharge server 700 provided by an embodiment of the present invention may include a recharge recommendation receiving module 701, a recommended amount acquiring module 702, and a recommended amount sending module 703, where:
the recharge recommendation receiving module 701 is configured to receive recharge recommendation request information sent by a recharge terminal, where the recharge recommendation request information includes a user identity ID corresponding to a user who needs to perform recharging and is detected by the recharge terminal;
the recommended amount acquiring module 702 is configured to acquire, according to historical consumption information of the user ID, a recommended recharge amount to be recommended to the user; and
the recommended amount sending module 703 is configured to send the recommended recharge amount to the recharge terminal.

In some embodiments of the present invention, the historical consumption information includes a consumption amount in a historical time range before the user performs recharging; and the recommended amount acquiring module includes a statistical amount acquiring submodule, configured to calculate a statistical consumption amount of the user in the historical time range according to the consumption amount of the user in the historical time range, where the statistical consumption amount is the recommended recharge amount to be recommended to the user.

Specifically, the statistical amount acquiring submodule is specifically configured to: divide the historical time range into multiple time periods, separately count a total consumption amount of the user in each time period, and perform averaging calculation on the total consumption amounts in all the time periods to obtain an average consumption amount that is used as the statistical consumption amount; or select a largest total amount from total consumption amounts in time periods to obtain a largest consumption amount that is used as the statistical consumption amount.

In some embodiments of the present invention, referring to FIG. 7-b, compared with the recharge server shown in FIG. 7-a, the recharge server 700 further includes a gradual consumption change adjustment factor acquiring module 704 and a first recommended amount adjusting module 705, where:
the gradual consumption change adjustment factor acquiring module 704 is configured to acquire a gradual consumption change adjustment factor according to the total consumption amount in each time period after the recommended amount acquiring module acquires, according to the historical consumption information of the user ID, the recommended recharge amount to be recommended to the user, where the gradual consumption change adjustment factor is an amount increase or decrease trend of the total consumption amounts in all the time periods;
the first recommended amount adjusting module 705 is configured to perform an amount increase or decrease adjustment on the acquired recommended recharge amount according to the gradual consumption change adjustment factor to obtain an adjusted recommended recharge amount; and
the recommended amount sending module 703 is specifically configured to send the adjusted recommended recharge amount to the recharge terminal.

In some embodiments of the present invention, referring to FIG. 7-c, compared with the recharge server shown in FIG. 7-a, the recharge server 700 further includes a time attribute determining module 706 and a second recommended amount adjusting module 707, where:
the time attribute determining module 706 is configured to: after the recommended amount acquiring module acquires, according to the historical consumption information of the user ID, the recommended recharge amount to be recommended to the user, determine whether a time when the user performs recharging meets a preset time attribute;
the second recommended amount adjusting module 707 is configured to: when the time when the user performs recharging meets the preset time attribute, perform an amount increase or decrease adjustment on the acquired recommended recharge amount according to a time attribute adjustment factor corresponding to the time attribute to obtain an adjusted recommended recharge amount; and
the recommended amount sending module 703 is specifically configured to send the adjusted recommended recharge amount to the recharge terminal.

Specifically, referring to FIG. 7-d, the second recommended amount adjusting module 707 includes:
a historical time searching submodule 7071, configured to search a historical time range for a historical time that meets the time attribute;
a time attribute adjustment factor acquiring submodule 7072, configured to acquire the time attribute adjustment factor according to a proportional relationship between a consumption amount of the user at the historical time and consumption amounts of the user at times except the historical time in the historical time range; and
a time attribute adjusting submodule 7073, configured to multiply the acquired recommended recharge amount by the acquired time attribute adjustment factor.

In some embodiments of the present invention, the historical consumption information further includes consumption details of the user in a historical time range; and referring to FIG. 7-e, compared with the recharge server shown in FIG. 7-a, the recharge server 700 further includes a consumed product acquiring module 708, a product update determining module 709, and a third recommended amount adjusting module 710, where:
the consumed product acquiring module 708 is configured to acquire, by the recommended amount acquiring module according to the consumption details, all products consumed by the user in the historical time range;
the product update determining module 709 is configured to acquire whether there is a product update on the products consumed by the user;
the third recommended amount adjusting module 710 is configured to: when there is a product update, perform an amount increase or decrease adjustment on the acquired recommended recharge amount according to an amount corresponding to an updated product to obtain an adjusted recommended recharge amount; and
the recommended amount sending module 703 is specifically configured to send the adjusted recommended recharge amount to the recharge terminal.

In some embodiments of the present invention, referring to FIG. 7-f, compared with the recharge server shown in FIG. 7-a, the recharge server 700 further includes a fourth recommended amount adjusting module 711, where:
the fourth recommended amount adjusting module 711 is configured to: after the recommended amount acquiring module acquires, according to the historical consumption information of the user ID, the recommended recharge amount to be recommended to the user, perform an amount increase or decrease adjustment on the acquired recommended recharge amount according to a recharge-free duration factor to obtain an adjusted recommended recharge amount; and
the recommended amount sending module 703 is specifically configured to send the adjusted recommended recharge amount to the recharge terminal.

In some embodiments of the present invention, referring to FIG. 7-g, compared with the recharge server shown in FIG. 7-f, the recharge server 700 further includes a recharge-free duration acquiring module 712 and a recharge-free duration factor generating module 713, where:
the recharge-free duration acquiring module 712 is configured to: before the amount increase or decrease adjustment is performed on the acquired recommended recharge amount according to the recharge-free duration, receive a recharge-free duration that is entered by the user and acquired by the recharge terminal; and
the recharge-free duration factor generating module 713 is configured to generate the recharge-free duration factor according to the recharge-free duration.

In some embodiments of the present invention, referring to FIG. 7-h, compared with the recharge server shown in FIG. 7-a, the recharge server 700 further includes a preference acquiring module 714 and a fifth recommended amount adjusting module 715, where:
the preference acquiring module 714 is configured to acquire, by the recommended amount acquiring module, preference push information corresponding to the user ID;
the fifth recommended amount adjusting module 715 is configured to perform an amount increase or decrease adjustment on the acquired recommended recharge amount according to the preference push information to obtain an adjusted recommended recharge amount; and
the recommended amount sending module is specifically configured to send the adjusted recommended recharge amount to the recharge terminal.

In other embodiments of the present invention, when detecting that a user needs to perform recharging, a recharge terminal sends recharge recommendation request information to a recharge server; a recharge recommendation receiving module acquires, according to the received recharge recommendation request information, a user ID for which recharging is required; a recommended amount acquiring module acquires, according to the user ID, historical consumption information of the user ID; the recharge server acquires, according to the historical consumption information of the user ID, a recommended recharge amount to be recommended to the user; a recommended amount sending module sends the acquired recommended recharge amount to the recharge terminal; and the recharge terminal recommends the received recommended recharge amount to the user. Therefore, the user may determine a current recharge amount according to the received recommended recharge amount. In the embodiment of the present invention, the recharge terminal may recommend an amount that should be recharged to the user by using the recommended recharge amount, thereby implementing intelligent recharging.

An embodiment of the present invention further provides a computer storage medium, where the computer storage medium stores a program, and the program performs some or all of the steps recorded in the foregoing method embodiments.

The following introduces another recharge terminal provided by an embodiment of the present invention. Referring to FIG. 8, the recharge apparatus 800 includes:
an input apparatus 801, an output apparatus 802, a processor 803, and a memory 804 (there may be one or more processors 803 in the recharge terminal 800, and one processor is used as an example in FIG. 8). In some embodiments of the present invention, the input apparatus 801, output apparatus 802, processor 803, and memory 804 may be connected by using a bus or in other manners, where a connection by using a bus is used as an example in FIG. 8.

The processor 803 is configured to perform the following steps:
when detecting that a user needs to perform recharging, acquiring, according to a user identity ID corresponding to the user, historical consumption information of the user ID;
acquiring, according to the historical consumption information of the user ID, a recommended recharge amount to be recommended to the user; and
recommending the acquired recommended recharge amount to the user, so that the user determines a recharge amount according to the recommended recharge amount.

In some embodiments of the present invention, the historical consumption information stored in the memory 804 includes a consumption amount in a historical time range before the user performs recharging; and
the processor 803 is specifically configured to perform the following step:
calculating a statistical consumption amount of the user in the historical time range according to the consumption amount of the user in the historical time range, where the statistical consumption amount is the recommended recharge amount to be recommended to the user.

Specifically, the processor is configured to perform the following step:
dividing the historical time range into multiple time periods, separately counting a total consumption amount of the user in each time period, and performing averaging calculation on the total consumption amounts in all the time periods to obtain an average consumption amount that is used as the statistical consumption amount; or
selecting a largest total amount from total consumption amounts in time periods to obtain a largest consumption amount that is used as the statistical consumption amount.

In some embodiments of the present invention, after acquiring, according to the historical consumption information of the user ID, the recommended recharge amount to be recommended to the user, the processor 803 is further configured to perform the following steps:
acquiring a gradual consumption change adjustment factor according to the total consumption amount in each time period, where the gradual consumption change adjustment factor is an amount increase or decrease trend of the total consumption amounts in all the time periods; and
performing an amount increase or decrease adjustment on the acquired recommended recharge amount according to the gradual consumption change adjustment factor to obtain an adjusted recommended recharge amount; and
specifically, the processor 803 is configured to perform the following step: recommending the adjusted recommended recharge amount to the user.

In some embodiments of the present invention, after acquiring, according to the historical consumption information of the user ID, the recommended recharge amount to be recommended to the user, the processor 803 is further configured to perform the following steps:
determining whether a time when the user performs recharging meets a preset time attribute; and
if the time when the user performs recharging meets the preset time attribute, performing an amount increase or decrease adjustment on the acquired recommended recharge amount according to a time attribute adjustment factor corresponding to the time attribute to obtain an adjusted recommended recharge amount; and
specifically, the processor 803 is configured to perform the following step: recommending the adjusted recommended recharge amount to the user.

Specifically, the processor 803 is configured to perform the following steps:
searching the historical time range for a historical time that meets the time attribute;
acquiring the time attribute adjustment factor according to a proportional relationship between a consumption amount of the user at the historical time and consumption amounts of the user at times except the historical time in the historical time range; and
multiplying the acquired recommended recharge amount by the acquired time attribute adjustment factor.

In some embodiments of the present invention, the historical consumption information stored in the memory 804 further includes consumption details of the user in the historical time range;
after acquiring, according to the historical consumption information of the user ID, the recommended recharge amount to be recommended to the user, the processor 803 is further configured to perform the following steps:
acquiring, according to the consumption details, all products consumed by the user in the historical time range;
acquiring whether there is a product update on the products consumed by the user; and
if there is a product update, performing an amount increase or decrease adjustment on the acquired recommended recharge amount according to an amount corresponding to an updated product to obtain an adjusted recommended recharge amount; and
specifically, the processor 803 is configured to perform the following step: recommending the adjusted recommended recharge amount to the user.

In some embodiments of the present invention, after acquiring, according to the historical consumption information of the user ID, the recommended recharge amount to be recommended to the user, the processor 803 is further configured to perform the following step:
performing an amount increase or decrease adjustment on the acquired recommended recharge amount according to a recharge-free duration factor to obtain an adjusted recommended recharge amount; and
specifically, the processor 803 is configured to perform the following step: recommending the adjusted recommended recharge amount to the user.

In some embodiments of the present invention, before performing the amount increase or decrease adjustment on the acquired recommended recharge amount according to the recharge-free duration, the processor 803 is further configured to perform the following steps:
acquiring a recharge-free duration entered by the user; and
generating the recharge-free duration factor according to the recharge-free duration.

In some embodiments of the present invention, after acquiring, according to the historical consumption information of the user ID, the recommended recharge amount to be recommended to the user, the processor 803 is further configured to perform the following steps:
acquiring, from a recharge server, preference push information corresponding to the user ID; and
performing an amount increase or decrease adjustment on the acquired recommended recharge amount according to the preference push information to obtain an adjusted recommended recharge amount; and
specifically, the processor 803 is configured to perform the following step: recommending the adjusted recommended recharge amount to the user.

In some embodiments of the present invention, specifically the processor 803 is configured to perform the following steps:
sending consumption query request information to the recharge server, where the consumption query request information includes the user ID corresponding to the user; and
receiving the historical consumption information that is returned by the recharge server and of the user ID.

In the foregoing embodiment of the present invention, when detecting that a user needs to perform recharging, a recharge terminal acquires, according to a user ID corresponding to the user, historical consumption information of the user ID; then the recharge terminal acquires, according to the historical consumption information of the user ID, a recommended recharge amount to be recommended to the user, and recommends the acquired recommended recharge amount to the user, so that the user may determine a current recharge amount according to the received recommended recharge amount. In the embodiment of the present invention, the recharge terminal may recommend an amount that should be recharged to the user by using the recommended recharge amount, thereby implementing intelligent recharging.

The following introduces another recharge terminal provided by an embodiment of the present invention. Referring to FIG. 9, the recharge terminal 900 includes:
an input apparatus 901, an output apparatus 902, a processor 903, and a memory 904 (there may be one or more processors 903 in the recharge terminal 900, and one processor is used as an example in FIG. 9). In some embodiments of the present invention, the input apparatus 901, output apparatus 902, processor 903, and memory 904 may be connected by using a bus or in other manners, where a connection by using a bus is used as an example in FIG. 9.

The processor 903 is configured to perform the following steps:
when detecting that a user needs to perform recharging, sending recharge recommendation request information to a recharge server, where the recharge recommendation request information includes a user identity ID of the user;
receiving a recommended recharge amount that is acquired by the recharge server according to the user ID; and
recommending the received recommended recharge amount to the user, so that the user determines a recharge amount according to the recommended recharge amount.

In some embodiments of the present invention, after receiving the recommended recharge amount that is acquired by the recharge server according to the user ID, the processor 903 is further configured to perform the following steps:
receiving historical consumption information that is sent by the recharge server and corresponding to the user ID, where the historical consumption information includes a consumption amount in a historical time range before the user performs recharging;
dividing the historical time range into multiple time periods;
acquiring a gradual consumption change adjustment factor according to a total consumption amount in each time period, where the gradual consumption change adjustment factor is an amount increase or decrease trend of the total consumption amounts in all the time periods; and
performing an amount increase or decrease adjustment on the acquired recommended recharge amount according to the gradual consumption change adjustment factor to obtain an adjusted recommended recharge amount; and
specifically, the processor 903 is configured to perform the following step: recommending the adjusted recommended recharge amount to the user.

In some embodiments of the present invention, after receiving the recommended recharge amount that is acquired by the recharge server according to the user ID, the processor 903 is further configured to perform the following steps:
determining whether a time when the user performs recharging meets a preset time attribute; and
if the time when the user performs recharging meets the preset time attribute, performing an amount increase or decrease adjustment on the acquired recommended recharge amount according to a time attribute adjustment factor corresponding to the time attribute to obtain an adjusted recommended recharge amount; and
the recommending the received recommended recharge amount to the user includes:
   recommending the adjusted recommended recharge amount to the user.

Specifically, the processor 903 is configured to perform the following steps:
searching a historical time range for a historical time that meets the time attribute;
acquiring the time attribute adjustment factor according to a proportional relationship between a consumption amount of the user at the historical time and consumption amounts of the user at times except the historical time in the historical time range; and
multiplying the acquired recommended recharge amount by the acquired time attribute adjustment factor.

In some embodiments of the present invention, after receiving the recommended recharge amount that is acquired by the recharge server according to the user ID, the processor 903 is further configured to perform the following steps:
receiving historical consumption information that is sent by the recharge server and corresponding to the user ID, where the historical consumption information includes consumption details of the user in a historical time range;
acquiring, according to the consumption details, all products consumed by the user in the historical time range;
acquiring whether there is a product update on the products consumed by the user; and
if there is a product update, performing an amount increase or decrease adjustment on the acquired recommended recharge amount according to an amount corresponding to an updated product to obtain an adjusted recommended recharge amount; and
specifically, the processor 903 is configured to perform the following step:
   recommending the adjusted recommended recharge amount to the user.

In some embodiments of the present invention, after receiving the recommended recharge amount that is acquired by the recharge server according to the user ID, the processor 903 is further configured to perform the following step:
performing an amount increase or decrease adjustment on the acquired recommended recharge amount according to a recharge-free duration factor to obtain an adjusted recommended recharge amount; and
specifically, the processor 903 is configured to perform the following step:
   recommending the adjusted recommended recharge amount to the user.

In some embodiments of the present invention, before performing the amount increase or decrease adjustment on the acquired recommended recharge amount according to the recharge-free duration, the processor 903 is further configured to perform the following steps:
acquiring a recharge-free duration entered by the user; and
generating the recharge-free duration factor according to the recharge-free duration.

In some embodiments of the present invention, after receiving the recommended recharge amount that is acquired by the recharge server according to the user ID, the processor 903 is further configured to perform the following steps:
acquiring, from the recharge server, preference push information corresponding to the user ID; and
performing an amount increase or decrease adjustment on the acquired recommended recharge amount according to the preference push information to obtain an adjusted recommended recharge amount; and
specifically, the processor 903 is configured to perform the following step:
   recommending the adjusted recommended recharge amount to the user.

In the foregoing embodiment of the present invention, when detecting that a user needs to perform recharging, a recharge terminal sends recharge recommendation request information to a recharge server; the recharge server acquires, according to the received recharge recommendation request information, a user ID for which recharging is required, and acquires, according to the user ID, historical consumption information of the user ID; the recharge server acquires, according to the historical consumption information of the user ID, a recommended recharge amount to be recommended to the user; the recharge server sends the acquired recommended recharge amount to the recharge terminal; and the recharge terminal recommends the received recommended recharge amount to the user. Therefore, the user may determine a current recharge amount according to the received recommended recharge amount. In the embodiment of the present invention, the recharge terminal may recommend an amount that should be recharged to the user by using the recommended recharge amount, thereby implementing intelligent recharging.

The following introduces another recharge terminal provided by an embodiment of the present invention. Referring to FIG. 10, the recharge apparatus 1000 includes:
an input apparatus 1001, an output apparatus 1002, a processor 1003, and a memory 1004 (there may be one or more processors 1003 in the recharge apparatus 1000, and one processor is used as an example in FIG. 10). In some embodiments of the present invention, the input apparatus 1001, output apparatus 1002, processor 1003, and memory 1004 may be connected by using a bus or in other manners, where a connection by using a bus is used as an example in FIG. 10.

The processor 1003 is configured to perform the following steps:
receiving recharge recommendation request information sent by a recharge terminal, where the recharge recommendation request information includes a user identity ID corresponding to a user who needs to perform recharging and is detected by the recharge terminal;
acquiring, according to historical consumption information of the user ID, a recommended recharge amount to be recommended to the user; and
sending the recommended recharge amount to the recharge terminal.

In some embodiments of the present invention, the historical consumption information stored in the memory 1004 includes a consumption amount in a historical time range before the user performs recharging; and
specifically, the processor 1003 is configured to perform the following step:
calculating a statistical consumption amount of the user in the historical time range according to the consumption amount of the user in the historical time range, where the statistical consumption amount is the recommended recharge amount to be recommended to the user.

Specifically, the processor 1003 is configured to perform the following step:
dividing the historical time range into multiple time periods, separately counting a total consumption amount of the user in each time period, and performing averaging calculation on the total consumption amounts in all the time periods to obtain an average consumption amount that is used as the statistical consumption amount; or
selecting a largest total amount from total consumption amounts in time periods to obtain a largest consumption amount that is used as the statistical consumption amount.

In some embodiments of the present invention, after acquiring, according to the historical consumption information of the user ID, the recommended recharge amount to be recommended to the user, the processor 1003 is further configured to perform the following steps:
acquiring a gradual consumption change adjustment factor according to the total consumption amount in each time period, where the gradual consumption change adjustment factor is an amount increase or decrease trend of the total consumption amounts in all the time periods; and
performing an amount increase or decrease adjustment on the acquired recommended recharge amount according to the gradual consumption change adjustment factor to obtain an adjusted recommended recharge amount; and
specifically, the processor 1003 is configured to perform the following step: sending the adjusted recommended recharge amount to the recharge terminal.

In some embodiments of the present invention, after acquiring, according to the historical consumption information of the user ID, the recommended recharge amount to be recommended to the user, the processor 1003 is further configured to perform the following steps:
determining whether a time when the user performs recharging meets a preset time attribute; and
if the time when the user performs recharging meets the preset time attribute, performing an amount increase or decrease adjustment on the acquired recommended recharge amount according to a time attribute adjustment factor corresponding to the time attribute to obtain an adjusted recommended recharge amount; and
specifically, the processor 1003 is configured to perform the following step:
   sending the adjusted recommended recharge amount to the recharge terminal.

Specifically, the processor 1003 is configured to perform the following steps:
searching a historical time range for a historical time that meets the time attribute;
acquiring the time attribute adjustment factor according to a proportional relationship between a consumption amount of the user at the historical time and consumption amounts of the user at times except the historical time in the historical time range; and
multiplying the acquired recommended recharge amount by the acquired time attribute adjustment factor.

In some embodiments of the present invention, the historical consumption information stored in the memory 1004 further includes consumption details of the user in a historical time range;
after acquiring, according to the historical consumption information of the user ID, the recommended recharge amount to be recommended to the user, the processor 1003 is further configured to perform the following steps:
acquiring, according to the consumption details, all products consumed by the user in the historical time range;
acquiring whether there is a product update on the products consumed by the user; and
if there is a product update, performing an amount increase or decrease adjustment on the acquired recommended recharge amount according to an amount corresponding to an updated product to obtain an adjusted recommended recharge amount; and
specifically, the processor 1003 is configured to perform the following step:
   sending the adjusted recommended recharge amount to the recharge terminal.

In some embodiments of the present invention, after acquiring, according to the historical consumption information of the user ID, the recommended recharge amount to be recommended to the user, the processor 1003 is further configured to perform the following step:
performing an amount increase or decrease adjustment on the acquired recommended recharge amount according to a recharge-free duration factor to obtain an adjusted recommended recharge amount; and
specifically, the processor 1003 is configured to perform the following step:
   sending the adjusted recommended recharge amount to the recharge terminal.

In some embodiments of the present invention, before performing the amount increase or decrease adjustment on the acquired recommended recharge amount according to the recharge-free duration, the processor 903 is further configured to perform the following steps:
receiving a recharge-free duration that is entered by the user and acquired by the recharge terminal; and
generating the recharge-free duration factor according to the recharge-free duration.

In some embodiments of the present invention, after acquiring, according to the historical consumption information of the user ID, the recommended recharge amount to be recommended to the user, the processor 1003 is further configured to perform the following steps:
acquiring preference push information corresponding to the user ID; and
performing an amount increase or decrease adjustment on the acquired recommended recharge amount according to the preference push information to obtain an adjusted recommended recharge amount; and
specifically, the processor 1003 is configured to perform the following step:
   sending the adjusted recommended recharge amount to the recharge terminal.

In the foregoing embodiment of the present invention, when detecting that a user needs to perform recharging, a recharge terminal sends recharge recommendation request information to a recharge server; the recharge server acquires, according to the received recharge recommendation request information, a user ID for which recharging is required, and acquires, according to the user ID, historical consumption information of the user ID; the recharge server acquires, according to the historical consumption information of the user ID, a recommended recharge amount to be recommended to the user; the recharge server sends the acquired recommended recharge amount to the recharge terminal; and the recharge terminal recommends the received recommended recharge amount to the user. Therefore, the user may determine a current recharge amount according to the received recommended recharge amount. In the embodiment of the present invention, the recharge terminal may recommend an amount that should be recharged to the user by using the recommended recharge amount, thereby implementing intelligent recharging.

In addition, it should be noted that, the apparatus embodiments described above are merely exemplary. The units described as separated parts may or may not be physically separated, and parts displayed as units may or may not be physical units, that is, may be located in one position, or may be distributed on a plurality of network units. The objectives of the solutions of the embodiments may be achieved by selecting some or all of the modules described herein according to actual requirements. In addition, in the accompanying drawings of the apparatus embodiments provided by the present invention, connection relationships between modules indicate that the modules have communication connections with each other, which may be specifically implemented as one or more communications buses or signal cables. A person of ordinary skill in the art may understand and implement the embodiments of the present invention without creative efforts.

Based on the description of the foregoing implementation manners, a person skilled in the art may clearly understand that the present invention may be implemented by software in addition to necessary universal hardware, or certainly, may be implemented by dedicated hardware including an application-specific integrated circuit, a dedicated CPU, a dedicated memory, a dedicated component, and the like. Generally, any function that is completed by a computer program may be easily implemented by corresponding hardware. In addition, a specific hardware structure used to implement a same function may take various forms, for example, in a form of an analog circuit, a digital circuit, or a dedicated circuit. However, for the present invention, implementation by using a software program is a better implementation manner in most cases. Based on such an understanding, the technical solutions of the present invention essentially or the part contributing to the prior art may be implemented in a form of a software product. The computer software product is stored in a readable storage medium, for example, a floppy disk, a USB flash drive, a removable hard disk, a read-only memory (ROM, Read-Only Memory), a random access memory (RAM, Random Access Memory), a magnetic disk, or an optical disc of a computer, and includes several instructions for instructing a computer device (which may be a personal computer, a server, or a network device, or the like) to execute the method in each embodiment of the present invention.

In conclusion, the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions recorded in the foregoing embodiments or make equivalent replacements to some technical features thereof without departing from the spirit and scope of the technical solutions of the embodiments of the present invention.

## Claims

1. A recharge method, comprising:
acquiring, by a recharge terminal according to a user identity ID corresponding to the user, historical consumption information of the user ID when detecting that a user needs to perform recharging;
acquiring, by the recharge terminal according to the historical consumption information of the user ID, a recommended recharge amount to be recommended to the user; and
recommending, by the recharge terminal, the acquired recommended recharge amount to the user, so that the user determines a recharge amount according to the recommended recharge amount.

2. The method according to claim 1, wherein the historical consumption information comprises a consumption amount in a historical time range before the user performs recharging; and
the acquiring, by the recharge terminal according to the historical consumption information of the user ID, a recommended recharge amount to be recommended to the user, comprises:
calculating, by the recharge terminal, a statistical consumption amount of the user in the historical time range according to the consumption amount of the user in the historical time range, wherein the statistical consumption amount is the recommended recharge amount to be recommended to the user.

3. The method according to claim 2, wherein the calculating, by the recharge terminal, a statistical consumption amount of the user in the historical time range according to the consumption amount of the user in the historical time range, comprises:
dividing, by the recharge terminal, the historical time range into multiple time periods, separately counting a total consumption amount of the user in each time period, and performing averaging calculation on the total consumption amounts in all the time periods to obtain an average consumption amount that is used as the statistical consumption amount; or
selecting, by the recharge terminal, a largest total amount from total consumption amounts in time periods to obtain a largest consumption amount that is used as the statistical consumption amount.

4. The method according to claim 3, wherein after the acquiring, by the recharge terminal according to the historical consumption information of the user ID, a recommended recharge amount to be recommended to the user, the method further comprises:
acquiring, by the recharge terminal, a gradual consumption change adjustment factor according to the total consumption amount in each time period, wherein the gradual consumption change adjustment factor is an amount increase or decrease trend of the total consumption amounts in all the time periods; and
performing, by the recharge terminal, an amount increase or decrease adjustment on the acquired recommended recharge amount according to the gradual consumption change adjustment factor to obtain an adjusted recommended recharge amount; and
the recommending, by the recharge terminal, the acquired recommended recharge amount to the user, comprises:
recommending, by the recharge terminal, the adjusted recommended recharge amount to the user.

5. The method according to any one of claims 1 to 3, wherein after the acquiring, by the recharge terminal according to the historical consumption information of the user ID, a recommended recharge amount to be recommended to the user, the method further comprises:
determining, by the recharge terminal, whether a time when the user performs recharging meets a preset time attribute; and
performing, by the recharge terminal, an amount increase or decrease adjustment on the acquired recommended recharge amount according to a time attribute adjustment factor corresponding to the time attribute to obtain an adjusted recommended recharge amount when the time when the user performs recharging meets the preset time attribute,; and
the recommending, by the recharge terminal, the acquired recommended recharge amount to the user, comprises:
recommending, by the recharge terminal, the adjusted recommended recharge amount to the user.

6. The method according to claim 5, wherein the performing, by the recharge terminal, an amount increase or decrease adjustment on the acquired recommended recharge amount according to a time attribute adjustment factor corresponding to the time attribute, comprises:
searching, by the recharge terminal, the historical time range for a historical time that meets the time attribute;
acquiring, by the recharge terminal, the time attribute adjustment factor according to a proportional relationship between a consumption amount of the user at the historical time and consumption amounts of the user at times except the historical time in the historical time range; and
multiplying, by the recharge terminal, the acquired recommended recharge amount by the acquired time attribute adjustment factor.

7. The method according to any one of claims 1 to 3, wherein the historical consumption information further comprises consumption details of the user in the historical time range;
after the acquiring, by the recharge terminal according to the historical consumption information of the user ID, a recommended recharge amount to be recommended to the user, the method further comprises:
acquiring, by the recharge terminal according to the consumption details, all products consumed by the user in the historical time range;
acquiring, by the recharge terminal, whether there is a product update on the products consumed by the user; and
performing, by the recharge terminal, an amount increase or decrease adjustment on the acquired recommended recharge amount according to an amount corresponding to an updated product to obtain an adjusted recommended recharge amount when there is a product update,; and
the recommending, by the recharge terminal, the acquired recommended recharge amount to the user, comprises:
recommending, by the recharge terminal, the adjusted recommended recharge amount to the user.

8. The method according to any one of claims 1 to 3, wherein after the acquiring, by the recharge terminal according to the historical consumption information of the user ID, a recommended recharge amount to be recommended to the user, the method further comprises:
performing, by the recharge terminal, an amount increase or decrease adjustment on the acquired recommended recharge amount according to a recharge-free duration factor to obtain an adjusted recommended recharge amount; and
the recommending, by the recharge terminal, the acquired recommended recharge amount to the user, comprises:
recommending, by the recharge terminal, the adjusted recommended recharge amount to the user.

9. The method according to claim 8, wherein before the performing, by the recharge terminal, an amount increase or decrease adjustment on the acquired recommended recharge amount according to a recharge-free duration, the method further comprises:
acquiring, by the recharge terminal, a recharge-free duration entered by the user; and
generating, by the recharge terminal, the recharge-free duration factor according to the recharge-free duration.

10. The method according to any one of claims 1 to 3, wherein after the acquiring, by the recharge terminal according to the historical consumption information of the user ID, a recommended recharge amount to be recommended to the user, the method further comprises:
acquiring, by the recharge terminal from a recharge server, preference push information corresponding to the user ID; and
performing, by the recharge terminal, an amount increase or decrease adjustment on the acquired recommended recharge amount according to the preference push information to obtain an adjusted recommended recharge amount; and
the recommending, by the recharge terminal, the acquired recommended recharge amount to the user, comprises:
recommending, by the recharge terminal, the adjusted recommended recharge amount to the user.

11. The method according to any one of claims 1 to 10, wherein the acquiring, by a recharge terminal according to a user identity ID corresponding to the user, historical consumption information of the user ID, comprises:
sending, by the recharge terminal, consumption query request information to the recharge server, wherein the consumption query request information comprises the user ID corresponding to the user; and
receiving, by the recharge terminal, the historical consumption information that is returned by the recharge server and of the user ID.

12. A recharge method, comprising:
when detecting that a user needs to perform recharging, sending, by a recharge terminal, recharge recommendation request information to a recharge server, wherein the recharge recommendation request information comprises a user identity ID of the user;
receiving, by the recharge terminal, a recommended recharge amount that is acquired by the recharge server according to the user ID; and
recommending, by the recharge terminal, the received recommended recharge amount to the user, so that the user determines a recharge amount according to the recommended recharge amount.

13. The method according to claim 12, wherein after the receiving, by the recharge terminal, a recommended recharge amount that is acquired by the recharge server according to the user ID, the method further comprises:
receiving, by the recharge terminal, historical consumption information that is sent by the recharge server and corresponding to the user ID, wherein the historical consumption information comprises a consumption amount in a historical time range before the user performs recharging;
dividing, by the recharge terminal, the historical time range into multiple time periods;
acquiring, by the recharge terminal, a gradual consumption change adjustment factor according to a total consumption amount in each time period, wherein the gradual consumption change adjustment factor is an amount increase or decrease trend of the total consumption amounts in all the time periods; and
performing, by the recharge terminal, an amount increase or decrease adjustment on the acquired recommended recharge amount according to the gradual consumption change adjustment factor to obtain an adjusted recommended recharge amount; and
the recommending, by the recharge terminal, the received recommended recharge amount to the user, comprises:
recommending, by the recharge terminal, the adjusted recommended recharge amount to the user.

14. The method according to claim 12, wherein after the receiving, by the recharge terminal, a recommended recharge amount that is acquired by the recharge server according to the user ID, the method further comprises:
determining, by the recharge terminal, whether a time when the user performs recharging meets a preset time attribute; and
performing, by the recharge terminal, an amount increase or decrease adjustment on the acquired recommended recharge amount according to a time attribute adjustment factor corresponding to the time attribute to obtain an adjusted recommended recharge amount when the time when the user performs recharging meets the preset time attribute,; and
the recommending, by the recharge terminal, the received recommended recharge amount to the user, comprises:
recommending, by the recharge terminal, the adjusted recommended recharge amount to the user.

15. The method according to claim 14, wherein the performing, by the recharge terminal, an amount increase or decrease adjustment on the acquired recommended recharge amount according to a time attribute adjustment factor corresponding to the time attribute, comprises:
searching, by the recharge terminal, a historical time range for a historical time that meets the time attribute;
acquiring, by the recharge terminal, the time attribute adjustment factor according to a proportional relationship between a consumption amount of the user at the historical time and consumption amounts of the user at times except the historical time in the historical time range; and
multiplying, by the recharge terminal, the acquired recommended recharge amount by the acquired time attribute adjustment factor.

16. The method according to claim 12, wherein after the receiving, by the recharge terminal, a recommended recharge amount that is acquired by the recharge server according to the user ID, the method further comprises:
receiving, by the recharge terminal, historical consumption information that is sent by the recharge server and corresponding to the user ID, wherein the historical consumption information comprises consumption details of the user in a historical time range;
acquiring, by the recharge terminal according to the consumption details, all products consumed by the user in the historical time range;
acquiring, by the recharge terminal, whether there is a product update on the products consumed by the user; and
performing, by the recharge terminal, an amount increase or decrease adjustment on the acquired recommended recharge amount according to an amount corresponding to an updated product to obtain an adjusted recommended recharge amount when there is a product update,; and
the recommending, by the recharge terminal, the received recommended recharge amount to the user, comprises:
recommending, by the recharge terminal, the adjusted recommended recharge amount to the user.

17. The method according to claim 12, wherein after the receiving, by the recharge terminal, a recommended recharge amount that is acquired by the recharge server according to the user ID, the method further comprises:
performing, by the recharge terminal, an amount increase or decrease adjustment on the acquired recommended recharge amount according to a recharge-free duration factor to obtain an adjusted recommended recharge amount; and
the recommending, by the recharge terminal, the received recommended recharge amount to the user, comprises:
recommending, by the recharge terminal, the adjusted recommended recharge amount to the user.

18. The method according to claim 17, wherein before the performing, by the recharge terminal, an amount increase or decrease adjustment on the acquired recommended recharge amount according to a recharge-free duration, the method further comprises:
acquiring, by the recharge terminal, a recharge-free duration entered by the user; and
generating, by the recharge terminal, the recharge-free duration factor according to the recharge-free duration.

19. The method according to claim 12, wherein after the receiving, by the recharge terminal, a recommended recharge amount that is acquired by the recharge server according to the user ID, the method further comprises:
acquiring, by the recharge terminal from the recharge server, preference push information corresponding to the user ID; and
performing, by the recharge terminal, an amount increase or decrease adjustment on the acquired recommended recharge amount according to the preference push information to obtain an adjusted recommended recharge amount; and
the recommending, by the recharge terminal, the received recommended recharge amount to the user, comprises:
recommending, by the recharge terminal, the adjusted recommended recharge amount to the user.

20. A recharge method, comprising:
receiving, by a recharge server, recharge recommendation request information sent by a recharge terminal, wherein the recharge recommendation request information comprises a user identity ID corresponding to a user who needs to perform recharging and is detected by the recharge terminal;
acquiring, by the recharge server according to historical consumption information of the user ID, a recommended recharge amount to be recommended to the user; and
sending, by the recharge server, the recommended recharge amount to the recharge terminal.

21. The method according to claim 20, wherein the historical consumption information comprises a consumption amount in a historical time range before the user performs recharging; and
the acquiring, by the recharge server according to historical consumption information of the user ID, a recommended recharge amount to be recommended to the user, comprises:
calculating, by the recharge server, a statistical consumption amount of the user in the historical time range according to the consumption amount of the user in the historical time range, wherein the statistical consumption amount is the recommended recharge amount to be recommended to the user.

22. The method according to claim 21, wherein the calculating, by the recharge server, a statistical consumption amount of the user in the historical time range according to the consumption amount of the user in the historical time range, comprises:
dividing, by the recharge server, the historical time range into multiple time periods, separately counting a total consumption amount of the user in each time period, and performing averaging calculation on the total consumption amounts in all the time periods to obtain an average consumption amount that is used as the statistical consumption amount; or
selecting, by the recharge server, a largest total amount from total consumption amounts in time periods to obtain a largest consumption amount that is used as the statistical consumption amount.

23. The method according to claim 22, wherein after the acquiring, by the recharge server according to historical consumption information of the user ID, a recommended recharge amount to be recommended to the user, the method further comprises:
acquiring, by the recharge server, a gradual consumption change adjustment factor according to the total consumption amount in each time period, wherein the gradual consumption change adjustment factor is an amount increase or decrease trend of the total consumption amounts in all the time periods; and
performing, by the recharge server, an amount increase or decrease adjustment on the acquired recommended recharge amount according to the gradual consumption change adjustment factor to obtain an adjusted recommended recharge amount; and
the sending, by the recharge server, the recommended recharge amount to the recharge terminal, comprises:
sending, by the recharge server, the adjusted recommended recharge amount to the recharge terminal.

24. The method according to claim 20, wherein after the acquiring, by the recharge server according to historical consumption information of the user ID, a recommended recharge amount to be recommended to the user, the method further comprises:
determining, by the recharge server, whether a time when the user performs recharging meets a preset time attribute; and
performing, by the recharge server, an amount increase or decrease adjustment on the acquired recommended recharge amount according to a time attribute adjustment factor corresponding to the time attribute to obtain an adjusted recommended recharge amount when the time when the user performs recharging meets the preset time attribute,; and
the sending, by the recharge server, the recommended recharge amount to the recharge terminal, comprises:
sending, by the recharge server, the adjusted recommended recharge amount to the recharge terminal.

25. The method according to claim 24, wherein the performing, by the recharge server, an amount increase or decrease adjustment on the acquired recommended recharge amount according to a time attribute adjustment factor corresponding to the time attribute, comprises:
searching, by the recharge server, a historical time range for a historical time that meets the time attribute;
acquiring, by the recharge server, the time attribute adjustment factor according to a proportional relationship between a consumption amount of the user at the historical time and consumption amounts of the user at times except the historical time in the historical time range; and
multiplying, by the recharge server, the acquired recommended recharge amount by the acquired time attribute adjustment factor.

26. The method according to claim 20, wherein the historical consumption information further comprises consumption details of the user in a historical time range;
after the acquiring, by the recharge server according to historical consumption information of the user ID, a recommended recharge amount to be recommended to the user, the method further comprises:
acquiring, by the recharge server according to the consumption details, all products consumed by the user in the historical time range;
acquiring, by the recharge server, whether there is a product update on the products consumed by the user; and
performing, by the recharge server, an amount increase or decrease adjustment on the acquired recommended recharge amount according to an amount corresponding to an updated product to obtain an adjusted recommended recharge amount when there is a product update,; and
the sending, by the recharge server, the recommended recharge amount to the recharge terminal, comprises:
sending, by the recharge server, the adjusted recommended recharge amount to the recharge terminal.

27. The method according to claim 20, wherein after the acquiring, by the recharge server according to historical consumption information of the user ID, a recommended recharge amount to be recommended to the user, the method further comprises:
performing, by the recharge server, an amount increase or decrease adjustment on the acquired recommended recharge amount according to a recharge-free duration factor to obtain an adjusted recommended recharge amount; and
the sending, by the recharge server, the recommended recharge amount to the recharge terminal, comprises:
sending, by the recharge server, the adjusted recommended recharge amount to the recharge terminal.

28. The method according to claim 27, wherein before the performing, by the recharge server, an amount increase or decrease adjustment on the acquired recommended recharge amount according to a recharge-free duration, the method further comprises:
receiving, by the recharge server, a recharge-free duration that is entered by the user and acquired by the recharge terminal; and
generating, by the recharge server, the recharge-free duration factor according to the recharge-free duration.

29. The method according to claim 20, wherein after the acquiring, by the recharge server according to historical consumption information of the user ID, a recommended recharge amount to be recommended to the user, the method further comprises:
acquiring, by the recharge server, preference push information corresponding to the user ID; and
performing, by the recharge server, an amount increase or decrease adjustment on the acquired recommended recharge amount according to the preference push information to obtain an adjusted recommended recharge amount; and
the sending, by the recharge server, the recommended recharge amount to the recharge terminal, comprises:
sending, by the recharge server, the adjusted recommended recharge amount to the recharge terminal.

30. A recharge terminal, comprising:
a historical consumption acquiring module, configured to acquire, by the recharge terminal according to a user identity ID corresponding to the user, historical consumption information of the user ID when it is detected that a user needs to perform recharging;
a recommended amount acquiring module, configured to acquire, according to the historical consumption information of the user ID, a recommended recharge amount to be recommended to the user; and
a recommended amount sending module, configured to recommend the acquired recommended recharge amount to the user, so that the user determines a recharge amount according to the recommended recharge amount.

31. The recharge terminal according to claim 30, wherein the historical consumption information comprises a consumption amount in a historical time range before the user performs recharging; and
the recommended amount acquiring module comprises a statistical amount acquiring submodule, configured to calculate a statistical consumption amount of the user in the historical time range according to the consumption amount of the user in the historical time range, wherein the statistical consumption amount is the recommended recharge amount to be recommended to the user.

32. The recharge terminal according to claim 31, wherein the statistical amount acquiring submodule is specifically configured to: divide the historical time range into multiple time periods, separately count a total consumption amount of the user in each time period, and perform averaging calculation on the total consumption amounts in all the time periods to obtain an average consumption amount that is used as the statistical consumption amount; or select a largest total amount from total consumption amounts in time periods to obtain a largest consumption amount that is used as the statistical consumption amount.

33. The recharge terminal according to claim 32, wherein the recharge terminal further comprises a gradual consumption change adjustment factor acquiring module and a first recommended amount adjusting module, wherein:
the gradual consumption change adjustment factor acquiring module is configured to acquire a gradual consumption change adjustment factor according to the total consumption amount in each time period after the recommended amount acquiring module acquires, according to the historical consumption information of the user ID, the recommended recharge amount to be recommended to the user, wherein the gradual consumption change adjustment factor is an amount increase or decrease trend of the total consumption amounts in all the time periods;
the first recommended amount adjusting module is configured to perform an amount increase or decrease adjustment on the acquired recommended recharge amount according to the gradual consumption change adjustment factor to obtain an adjusted recommended recharge amount; and
the recommended amount sending module is specifically configured to recommend the adjusted recommended recharge amount to the user.

34. The recharge terminal according to any one of claims 30 to 32, wherein the recharge terminal further comprises a time attribute determining module and a second recommended amount adjusting module, wherein:
the time attribute determining module is configured to: after the recommended amount acquiring module acquires, according to the historical consumption information of the user ID, the recommended recharge amount to be recommended to the user, determine whether a time when the user performs recharging meets a preset time attribute;
the second recommended amount adjusting module is configured to perform an amount increase or decrease adjustment on the acquired recommended recharge amount according to a time attribute adjustment factor corresponding to the time attribute to obtain an adjusted recommended recharge amount when the time when the user performs recharging meets the preset time attribute; and
the recommended amount sending module is specifically configured to recommend the adjusted recommended recharge amount to the user.

35. The recharge terminal according to claim 34, wherein the second recommended amount adjusting module comprises:
a historical time searching submodule, configured to search the historical time range for a historical time that meets the time attribute;
a time attribute adjustment factor acquiring submodule, configured to acquire the time attribute adjustment factor according to a proportional relationship between a consumption amount of the user at the historical time and consumption amounts of the user at times except the historical time in the historical time range; and
a time attribute adjusting submodule, configured to multiply the acquired recommended recharge amount by the acquired time attribute adjustment factor.

36. The recharge terminal according to any one of claims 30 to 32, wherein the historical consumption information further comprises consumption details of the user in the historical time range; and
the recharge terminal further comprises a consumed product acquiring module, a product update determining module, and a third recommended amount adjusting module, wherein:
the consumed product acquiring module is configured to: after the recommended amount acquiring module acquires, according to the historical consumption information of the user ID, the recommended recharge amount to be recommended to the user, acquire, according to the consumption details, all products consumed by the user in the historical time range;
the product update determining module is configured to acquire whether there is a product update on the products consumed by the user;
the third recommended amount adjusting module is configured to perform an amount increase or decrease adjustment on the acquired recommended recharge amount according to an amount corresponding to an updated product to obtain an adjusted recommended recharge amount when there is a product update; and
the recommended amount sending module is specifically configured to recommend the adjusted recommended recharge amount to the user.

37. The recharge terminal according to any one of claims 30 to 32, wherein the recharge terminal further comprises a fourth recommended amount adjusting module, wherein:
the fourth recommended amount adjusting module is configured to: after the recommended amount acquiring module acquires, according to the historical consumption information of the user ID, the recommended recharge amount to be recommended to the user, perform an amount increase or decrease adjustment on the acquired recommended recharge amount according to a recharge-free duration factor to obtain an adjusted recommended recharge amount; and
the recommended amount sending module is specifically configured to recommend the adjusted recommended recharge amount to the user.

38. The recharge terminal according to claim 37, wherein the recharge terminal further comprises a recharge-free duration acquiring module and a recharge-free duration factor generating module, wherein:
the recharge-free duration acquiring module is configured to: before the fourth recommended amount adjusting module performs the amount increase or decrease adjustment on the acquired recommended recharge amount according to the recharge-free duration, acquire a recharge-free duration entered by the user; and
the recharge-free duration factor generating module is configured to generate the recharge-free duration factor according to the recharge-free duration.

39. The recharge terminal according to any one of claims 30 to 32, wherein the recharge terminal further comprises a preference acquiring module and a fifth recommended amount adjusting module, wherein:
the preference acquiring module is configured to acquire, from a recharge server, preference push information corresponding to the user ID after the recommended amount acquiring module acquires, according to the historical consumption information of the user ID, the recommended recharge amount to be recommended to the user;
the fifth recommended amount adjusting module is configured to perform an amount increase or decrease adjustment on the acquired recommended recharge amount according to the preference push information to obtain an adjusted recommended recharge amount; and
the recommended amount sending module is specifically configured to recommend the adjusted recommended recharge amount to the user.

40. The recharge terminal according to any one of claims 30 to 39, wherein the historical consumption acquiring module comprises:
a consumption querying submodule, configured to send consumption query request information to the recharge server, wherein the consumption query request information comprises the user ID corresponding to the user; and
a historical consumption receiving submodule, configured to receive the historical consumption information that is returned by the recharge server and of the user ID.

41. A recharge terminal, comprising:
a recharge recommendation requesting module, configured to send recharge recommendation request information to a recharge server when it is detected that a user needs to perform recharging, wherein the recharge recommendation request information comprises a user identity ID of the user;
a recommended amount receiving module, configured to receive a recommended recharge amount that is acquired by the recharge server according to the user ID; and
a recommended amount sending module, configured to recommend the received recommended recharge amount to the user, so that the user determines a recharge amount according to the recommended recharge amount.

42. The recharge terminal according to claim 41, wherein the recharge terminal further comprises a historical consumption receiving module, a time period dividing module, a gradual consumption change adjustment factor acquiring module, and a first recommended amount adjusting module, wherein:
the historical consumption receiving module is configured to: after the recommended amount receiving module receives the recommended recharge amount that is acquired by the recharge server according to the user ID, receive historical consumption information that is sent by the recharge server and corresponding to the user ID, wherein the historical consumption information comprises a consumption amount in a historical time range before the user performs recharging;
the time period dividing module is configured to divide the historical time range into multiple time periods;
the gradual consumption change adjustment factor acquiring module is configured to acquire a gradual consumption change adjustment factor according to a total consumption amount in each time period, wherein the gradual consumption change adjustment factor is an amount increase or decrease trend of the total consumption amounts in all the time periods;
the first recommended amount adjusting module is configured to perform an amount increase or decrease adjustment on the acquired recommended recharge amount according to the gradual consumption change adjustment factor to obtain an adjusted recommended recharge amount; and
the recommended amount sending module is specifically configured to recommend the adjusted recommended recharge amount to the user.

43. The recharge terminal according to claim 41, wherein the recharge terminal further comprises a time attribute determining module and a second recommended amount adjusting module, wherein:
the time attribute determining module is configured to: after the recommended amount receiving module receives the recommended recharge amount that is acquired by the recharge server according to the user ID, determine whether a time when the user performs recharging meets a preset time attribute;
the second recommended amount adjusting module is configured to perform an amount increase or decrease adjustment on the acquired recommended recharge amount according to a time attribute adjustment factor corresponding to the time attribute to obtain an adjusted recommended recharge amount when the time when the user performs recharging meets the preset time attribute; and
the recommended amount sending module is specifically configured to recommend the adjusted recommended recharge amount to the user.

44. The recharge terminal according to claim 43, wherein the second recommended amount adjusting module comprises:
a historical time searching submodule, configured to search a historical time range for a historical time that meets the time attribute;
a time attribute adjustment factor acquiring submodule, configured to acquire the time attribute adjustment factor according to a proportional relationship between a consumption amount of the user at the historical time and consumption amounts of the user at times except the historical time in the historical time range; and
a time attribute adjusting submodule, configured to multiply the acquired recommended recharge amount by the acquired time attribute adjustment factor.

45. The recharge terminal according to claim 41, wherein the recharge terminal further comprises a historical consumption receiving module, a consumed product acquiring module, a product update determining module, and a third recommended amount adjusting module, wherein:
the historical consumption receiving module is configured to: after the recommended amount receiving module receives the recommended recharge amount that is acquired by the recharge server according to the user ID, receive historical consumption information that is sent by the recharge server and corresponding to the user ID, wherein the historical consumption information comprises consumption details of the user in a historical time range;
the consumed product acquiring module is configured to acquire, according to the consumption details, all products consumed by the user in the historical time range;
the product update determining module is configured to acquire whether there is a product update on the products consumed by the user;
the third recommended amount adjusting module is configured to perform an amount increase or decrease adjustment on the acquired recommended recharge amount according to an amount corresponding to an updated product to obtain an adjusted recommended recharge amount when there is a product update; and
the recommended amount sending module is specifically configured to recommend the adjusted recommended recharge amount to the user.

46. The recharge terminal according to claim 41, wherein the recharge terminal further comprises a fourth recommended amount adjusting module, wherein:
the fourth recommended amount adjusting module is configured to: after the recommended amount receiving module receives the recommended recharge amount that is acquired by the recharge server according to the user ID, perform an amount increase or decrease adjustment on the acquired recommended recharge amount according to a recharge-free duration factor to obtain an adjusted recommended recharge amount; and
the recommended amount sending module is specifically configured to recommend the adjusted recommended recharge amount to the user.

47. The recharge terminal according to claim 46, wherein the recharge terminal further comprises a recharge-free duration acquiring module and a recharge-free duration factor generating module, wherein:
the recharge-free duration acquiring module is configured to: before the fourth recommended amount adjusting module performs the amount increase or decrease adjustment on the acquired recommended recharge amount according to the recharge-free duration, acquire a recharge-free duration entered by the user; and
the recharge-free duration factor generating module is configured to generate the recharge-free duration factor according to the recharge-free duration.

48. The recharge terminal according to claim 41, wherein the recharge terminal further comprises a preference acquiring module and a fifth recommended amount adjusting module, wherein:
the preference acquiring module is configured to acquire, from the recharge server, preference push information corresponding to the user ID after the recommended amount receiving module receives the recommended recharge amount that is acquired by the recharge server according to the user ID;
the fifth recommended amount adjusting module is configured to perform an amount increase or decrease adjustment on the acquired recommended recharge amount according to the preference push information to obtain an adjusted recommended recharge amount; and
the recommended amount sending module is specifically configured to recommend the adjusted recommended recharge amount to the user.

49. A recharge server, comprising:
a recharge recommendation receiving module, configured to receive recharge recommendation request information sent by a recharge terminal, wherein the recharge recommendation request information comprises a user identity ID corresponding to a user who needs to perform recharging and is detected by the recharge terminal;
a recommended amount acquiring module, configured to acquire, according to historical consumption information of the user ID, a recommended recharge amount to be recommended to the user; and
a recommended amount sending module, configured to send the recommended recharge amount to the recharge terminal.

50. The recharge server according to claim 49, wherein the historical consumption information comprises a consumption amount in a historical time range before the user performs recharging; and
the recommended amount acquiring module comprises a statistical amount acquiring submodule, configured to calculate a statistical consumption amount of the user in the historical time range according to the consumption amount of the user in the historical time range, wherein the statistical consumption amount is the recommended recharge amount to be recommended to the user.

51. The recharge server according to claim 50, wherein the statistical amount acquiring submodule is specifically configured to: divide the historical time range into multiple time periods, separately count a total consumption amount of the user in each time period, and perform averaging calculation on the total consumption amounts in all the time periods to obtain an average consumption amount that is used as the statistical consumption amount; or select a largest total amount from total consumption amounts in time periods to obtain a largest consumption amount that is used as the statistical consumption amount.

52. The recharge server according to claim 51, wherein the recharge server further comprises a gradual consumption change adjustment factor acquiring module and a first recommended amount adjusting module, wherein:
the gradual consumption change adjustment factor acquiring module is configured to acquire a gradual consumption change adjustment factor according to the total consumption amount in each time period after the recommended amount acquiring module acquires, according to the historical consumption information of the user ID, the recommended recharge amount to be recommended to the user, wherein the gradual consumption change adjustment factor is an amount increase or decrease trend of the total consumption amounts in all the time periods;
the first recommended amount adjusting module is configured to perform an amount increase or decrease adjustment on the acquired recommended recharge amount according to the gradual consumption change adjustment factor to obtain an adjusted recommended recharge amount; and
the recommended amount sending module is specifically configured to send the adjusted recommended recharge amount to the recharge terminal.

53. The recharge server according to claim 49, wherein the recharge server further comprises a time attribute determining module and a second recommended amount adjusting module, wherein:
the time attribute determining module is configured to: after the recommended amount acquiring module acquires, according to the historical consumption information of the user ID, the recommended recharge amount to be recommended to the user, determine whether a time when the user performs recharging meets a preset time attribute;
the second recommended amount adjusting module is configured to perform an amount increase or decrease adjustment on the acquired recommended recharge amount according to a time attribute adjustment factor corresponding to the time attribute to obtain an adjusted recommended recharge amount when the time when the user performs recharging meets the preset time attribute; and
the recommended amount sending module is specifically configured to send the adjusted recommended recharge amount to the recharge terminal.

54. The recharge server according to claim 53, wherein the second recommended amount adjusting module comprises:
a historical time searching submodule, configured to search a historical time range for a historical time that meets the time attribute;
a time attribute adjustment factor acquiring submodule, configured to acquire the time attribute adjustment factor according to a proportional relationship between a consumption amount of the user at the historical time and consumption amounts of the user at times except the historical time in the historical time range; and
a time attribute adjusting submodule, configured to multiply the acquired recommended recharge amount by the acquired time attribute adjustment factor.

55. The recharge server according to claim 49, wherein the historical consumption information further comprises consumption details of the user in a historical time range; and
the recharge server further comprises a consumed product acquiring module, a product update determining module, and a third recommended amount adjusting module, wherein:
the consumed product acquiring module is configured to acquire, by the recommended amount acquiring module according to the consumption details, all products consumed by the user in the historical time range;
the product update determining module is configured to acquire whether there is a product update on the products consumed by the user;
the third recommended amount adjusting module is configured to perform an amount increase or decrease adjustment on the acquired recommended recharge amount according to an amount corresponding to an updated product to obtain an adjusted recommended recharge amount when there is a product update; and
the recommended amount sending module is specifically configured to send the adjusted recommended recharge amount to the recharge terminal.

56. The recharge server according to claim 49, wherein the recharge server further comprises a fourth recommended amount adjusting module, wherein:
the fourth recommended amount adjusting module is configured to: after the recommended amount acquiring module acquires, according to the historical consumption information of the user ID, the recommended recharge amount to be recommended to the user, perform an amount increase or decrease adjustment on the acquired recommended recharge amount according to a recharge-free duration factor to obtain an adjusted recommended recharge amount; and
the recommended amount sending module is specifically configured to send the adjusted recommended recharge amount to the recharge terminal.

57. The recharge server according to claim 56, wherein the recharge server further comprises a recharge-free duration acquiring module and a recharge-free duration factor generating module, wherein:
the recharge-free duration acquiring module is configured to: before the amount increase or decrease adjustment is performed on the acquired recommended recharge amount according to the recharge-free duration, receive a recharge-free duration that is entered by the user and acquired by the recharge terminal; and
the recharge-free duration factor generating module is configured to generate the recharge-free duration factor according to the recharge-free duration.

58. The recharge server according to claim 49, wherein the recharge server further comprises a preference acquiring module and a fifth recommended amount adjusting module, wherein:
the preference acquiring module is configured to acquire, by the recommended amount acquiring module, preference push information corresponding to the user ID;
the fifth recommended amount adjusting module is configured to perform an amount increase or decrease adjustment on the acquired recommended recharge amount according to the preference push information to obtain an adjusted recommended recharge amount; and
the recommended amount sending module is specifically configured to send the adjusted recommended recharge amount to the recharge terminal.
